(19) **Europäisches Patentamt / European Patent Office / Office européen des brevets**

(11) **EP 4 546 636 A1**

(12) **EUROPEAN PATENT APPLICATION**
published in accordance with Art. 153(4) EPC

(43) Date of publication:
30.04.2025 Bulletin 2025/18

(21) Application number: 23830894.4

(22) Date of filing: 23.05.2023

(51) International Patent Classification (IPC):
H02P 5/46 (2006.01)    H02P 29/028 (2016.01)
B64C 29/00 (2006.01)

(52) Cooperative Patent Classification (CPC):
B64C 29/00; B64C 27/08; B64U 50/19; H02P 5/46;
H02P 5/51; H02P 5/74; H02P 29/028

(86) International application number:
PCT/JP2023/019113

(87) International publication number:
WO 2024/004442 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.06.2022 JP 2022102987
17.05.2023 JP 2023081860

(71) Applicant: DENSO CORPORATION
Kariya-city, Aichi 448-8661 (JP)

(72) Inventors:
• KAWAZU, Shinsuke
Kariya-city, Aichi 448-8661 (JP)
• HASHIMOTO, Mariko
Kariya-city, Aichi 448-8661 (JP)
• SUZUKI, Hideaki
Kariya-city, Aichi 448-8661 (JP)
• TAKEMURA, Yuichi
Kariya-city, Aichi 448-8661 (JP)

(74) Representative: TBK
Bavariaring 4-6
80336 München (DE)

(54) **DRIVE DEVICE AND DRIVE CONTROL DEVICE**

(57) An EPU (50) includes a first DS (100) and a second DS (110). The first DS (100) includes a first motor (61) and a first inverter control unit (81). The second DS (110) includes a second motor (71) and a second inverter control unit (91). The first motor (61) and the second motor (71) are connected to a propeller (20) via an EPU shaft (51). The EPU shaft (51) drives and rotates a propeller (20) according to outputs of the motor (61, 71). The first inverter control unit (81) controls the first motor (61) so that the output of the first motor (61) and the output of the second motor (71) become a same. The second inverter control unit (91) controls the second motor (71) so that the output of the first motor (61) and the output of the second motor (71) become same as each other.

FIG. 4

EP 4 546 636 A1

# EP 4 546 636 A1

**Description**

CROSS REFERENCE TO RELATED APPLICATION

The present application is based on Japanese Patent Applications No. 2022-102987 filed in Japan on June 27, 2022 and No. 2023-81860 filed in Japan on May 17, 2023. The entire disclosures of all of the above applications are incorporated herein by reference.

TECHNICAL FIELD

The present disclosure relates to a drive device and a drive control device.

BACKGROUND ART

Patent Literature 1 describes an electric flight vehicle that flies by rotating propellers. In such electric flight vehicle, multiple motors are provided for one propeller. The multiple motors are connected to one propeller via a power shaft. The propeller rotates according to a drive by the multiple motors.

PRIOR ART LITERATURE

PATENT LITERATURE

PATENT LITERATURE 1: JP-6233671B

SUMMARY OF INVENTION

However, in a configuration in which multiple motors drive and rotate a rotor such as a propeller or the like, there is a concern that a load on the motors will increase if the motor outputs vary among the multiple motors. For example, a motor having a greater output among the two motors is likely to experience an increased electrical load. Further, among the two motors, a motor with a smaller output is likely to experience an increased thermal load.
It is an object of the present disclosure to provide a drive device and a drive control device that can reduce a load on each of multiple motors.
Disclosed aspects in the present specification adopt different technical solutions from each other in order to achieve their respective objects. Reference numerals in parentheses in claims and in this section are an example indicating a correspondence relationship with specific means described in an embodiment to be described later as one aspect, and do not limit the technical scope.
In order to achieve the above object, a disclosed aspect is a drive device to be provided to a moving body that is configured to move with rotation of a rotor. The drive device is configured to be driven to rotate the rotor. The drive device comprises: a first motor and a second motor configured to be driven by energization; an output shaft portion connecting the rotor to the first motor and the second motor, and configured to rotate the rotor according to an output of the first motor and an output of the second motor; and a motor controller configured to control each of the first motor and the second motor, such that the output of the first motor and the output of the second motor become same as each other.
According to the above-described drive device, the first motor and the second motor are controlled so that the output of the first motor and the output of the second motor are the same. In such a configuration, a difference between the output of the first motor and the output of the second motor is unlikely to occur. Therefore, it is unlikely that the outputs of the first motor and the second motor are exchanged via the output shaft portion. Therefore, it is possible to suppress (a) an increase in an electrical load on the one having the greater output of the first motor and the second motor, and (b) an increase in a thermal load on the one having a smaller output of the first motor and the second motor. In such manner, a load on each of the first motor and the second motor is reducible.
A disclosed aspect is a drive control device configured to control a drive device. The drive device is to be provided to a moving body that is configured to move with rotation of a rotor. The drive device is configured to be driven to rotate the rotor. The drive device includes a first motor and a second motor, which are configured to be driven by energization, and an output shaft portion that connects the rotor to the first motor and the second motor and is configured to rotate the rotor according to an output of the first motor and an output of the second motor. The drive control device comprises: a first controller configured to control the first motor, such that the output of the first motor and the output of the second motor become same as each other; and a second controller configured to control the second motor, such that the output of the second motor and the output of the first motor become same as each other.
According to the above-described drive control device, just like the above-described drive device, the load on each of the first motor and the second motor is reducible.

BRIEF DESCRIPTION OF THE DRAWINGS

FIG. 1 is a diagram of a configuration of an eVTOL according to a first embodiment.
FIG. 2 is a diagram of a configuration of power paths of a flight system.
FIG. 3 is a schematic perspective view of an EPU.
FIG. 4 is a block diagram of an electrical configuration of an eVTOL.
FIG. 5 is a block diagram of an electrical configuration of a first DS and a second DS.
FIG. 6 is a block diagram of an electrical configuration of a first inverter control unit and a second inverter control unit.
FIG. 7 is a flowchart of steps of flight control processing.
FIG. 8 is a schematic perspective view of an EPU according to a second embodiment.
FIG. 9 is a block diagram of an electrical configuration of an eVTOL.
FIG. 10 is a block diagram of an electrical configuration of a first DS and a second DS according to a third embodiment.
FIG. 11 is a block diagram of an electrical configuration of a first DS and a second DS according to a fourth embodiment.
FIG. 12 is a block diagram of an electrical configuration of a first DS and a second DS according to a fifth embodiment.
FIG. 13 is a block diagram of an electrical configuration of a first DS and a second DS according to a sixth embodiment.
FIG. 14 is a block diagram of an electrical configuration of a first DS and a second DS according to a seventh embodiment.
FIG. 15 is a block diagram of an electrical configuration of a first inverter control unit and a second inverter control unit in an eighth embodiment.
FIG. 16 is a block diagram of an electrical configuration of a first inverter control unit and a second inverter control unit in a ninth embodiment.
FIG. 17 is a block diagram of an electrical configuration of a first inverter control unit and a second inverter control unit in a tenth embodiment.
FIG. 18 is a flowchart of steps of flight control processing in an eleventh embodiment.
FIG. 19 is a diagram of an electrical configuration of a common DS in a twelfth embodiment.
FIG. 20 is a block diagram of an electrical configuration of a current sum control unit.
FIG. 21 is a block diagram of an electrical configuration of a current sum control unit and a current difference control unit.
FIG. 22 is a flowchart of steps of flight control processing in a thirteenth embodiment.
FIG. 23 is a flowchart of steps of flight control processing in a fourteenth embodiment.

DESCRIPTION OF EMBODIMENTS

The following describes embodiments for carrying out the present disclosure with reference to the drawings. In each of embodiments, parts / configurations corresponding to the elements described in the preceding embodiments are denoted by the same reference numerals, and redundant explanation may be omitted. When only a part of a configuration is described in an embodiment, other preceding embodiments may be applied to the other parts of such configuration. It may be possible not only to combine parts, the combination of which is explicitly described as possible in an embodiment, but also to combine parts of respective embodiments, the combination of which is not explicitly described as possible, if any obstacle does not especially occur in combining the parts of the respective embodiments.

<First Embodiment>

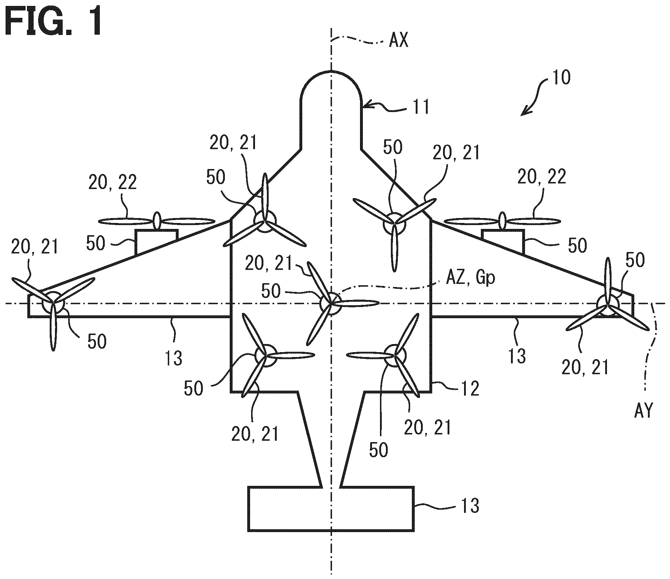

A flight system 30 illustrated in FIG. 1 is mounted on an eVTOL 10. The eVTOL 10 is an electric vertical take-off and landing flight vehicle. The electric vertical take-off and landing flight vehicle is an electric-powered vertical take-off and landing flight vehicle, and can take off and land vertically. The eVTOL is an abbreviation for electric vertical take-off and landing flight vehicle. The eVTOL 10 is an electric-powered flight vehicle flying in the atmosphere. The eVTOL 10 is also an electric-powered flight vehicle and may also be referred to as an electric flight vehicle. The eVTOL 10 is a manned flight vehicle carrying an occupant. Occupants of the eVTOL 10 include pilot as an operator and pilot in instruction. The flight system 30 is a system driven to fly the eVTOL 10. The flight system 30 may also be referred to as a propulsion system.
The eVTOL 10 has an airframe 11 and a propeller 20. The airframe 11 has an airframe body 12 and wings 13. The airframe body 12 is a body of the airframe 11 and has, for example, a shape extending in a front-rear direction. The airframe body 12 has an occupant compartment for carrying an occupant. The wings 13 extend from the airframe body 12 and are provided in plurality on the airframe body 12. The wings 13 are fixed wings. The multiple wings 13 include main wings, tail wings, and the like.

In the eVTOL 10, the airframe body 12 extends along a roll axis AX. In the eVTOL 10, the roll axis AX extends in the front-and-rear direction of the airframe 11, a pitch axis AY extends in a width direction of the airframe 11, and a yaw axis AZ extends in an up-and-down direction of the airframe 11. The roll axis AX, the pitch axis AY, and the yaw axis AZ are orthogonal to each other, and all axes pass through a center of gravity Gp of the airframe. The center of gravity Gp of the airframe is the center of gravity of the eVTOL 10, and is, for example, the center of gravity of the eVTOL 10 at empty weight.

Multiple propellers 20 are provided on the airframe 11. The eVTOL 10 is a multicopter having at least three propeller 20. For example, at least four propeller 20 are provided on the airframe 11. The propeller 20 are provided on both the airframe body 12 and the wings 13. The propeller 20 rotates about a propeller axis. The propeller axis is, for example, the center line of the propeller 20. The propeller 20 is capable of generating thrust and lift for the eVTOL 10. Note that a force generated when the eVTOL 10 ascends may also be referred to as thrust. Further, the propeller 20 may also be referred to as a rotor and a rotating blade.

The propeller 20 includes, for example, a blade, a boss, and a propeller shaft. A plurality of blades are arranged in a circumferential direction of the propeller axis. The boss connects multiple blades. The propeller shaft is a rotation shaft of the propeller 20, and extends from the boss along the propeller axis. The propeller shaft may also be referred to a shaft of the propeller.

Flight modes of the eVTOL 10 include vertical take-off, vertical landing, cruise, hovering, and the like. The eVTOL 10 is capable of taking off from a take-off point by ascending vertically without taxiing and running, for example, as a vertical take-off. The eVTOL 10 is capable of making a vertical landing, for example by descending vertically and touching down at a landing point without running and taxiing. The eVTOL 10 is capable of flying as a cruise, i.e., moving horizontally, for example. The eVTOL 10 is capable of flying as if it were hovering, e.g., stopped in place in the air.

The multiple propellers 20 include a lift propeller 21 and a cruise propeller 22. The lift propeller 21 is provided with the propeller axis extending in the vertical direction. The lift propeller 21 is capable of generating lift for eVTOL 10. The eVTOL 10 is capable of ascending, descending, hovering, and the like by the driving rotation of the lift propeller 21. The cruise propeller 22 is disposed such that the propeller axis extends in the front-and-rear direction. The cruise propeller 22 may provide thrust for the eVTOL 10. The eVTOL 10 is capable of cruising and the like by the driving rotation of the cruise propeller 22.

In addition, the eVTOL 10 may be a tilt rotor flight vehicle. In a tilt rotor flight vehicle, the tilt angle of the propeller 20 is adjustable. In a tilt rotor flight vehicle, it is possible for a single propeller 20 to function as both a lift propeller and a cruise propeller.

The eVTOL 10 has an EPU 50. The EPU 50 is a device that drives the propeller 20 to rotate, and corresponds to a drive device. The EPU is an abbreviation for electric propulsion unit. The EPU 50 may also be referred to as an electric drive unit and an electric drive system. The EPU 50 is provided independently for each of the multiple propellers 20. The EPU 50 is aligned with the propeller 20 along the propeller axis. Each of the multiple EPUs 50 is fixed to the airframe 11. The EPU 50 supports the propeller 20 so that it can rotate. The EPU 50 is connected to the propeller 20. The propeller 20 is fixed to the airframe 11 via the EPU 50.

The propeller 20 rotates according to a drive of the EPU 50. The propeller 20 corresponds to a rotor. The eVTOL 10 flies by rotating the propeller 20. That is, the eVTOL 10 moves with rotation of the propeller 20. The eVTOL 10 corresponds to a moving body.

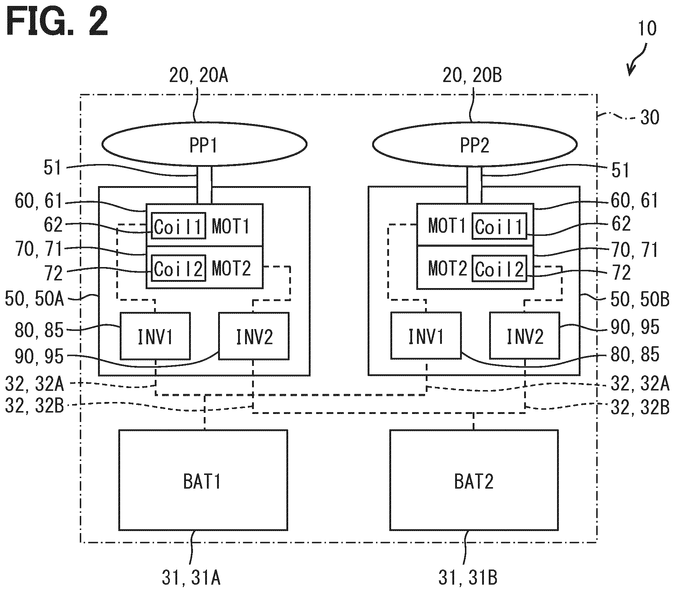

As shown in FIG. 2, the EPU 50 includes a plurality of motor devices and a plurality of inverter devices. The EPU 50 has a first motor device 60 and a second motor device 70. The first motor device 60 has a first motor 61, and the second motor device 70 has a second motor 71. In the motor devices 60 and 70, the motor 61 and the motor 71 are housed in a motor housing.

The motors 61 and 71 are multi-phase AC motors, for example, three-phase AC rotating electric machines. The motors 61, 71 are flight drive sources for the eVTOL 10 and function as electric motors. The motors 61 and 71 can drive and rotate the propeller 20 to fly the eVTOL 10. The motors 61 and 71 are flight motors for flying the eVTOL 10. The EPU 50 drives the motors 61 and 71 to rotate the propeller 20. The motors 61 and 71 are, for example, brushless motors.

The motors 61 and 71 each have a motor stator and motor rotors 63 and 73. The motors 61 and 71 have motor coils 62 and 72. The motor coils 62 and 72 are included in the motor stators of the motors 61 and 71. The motor coils 62, 72 are multi-phase coils. The motor coils 62, 72 are mounted on a stator core of the motor stator, and each of the motor coils 62, 72 is a single system winding. In the present embodiment, the motors 61 and 71 are three-phase motors, and the motor coils 62 and 72 are three-phase coils.

The motor rotors 63, 73 rotate relative to the motor stator and the motor coils 62, 72. The first motor 61 has a first motor coil 62 and a first motor rotor 63. The first motor rotor 63 rotates relative to the first motor coil 62. The first motor rotor 63 rotates when electric current is supplied to the first motor coil 62. The second motor 71 has a second motor coil 72 and a second motor rotor 73. The second motor rotor 73 rotates relative to the second motor coil 72. The second motor rotor 73 rotates when electric current is supplied to the second motor coil 72.

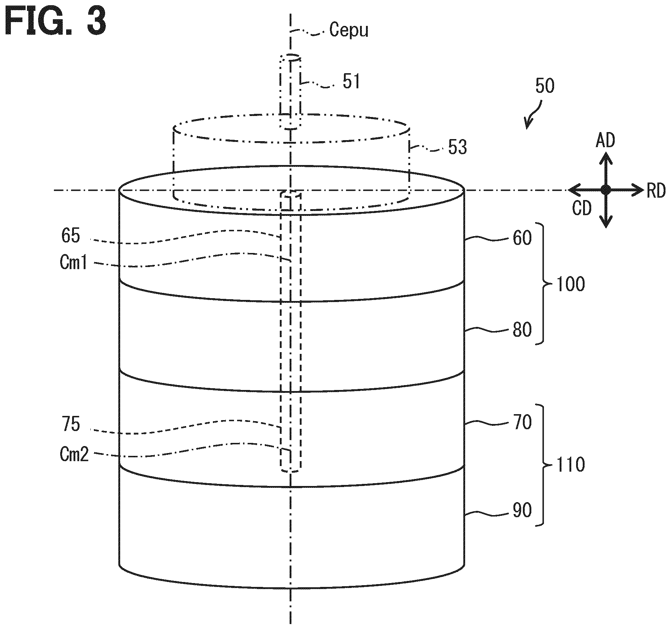

As shown in FIG. 3, the motors 61 and 71 have motor shafts 65 and 75. The first motor 61 has a first motor shaft 65, and the second motor 71 has a second motor shaft 75. The first motor shaft 65 is connected to the first motor rotor 63 and rotates together with the first motor rotor 63. The second motor shaft 75 is connected to the second motor rotor 73 and rotates together with the second motor rotor 73. The motor devices 60 and 70 are capable of driving and rotating the propeller 20 in conjunction with the drive of the motors 61 and 71.

In the first motor device 60, the first motor shaft 65 rotates about a first motor axis $Cm1$. The first motor shaft 65 rotates in accordance with the output of the first motor 61. In the second motor device 70, the second motor shaft 75 rotates about a second motor axis $Cm2$. The second motor shaft 75 rotates according to the output of the second motor 71. The output of the motors 61 and 71 may also be referred to as the motor output. The motor axes $Cm1$ and $Cm2$ are center lines of the motors 61 and 71. The motor axes $Cm1$ and $Cm2$ are, for example, center lines of the motor shafts 65 and 75. The motor axes $Cm1$, $Cm2$ extend in an axial direction AD. With respect to the motor axes $Cm1$, $Cm2$, the axial direction AD, a radial direction RD, and a circumferential direction CD are orthogonal to each other. The motor shafts 65, 75 rotate in the circumferential direction CD.

The EPU 50 has a first inverter device 80 and a second inverter device 90. The first inverter device 80 has a first inverter circuit 85, and the second inverter device 90 has a second inverter circuit 95. In the inverter devices 80, 90, the inverter circuits 85, 95 are housed in an inverter housing. The inverter circuits 85 and 95 may sometimes be referred to as power circuits.

The inverter circuits 85 and 95 drive the motors 61 and 71. The first inverter circuit 85 drives the first motor 61, and the second inverter circuit 95 drives the second motor 71. The inverter circuits 85 and 95 convert the electric power supplied to the motors 61 and 71 in order to drive the motors 61 and 71. The inverter circuits 85, 95 convert the electric power supplied to the motors 61, 71 from DC to AC. The inverter circuits 85 and 95 are power conversion units that convert electric power. The inverter circuits 85 and 95 are multi-phase power conversion units, and perform power conversion for each of the multiple phases. The inverter circuits 85 and 95 may sometimes be referred to as inverters. In the present embodiment, a three-phase inverter is used as the inverter circuits 85 and 95. The motors 61 and 71 are driven in response to the voltage and electric current supplied from the inverter circuits 85 and 95.

In FIG. 2, a first propeller 20A is illustrated as PP1, a second propeller 20B is illustrated as PP2, a first battery 31A is illustrated as BAT1, and a second battery 31B is illustrated as BAT2. The first motor 61 is illustrated as MOT1, the first motor coil 62 is illustrated as Coil1, and the first inverter circuit 85 is illustrated as INV1. The second motor 71 is illustrated as MOT2, the second motor coil 72 is illustrated as Coil2, and the second inverter circuit 95 is illustrated as INV2.

As shown in FIG. 3, the EPU 50 has a first DS 100 and a second DS 110. The first DS 100 includes the first motor device 60 and the first inverter device 80. In the first DS 100, the first motor device 60 and the first inverter device 80 are arranged in the axial direction AD along the first motor axis $Cm1$. The first motor device 60 and the first inverter device 80 are formed in a column shape, and extend in the axial direction AD. In the first DS 100, the first motor device 60 and the first inverter device 80 are fixed to each other. The first DS 100 may also be referred to as a first motor unit.

The second DS 110 includes the second motor device 70 and the second inverter device 90. In the second DS 110, the second motor device 70 and the second inverter device 90 are arranged in the axial direction AD along the second motor axis $Cm2$. The second motor device 70 and the second inverter device 90 are formed in a column shape, and extend in the axial direction AD. In the second DS 110, the second motor device 70 and the second inverter device 90 are fixed to each other. The second DS 110 may also be referred to as a second motor unit.

The EPU 50 includes an EPU shaft 51 and a gear 53. The EPU shaft 51 connects the motor shafts 65, 75 and the propeller 20 via the gear 53. The EPU shaft 51 rotates about an EPU axis Cepu. The EPU axis Cepu is a center line of the EPU shaft 51. The EPU axis Cepu extends in the axial direction AD. The EPU shaft 51 rotates in conjunction with the rotation of the motor shafts 65, 75. The EPU shaft 51 rotates in response to the output of the motors 61 and 71. The EPU shaft 51 is connected to the propeller 20. The EPU shaft 51 rotates the propeller 20 in accordance with the output of the motors 61 and 71. The EPU shaft 51 corresponds to an output shaft portion. The EPU shaft 51 may also be referred to as a gear output shaft.

The gear 53 mechanically connects the motor shafts 65, 75 and the EPU shaft 51. The gear 53 transmits the rotation of the motor shafts 65, 75 to the EPU shaft 51. The gear 53 includes a reducer. The gear 53 can set a reduction ratio so that the propeller rotation is lower than the motor rotation. The propeller rotation is the rotation speed of the propeller 20, and the motor rotation is the rotation speed of the motors 61, 71. For example, the gear 53 is set to a reduction ratio such that the EPU shaft 51 is decelerated relative to the motor shafts 65 and 75. The gear 53 is capable of changing the reduction ratio in at least two stages. The gear 53 may also be referred to as a transmission gear and a gear box. The gear 53 may be capable of changing the reduction ratio by continuously variable transmission.

The first DS 100 and the second DS 110 are arranged in the axial direction AD along the EPU axis Cepu. The first motor axis $Cm1$, the second motor axis $Cm2$, and the EPU axis Cepu are aligned in the axial direction AD and coincide with each other. The first motor shaft 65 and the second motor shaft 75 are aligned in the axial direction AD and connected to each other. The first DS 100 and the second DS 110 are fixed to each other. The gear 53 is arranged with respect to the DSs 100 and 110 in the axial direction AD along the EPU axis Cepu. The gear 53 is fixed to one of the first DS 100 and the second DS 110. The gear 53 connects one of the first motor shaft 65 and the second motor shaft 75 to the EPU shaft 51.

As shown in FIG. 2, the eVTOL 10 includes a battery 31 and a power path 32. The battery 31 is electrically connected to the EPU 50 via the power path 32. The battery 31 supplies electric power to the EPU 50. The battery 31 may also be referred to as a power supply and a power source. The battery 31 supplies electric power to the motors 61 and 71 via the inverter circuits 85 and 95. The battery 31 is a DC voltage source that applies a DC voltage to the inverter circuits 85 and 95. The battery 31 includes a rechargeable secondary battery. Examples of the secondary battery include a lithium-ion battery, a nickel-hydrogen battery and the like. In addition to or instead of the battery 31, a fuel cell, a generator, or the like may be used as the power source. The battery 31 is an electricity storage device capable of storing electric power.

The power path 32 is a path that supplies electric power from the battery 31 to the EPU 50. The power path 32 is formed by a power cable or the like. The power path 32 electrically connects the battery 31 and the motors 61 and 71 via the inverter circuits 85 and 95.

The eVTOL 10 is provided with a plurality of batteries 31 and a plurality of power paths 32. The plurality of batteries 31 include the first battery 31A and the second battery 31B. The multiple power paths 32 include a first power path 32A and a second power path 32B. The first battery 31A is electrically connected to the first inverter circuit 85 and the first motor 61 via the first power path 32A. The second battery 31B is electrically connected to the second inverter circuit 95 and the second motor 71 via the second power path 32B.

The multiple EPUs 50 include a first EPU 50A and a second EPU 50B. The first EPU 50A drives and rotates the first propeller 20A. The second EPU 50B drives and rotates the second propeller 20B. The first propeller 20A and the second propeller 20B are included in the multiple propellers 20.

The first battery 31A supplies electric power to the first inverter circuit 85 and the first motor 61 in each of the first EPU 50A and the second EPU 50B. In the first EPU 50A and the second EPU 50B, the first inverter circuit 85 and the first motor 61 are electrically connected to the first battery 31A via the first power path 32A. The second battery 31B supplies electric power to the second inverter circuit 95 and the second motor 71 in each of the first EPU 50A and the second EPU 50B. In the first EPU 50A and the second EPU 50B, the second inverter circuit 95 and the second motor 71 are electrically connected to the second battery 31B via the second power path 32B.

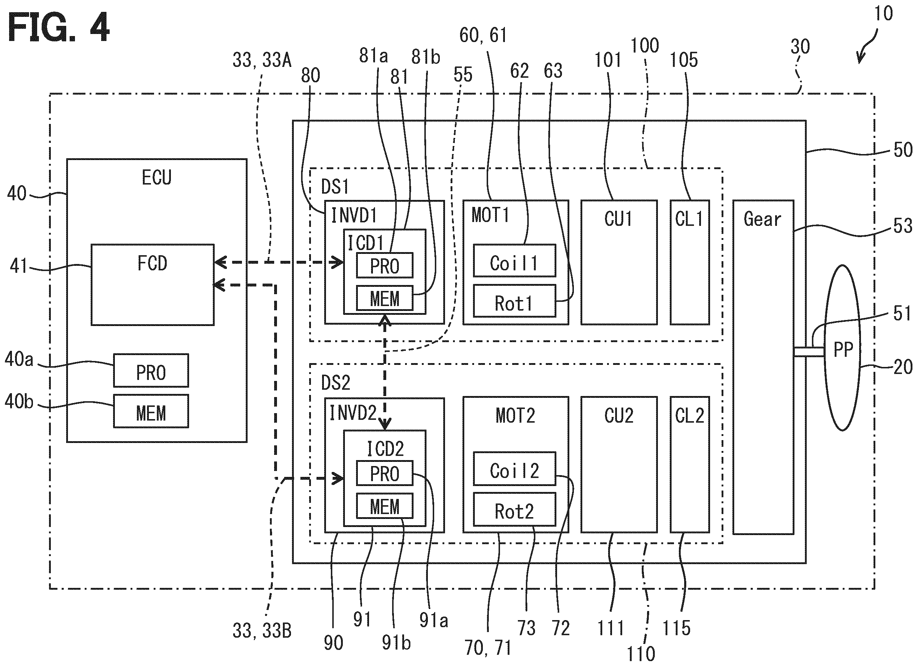

As shown in FIG. 4, the EPU 50 has a first clutch 105 and a second clutch 115. The clutches 105 and 115 are capable of interrupting the transmission of rotation of the motors 61 and 71 to the propeller 20. The clutches 105, 115 are provided on the motor shafts 65, 75, for example. The clutches 105 and 115 are capable of interrupting the transmission of rotation of the motor rotors 63 and 73 to the motor shafts 65 and 75.

The clutches 105, 115 are capable of switching between a transmission state and an interrupted state. When the clutches 105, 115 are in a transmission state, the driving forces of the motors 61, 71 are transmitted to the EPU shaft 51. In such case, the driving forces of the motors 61 and 71 drive the EPU shaft 51 and the propeller 20 to rotate. The driving force is determined according to the output of the motors 61 and 71. When the clutches 105, 115 are in the interrupted state, the driving force of the motors 61, 71 is not transmitted to the EPU shaft 51. In such case, due to clutch slippage, the driving force of the motors 61, 71 does not rotate the EPU shaft 51 and the propeller 20. Clutch slippage refers to slippage of the clutches 105 and 115. When clutch slippage occurs, the motors 61, 71 are in an idling state relative to the EPU shaft 51. The clutches 105 and 115 include, for example, one-way clutches. Note that the clutches 105 and 115 may include an electromagnetic clutch or the like.

The first clutch 105 is included in the first DS 100, and the second clutch 115 is included in the second DS 110. If an output difference between the first motor 61 and the second motor 71 is greater than an allowable range, the driving force of the motor with a greater output among the first motor 61 and the second motor 71 is transmitted to the EPU shaft 51, and the driving force of the motor with a smaller output thereamong is not transmitted to the EPU shaft 51. For example, when the output of the first motor 61 is greater than the output of the second motor 71, and the output difference exceeds an allowable range, the first clutch 105 is in the transmission state and the second clutch 115 is in the interrupted state.

When the output difference among the first motor 61 and the second motor 71 is within the allowable range, the EPU shaft 51 is driven to rotate in accordance with the respective outputs of the first motor 61 and the second motor 71. The outputs of the motors 61 and 71 include, for example, a torque, an amount of work, and a rotation speed of each of the motors 61 and 71. The outputs of the motors 61 and 71 are calculated using at least one of the motor rotation speed, the motor current, the motor voltage, and the motor temperature. The motor rotation speed, the motor current, the motor voltage, and the motor temperature are the rotation speed, the current, the voltage, and the temperature of each of the motors 61 and 71. In the EPU 50, for example, the torque is used as the output of each of the motors 61 and 71.

An example of a case in which the output difference among the first motor 61 and the second motor 71 is larger than the allowable range is, for example, a situation of when the speed difference between the first motor 61 and the second motor 71 is greater than the allowable range. The speed difference is a difference between the rotation speed of the first motor 61 and the rotation speed of the second motor 71. When the speed difference is greater than the allowable range, the motor having the lower speed among the first motor 61 and the second motor 71 will rotate idly due to clutch slippage.

The EPU 50 has a first cooler 101 and a second cooler 111. The coolers 101 and 111 are capable of cooling the EPU 50. The first cooler 101 is included in the first DS 100, and the second cooler 111 is included in the second DS 110. The coolers 101 and 111 include cooling fins, a cooling device, and the like. The cooling fins are heat dissipation fins that dissipate heat from the EPU 50 to the outside air. The cooling fins protrude, for example, in a fin-like shape from an outer surface of the EPU 50. The cooling fins are a cooling mechanism that realizes the coolers 101 and 111 of an air-cooling type. The cooling device is a device that dissipates heat from the EPU 50 to the outside using a refrigerant such as cooling water or the like. The cooling device is a cooling mechanism that realizes the coolers 101 and 111 of a liquid cooling type.

The eVTOL 10 has an integration ECU 40. The integration ECU 40 performs flight control to fly the eVTOL 10. The integration ECU 40 integrally controls various devices mounted on the eVTOL 10, such as the EPU 50 and the like. The flight control includes EPU control for driving the EPU 50. The EPU control may also be referred to as drive control. The EPU control includes motor control for driving the motors 61 and 71. The ECU is an abbreviation for Electronic Control Unit. The integration ECU 40 may also be referred to as a flight control device.

The integration ECU 40 is constituted by a computer as a main component. The computer includes a processor 40a, a memory 40b, an input/output interface, and a bus connecting the above. The integration ECU 40 executes various processes such as flight control processing for performing flight control and the like, by executing a control program stored in the memory 40b using the processor 40a.

The processor 40a is hardware for arithmetic processing coupled to the memory 40b. The processor 40a executes various processes such as flight control processing and the like by accessing the memory 40b. The memory 40b is a storage medium that stores the control program and the like. For example, the memory 40b is a non-transitory, tangible storage medium that non-transitorily stores computer-readable programs and data. The non-transitory, tangible storage medium is realized by a semiconductor memory, a magnetic disk, or the like. The memory 40b stores a control program for performing flight control and the like. The control program by which the processor 40a controls the EPU 50 corresponds to a drive control program.

The integration ECU 40 includes an integration controller 41. The integration controller 41 controls the EPU 50. The integration controller 41 centrally controls the operation of the multiple EPUs 50. The integration controller 41 integrates the motor control performed by each of the multiple EPUs 50. The integration controller 41 may also be referred to as an integrated control unit. The integration controller 41 is a functional block that performs EPU control and motor control in the integration ECU 40.

The EPU 50 has a first inverter control unit 81 and a second inverter control unit 91. The inverter control units 81 and 91 control the motors 61 and 71 via the inverter circuits 85 and 95. The inverter control units 81 and 91 perform inverter control, thereby performing motor control. The inverter control is a control for driving the inverter circuits 85 and 95. The inverter control units 81 and 91 use detection results of various sensors for motor control. The first inverter control unit 81 is included in the first DS 100, and the second inverter control unit 91 is included in the second DS 110. For example, the first inverter control unit 81 is included in the first inverter device 80, and the second inverter control unit 91 is included in the second inverter device 90. The first inverter control unit 81 corresponds to a motor controller and a first controller. The second inverter control unit 91 corresponds to a motor controller and a second controller.

The inverter control units 81 and 91 are, for example, ECUs. The inverter control units 81 and 91 are constituted by a computer as a main component. The computer has processors 81a and 91a, memories 81b and 91b, an input/output interface, and a bus connecting these. The inverter control units 81, 91 execute various processes for performing motor control, EPU control, and the like by executing control programs stored in the memories 81b, 91b using the processors 81a, 91a.

The processors 81a and 91a are hardware for arithmetic processing coupled to the memories 81b and 91b. The processors 81a and 91a access the memories 81b and 91b to perform various processes such as flight control processing and the like. The memories 81b and 91b are storage media that store control programs and the like. For example, the memories 81b and 91b are non-transitory, tangible storage media that non-transitorily store computer-readable programs and data. The memories 81b and 91b store control programs for flight control and the like. The control program by which the processors 81a and 91a control the EPU 50 corresponds to a drive control program.

The eVTOL 10 has an integration path 33. The integration path 33 is a communication path and may be called as a communication bus. The integration path 33 connects the integration ECU 40 and the EPU 50 so that they can communicate with each other. The integration ECU 40 and the EPU 50 transmit and receive various signals and various information via the integration path 33. The integration path 33 is formed by a communication cable or the like. The integration ECU 40 and the EPU 50 are connected to each other via multiple integration paths 33. The multiple integration paths 33 include a first integration path 33A and a second integration path 33B. The first integration path 33A connects the integration controller 41 and the first inverter control unit 81 so that they can communicate with each other. The second integration path 33B connects the integration controller 41 and the second inverter control unit 91 so that they can communicate with each other. The first integration path 33A corresponds to a first path, and the second integration path 33B corresponds to a second path.

The EPU 50 has an EPU path 55. The EPU path 55 is a communication path, and may also be referred to as a communication bus. The EPU path 55 connects the first DS 100 and the second DS 110 so that they can communicate with each other. The EPU path 55 connects, for example, the first inverter control unit 81 and the second inverter control unit 91 so that they can communicate with each other. The first inverter control unit 81 and the second inverter control unit 91 transmit and receive various signals and various information via the EPU path 55. The EPU path 55 is formed by a communication cable or the like. The EPU path 55 is provided inside the EPU 50. The EPU path 55 extends across the first DS 100 and the second DS 110 in the axial direction AD. For example, the EPU path 55 bypasses one of the first motor device 60 and the second motor device 70, for connection to the first inverter device 80 and the second inverter device 90.

The EPU path 55 directly connects the first inverter control unit 81 and the second inverter control unit 91 without passing through the integration ECU 40. The EPU path 55 corresponds to a direct path. For example, a length of the EPU path 55 is shorter than in a configuration in which the EPU path 55 connects the first inverter control unit 81 and the second inverter control unit 91 via the integration ECU 40. Therefore, time required for communication between the first inverter control unit 81 and the second inverter control unit 91 is easily reducible.

The DSs 100 and 110 have a direct interface. The direct interface is an interface for directly exchanging state-related data between the first inverter control unit 81 and the second inverter control unit 91. The direct interface of the first DS 100 and the direct interface of the second DS 110 are communicably connected by the EPU path 55. The state-related data is data related to a state of the DSs 100 and 110. The state-related data includes motor information, output instructions and the like, which will be described later.

In the eVTOL 10, the integration ECU 40 and the inverter control units 81, 91 perform flight control, EPU control, motor control, and the like. The integration ECU 40 outputs instruction signals to the inverter control units 81 and 91. The inverter control units 81 and 91 control the motors 61 and 71 in response to instruction signals from the integration ECU 40. The instruction signal includes instruction values, target values and the like regarding the outputs of the motors 61 and 71. The instruction signal is calculated according to a manner with which the pilot operates a controller or the like. The controller is an object to be operated, such as an operation lever, and the like, which is operated by the pilot. The integration ECU 40 and the inverter control units 81 and 91 correspond to a drive control device.

In FIG. 4, the integration ECU 40 is illustrated as ECU, the integration controller 41 is illustrated as FCD, the processor 40a is illustrated as PRO, and the memory 40b is illustrated as MEM. In addition, the first DS 100 is illustrated as DS1, the second DS 110 is illustrated as DS2, the gear 53 is illustrated as Gear, and the propeller 20 is illustrated as PP. In the first DS 100, the first inverter device 80 is illustrated as INVD1, the first inverter control unit 81 is illustrated as ICD1, the processor 81a is illustrated as PRO, and the memory 81b is illustrated as MEM. In the drawings, the first motor device 60 is illustrated as MOT1, the first motor coil 62 is illustrated as Coil1, the first cooler 101 is illustrated as CU1, and the first clutch 105 is illustrated as CL1. In the second DS 110, the second inverter device 90 is illustrated as INVD2, the second inverter control unit 91 is illustrated as ICD2, the processor 91a is illustrated as PRO, and the memory 91b is illustrated as MEM. In the drawings, the second motor device 70 is illustrated as MOT2, the second motor coil 72 is illustrated as Coil2, the second cooler 111 is illustrated as CU2, and the second clutch 115 is illustrated as CL2.

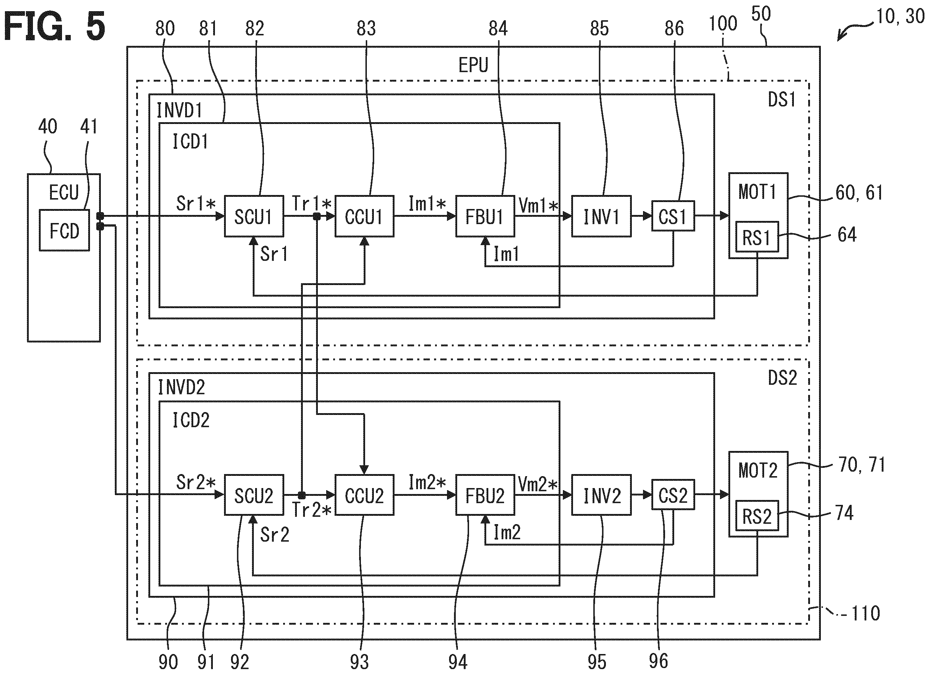

As shown in FIG. 5, the eVTOL 10 has a first rotation sensor 64, a second rotation sensor 74, a first current sensor 86, and a second current sensor 96 as various sensors. The rotation sensors 64, 74 detect the rotation speed of the motors 61, 71 as the motor rotation speed. The rotation sensors 64 and 74 each include, for example, an encoder or a resolver. The first rotation sensor 64 is included in the first DS 100, and detects the motor rotation speed of the first motor 61. The second rotation sensor 74 is included in the second DS 110, and detects the motor rotation speed of the second motor 71. The rotation sensors 64, 74 detect the rotation states of the motors 61, 71, and thereby detect the rotation states of the motor shafts 65, 75.

The current sensors 86 and 96 detect electric current flowing through the motors 61 and 71. The current sensors 86 and 96 detect electric currents, for example, for each of multiple phases. The first current sensor 86 is included in the first DS 100, and detects electric current of the first motor 61. The first current sensor 86 detects, for example, electric current flowing between the first inverter circuit 85 and the first motor 61 in the first power path 32A. The second current sensor 96 is included in the second DS 110, and detects electric current of the second motor 71. The second current sensor 96 detects, for example, electric current flowing between the second inverter circuit 95 and the second motor 71 in the second power path 32B.

The first rotation sensor 64 and the first current sensor 86 are communicably connected to the first inverter control unit 81, and output detection signals to the first inverter control unit 81. The second rotation sensor 74 and the second current sensor 96 are communicably connected to the second inverter control unit 91, and output detection signals to the second inverter control unit 91. The rotation sensors 64, 74 and the current sensors 86, 96 are communicably connected to the integration ECU 40 via the inverter control units 81, 91.

The inverter control units 81 and 91 have a function for controlling the motor. The first inverter control unit 81 has, as functional blocks, a first speed control unit 82, a first current instruction unit 83, and a first current control unit 84. The second inverter control unit 91 has, as functional blocks, a second speed control unit 92, a second current instruction unit 93, and a second current control unit 94.

In FIG. 5, the first current sensor 86 is illustrated as CS1, the second current sensor 96 is illustrated as CS2, the first rotation sensor 64 is illustrated as RS1, and the second rotation sensor 74 is illustrated as RS2. The first speed control unit 82 is illustrated as SCU1, the first current instruction unit 83 as CCU1, and the first current control unit 84 as FBU1. The second speed control unit 92 is illustrated as SCU2, the second current instruction unit 93 as CCU2, and the second current control unit 94 as FBU2.

First, the motor control in the first DS 100 will be described. The integration ECU 40 outputs a first instruction speed Sr1* as an instruction signal to the first speed control unit 82. The first instruction speed Sr1* is an instruction value for a rotation speed of the first motor 61. The rotation speed is the number of motor rotations per unit time. The first instruction speed Sr1* is an instruction value for an output of the first motor 61. The integration ECU 40 calculates the first instruction speed Sr1* in accordance with a manner with which the pilot operates a controller or the like. The first instruction speed Sr1* is calculated by the integration controller 41. The first instruction speed Sr1* is input from the integration ECU 40 to the first speed control unit 82 via the first integration path 33A.

The first rotation sensor 64 detects a state of the first motor 61 by detecting the number of rotations of the first motor 61. The first rotation sensor 64 corresponds to a first detection unit. The first rotation sensor 64 outputs a first motor speed Sr1 to the first speed control unit 82. The first motor speed Sr1 is a detection result of the first rotation sensor 64, and is a detection value indicating a rotation speed of the first motor 61. The first motor speed Sr1 is information indicating a state of the first motor 61. The first motor speed Sr1 is included in a detection signal of the first rotation sensor 64. The first speed control unit 82 acquires the first motor speed Sr1. The first motor speed Sr1 corresponds to first motor information, and the first speed control unit 82 corresponds to a first information acquisition unit. The first motor information is a value related to a state of the first motor 61, and may also be referred to as a first state-related value.

The first speed control unit 82 performs speed control by feedback control or the like. The first speed control unit 82 controls the rotation speed of the first motor 61 as the speed control. The first speed control unit 82 receives inputs of the first instruction speed Sr1* and the first motor speed Sr1. The first speed control unit 82 calculates a first instruction torque Tr1* using the first instruction speed Sr1* and the first motor speed Sr1. The first speed control unit 82 calculates the first instruction torque Tr1*, for example, so that the first motor speed Sr1 becomes the first instruction speed Sr1*. The first instruction torque Tr1* is an instruction value for a torque of the first motor 61. The first instruction torque Tr1* is an instruction value for an output of the first motor 61, and corresponds to a first instruction output. The first instruction output is a value related to a state of the first motor 61, and may also be referred to as a first state-related value. The first speed controller 82 corresponds to a first instruction unit. The first speed control unit 82 outputs the first instruction speed Sr1* to the first current instruction unit 83.

The first current instruction unit 83 calculates a first instruction current Im1* using the first instruction torque Tr1*. The first current instruction unit 83 receives an input of the first instruction torque Tr1*. The first current instruction unit 83 calculates the first instruction current Im1* from the first instruction torque Tr1* using a predetermined function, arithmetic expression, map, or the like. The first instruction current Im1* is an instruction value for the electric current of the first motor 61. The first instruction current Im1* is an instruction value for an output of the first motor 61, and corresponds to a first instruction output. The first current instruction unit 83 outputs the first instruction current Im1* to the first current control unit 84.

Note that, for example, in the first current instruction unit 83, a d-axis instruction current and a q-axis instruction current are calculated as instruction currents in a dq coordinate system using the first instruction torque Tr1*. Then, the d-axis instruction current and the q-axis instruction current are used as the first instruction current Im1*.

The first current sensor 86 detects a state of the first motor 61 by detecting the electric current of the first motor 61. The first current sensor 86 corresponds to a first detection unit. The first current sensor 86 outputs the first motor current Im1 to the first current control unit 84. The first motor current Im1 is a detection result of the first current sensor 86, and is a detection value that indicates the electric current of the first motor 61. The first motor current Im1 is information indicating a state of the first motor 61. The first motor current Im1 is included in a detection signal of the first current sensor 86. The first current control unit 84 acquires the first motor current Im1. The first motor current Im1 corresponds to first motor information, and the first current control unit 84 corresponds to a first information acquisition unit.

The first current control unit 84 performs current control by feedback control or the like. The first current control unit 84 controls the motor current of the first motor 61 as the current control. The first current control unit 84 receives an input of the first instruction current Im1* and the first motor current Im1. The first current control unit 84 calculates a first instruction voltage Vm1* using the first instruction current Im1* and the first motor current Im1. The first current control unit 84 calculates the first instruction voltage Vm1* so that the first motor current Im1 becomes the first instruction current Im1*, for example. The first instruction voltage Vm1* is an instruction value for a motor voltage of the first motor 61. The first instruction voltage Vm1* is an instruction value for an output of the first motor 61. The first current control unit 84 outputs the first instruction voltage Vm1* to the first inverter circuit 85.

Note that the first current control unit 84 receives a phase current in a three-phase coordinate system as the first motor current Im1. In the first current control unit 84, the phase currents are coordinate-converted into a dq coordinate system to calculate the d-axis current and the q-axis current. As described above, in a configuration in which the d-axis instruction current and the q-axis instruction current are used as the first instruction current Im1*, the first current control unit 84 calculates a d-axis instruction voltage and a q-axis instruction voltage so that the d-axis current and the q-axis current become the d-axis instruction current and the q-axis instruction current. In the first current control unit 84, the d-axis instruction voltage and the q-axis instruction voltage are coordinate-converted into a three-phase coordinate system to calculate phase instruction voltages. The phase instruction voltages include, for example, a U-phase instruction voltage, a V-phase instruction voltage, and a W-phase instruction voltage. The first current control unit 84 outputs the phase instruction voltage to the first inverter circuit 85 as the first instruction voltage Vm1*.

The first inverter control unit 81 has a first drive instruction unit (not shown) as a functional block. The first drive instruction unit generates a drive instruction corresponding to the first instruction voltage Vm1*, and outputs an instruction signal including such a drive instruction to the first inverter circuit 85. For example, the first drive instruction unit generates a pulse-shaped drive instruction from the first instruction voltage Vm1* by using a carrier or the like. The first inverter circuit 85 converts electric power in response to a drive instruction from the first drive instruction unit.

The first DS 100 is provided with an inner loop for performing inner loop control. The inner loop has a path for the first speed control unit 82 to acquire the first motor speed Sr1 from the first rotation sensor 64. The inner loop is provided in the first DS 100. The inner loop does not include the integration ECU 40 and the second DS 110. The inner loop control controls the first motor speed Sr1 by outputting the first instruction voltage Vm1* or the like. In the first DS 100, the output of the first motor 61 is controlled by the inner loop control.

Next, motor control in the second DS 110 will be described. The motor control in the second DS 110 is performed in the same manner as the motor control in the first DS 100.

The integration ECU 40 outputs a second instruction speed Sr2* to the second speed control unit 92 as an instruction signal. The second instruction speed Sr2* is an instruction value for a rotation speed of the second motor 71. The second instruction speed Sr2* is an instruction value for an output of the second motor 71. The integration ECU 40 calculates the second instruction speed Sr2* in accordance with a manner with which the pilot operates a controller or the like. The second instruction speed Sr2* is calculated by the integration controller 41. The second instruction speed Sr2* is input from the integration controller 41 to the second speed control unit 92 via the second integration path 33B.

The second rotation sensor 74 detects a state of the second motor 71 by detecting the number of rotations of the second motor 71. The second rotation sensor 74 corresponds to a second detection unit. The second rotation sensor 74 outputs a second motor speed Sr2 to the second speed control unit 92. The second motor speed Sr2 is a detection result of the second rotation sensor 74, and is a detection value indicating a rotation speed of the second motor 71. The second motor speed Sr2 is information indicating a state of the second motor 71. The second motor speed Sr2 is included in a detection signal of the second rotation sensor 74. The second speed control unit 92 acquires the second motor speed Sr2. The second motor speed Sr2 corresponds to second motor information, and the second speed control unit 92 corresponds to a second information acquisition unit. The second motor information is a value related to a state of the second motor 71, and may also be referred to as a second state-related value.

The second speed control unit 92 performs speed control by feedback control or the like. The second speed control unit 92 controls the rotation speed of the second motor 71 as the speed control. The second speed control unit 92 receives the second instruction speed Sr2* and the second motor speed Sr2. The second speed control unit 92 calculates a second instruction torque Tr2* using the second instruction speed Sr2* and the second motor speed Sr2. The second speed control unit 92 calculates the second instruction torque Tr2*, for example, so that the second motor speed Sr2 becomes the second instruction speed Sr2*. The second instruction torque Tr2* is an instruction value for a torque of the second motor 71. The second instruction torque Tr2* is an instruction value for an output of the second motor 71, and corresponds to a second instruction output. The second instruction output is a value related to a state of the second motor 71, and may also be referred to as a second state-related value. The second speed control unit 92 corresponds to a second instruction unit. The second speed control unit 92 outputs the second instruction speed Sr2* to the second current instruction unit 93.

The second current instruction unit 93 calculates a second instruction current Im2* using the second instruction torque Tr2*. The second current instruction unit 93 receives an input of the second instruction torque Tr2*. The second current instruction unit 93 calculates the second instruction current Im2* from the second instruction torque Tr2* using a predetermined function, arithmetic expression, map, or the like. The second instruction current Im2* is an instruction value for a motor current of the second motor 71. The second instruction current Im2* is an instruction value for an output of the second motor 71, and corresponds to a second instruction output. The second current instruction unit 93 outputs the second instruction current Im2* to the second current control unit 94.

Note that, for example, in the second current instruction unit 93, a d-axis instruction current and a q-axis instruction current are calculated as instruction currents in the dq coordinate system using the second instruction torque Tr2*. Then, the d-axis instruction current and the q-axis instruction current are used as the second instruction current Im2*.

The second current sensor 96 detects a state of the second motor 71 by detecting the electric current of the second motor 71. The second current sensor 96 corresponds to a second detection unit. The second current sensor 96 outputs the second motor current Im2 to the second current control unit 94. The second motor current Im2 is a detection result of the second current sensor 96, and is a detection value that indicates the motor current of the second motor 71. The second motor current Im2 is information indicating a state of the second motor 71. The second motor current Im2 is included in a detection signal of the second current sensor 96. The second current control unit 94 acquires the second motor current Im2. The second motor current Im2 corresponds to second motor information, and the second current control unit 94 corresponds to a second information acquisition unit.

The second current control unit 94 performs current control by feedback control or the like. The second current control unit 94 controls the motor current of the second motor 71 as the current control. The second current control unit 94 receives an input of the second instruction current Im2* and the second motor current Im2. The second current control unit 94 calculates a second instruction voltage Vm2* using the second instruction current Im2* and the second motor current Im2. The second current control unit 94 calculates the second instruction voltage Vm2* so that the second motor current Im2 becomes the second instruction current Im2*, for example. The second instruction voltage Vm2* is an instruction value for a motor voltage of the second motor 71. The second instruction voltage Vm2* is an instruction value for an output of the second motor 71. The second current control unit 94 outputs the second instruction voltage Vm2* to the second inverter circuit 95.

Note that the second current control unit 94 receives a phase current in a three-phase coordinate system as the second motor current Im2. In the second current control unit 94, the phase currents are coordinate-converted into the dq coordinate system to calculate the d-axis current and the q-axis current. As described above, in a configuration in which the d-axis instruction current and the q-axis instruction current are used as the second instruction current Im2*, the second current control unit 94 calculates a d-axis instruction voltage and a q-axis instruction voltage so that the d-axis current and the q-axis current become the d-axis instruction current and the q-axis instruction current. In the second current control unit 94, the d-axis instruction voltage and the q-axis instruction voltage are coordinate-converted into a three-phase coordinate system to calculate phase instruction voltages. The second current control unit 94 outputs the phase instruction voltage to the second inverter circuit 95 as the second instruction voltage Vm2*.

The second inverter control unit 91 has a second drive instruction unit (not shown) as a functional block. The second drive instruction unit generates a drive instruction corresponding to the second instruction voltage Vm2*, and outputs an instruction signal including such a drive instruction to the second inverter circuit 95. For example, the second drive instruction unit generates a pulse-shaped drive instruction from the second instruction voltage Vm2* by using a carrier or the like. The second inverter circuit 95 converts electric power in response to a drive instruction from the second drive instruction unit.

The second DS 110 is provided with an inner loop for performing inner loop control. The inner loop has a path for the second speed control unit 92 to acquire the second motor speed Sr2 from the second rotation sensor 74. The inner loop is provided in the second DS 110. The inner loop does not include the integration ECU 40 and the first DS 100. The inner loop control controls the second motor speed Sr2 by outputting the second instruction voltage Vm2*, for example. In the second DS 110, the output of the second motor 71 is controlled by the inner loop control.

The first inverter control unit 81 and the second inverter control unit 91 are capable of performing coordinated control. The coordinated control is a control for coordinating the first motor 61 and the second motor 71. In the coordinated control, the inverter control units 81 and 91 perform motor control so that an output of the first motor 61 and an output of the second motor 71 become the same as each other. The first inverter control unit 81 controls the first motor 61 so that the output of the first motor 61 becomes the same as the output of the second motor 71. The second inverter control unit 91 controls the second motor 71 so that the output of the second motor 71 becomes the same as the output of the first motor 61.

The coordinated control of the inverter control units 81 and 91 is performed using, for example, instruction speeds Sr1* and Sr2*. In such a coordinated control, the first instruction speed Sr1* and the second instruction speed Sr2* are made common. The integration controller 41 sets the first instruction speed Sr1* and the second instruction speed Sr2* to a same instruction value. The first instruction speed Sr1* and the second instruction speed Sr2* are a common instruction value, and correspond to a common instruction. The coordinated control makes the first instruction speed Sr1* and the second instruction speed Sr2* the same, thereby the output of the first motor 61 and the output of the second motor 71 are easily equalized. The integration ECU 40 corresponds to a common instruction unit that calculates a common instruction.

The coordinated control of the inverter control units 81 and 91 is performed using, for example, instruction torques Tr1* and Tr2*. The instruction torques Tr1* and Tr2* are exchanged between the first inverter control unit 81 and the second inverter control unit 91. In the first inverter control unit 81, the first speed control unit 82 outputs the first instruction torque Tr1* to the second current instruction unit 93 in addition to the first current instruction unit 83. The first instruction torque Tr1* is input from the first speed control unit 82 to the second current instruction unit 93 via the EPU path 55. In the second inverter control unit 91, the second speed control unit 92 outputs the second instruction torque Tr2* to the first current instruction unit 83 in addition to the second current instruction unit 93. The second instruction torque Tr2* is input from the second speed control unit 92 to the first current instruction unit 83 via the EPU path 55.

The first current instruction unit 83 calculates the first instruction current Im1* by using the second instruction torque Tr2* in addition to the first instruction torque Tr1*. The second current instruction unit 93 calculates the second instruction current Im2* by using the first instruction torque Tr1* in addition to the second instruction torque Tr2*. In such manner, the inverter control units 81, 91 share the instruction torques Tr1*, Tr2*, so that the first instruction current Im1* and the second instruction current Im2* tend to become the same as each other.

The coordinated control using the instruction torques Tr1* and Tr2* is performed for the inner loop control in each of the first DS 100 and the second DS 110. The first DS 100 and the second DS 110 exchange instruction values in the inner loop control. For example, the first instruction torque Tr1* used in the inner loop control in the first DS 100 is input to the inner loop control in the second DS 110. The second instruction torque Tr2* used in the inner loop control in the second DS 110 is input to the inner loop control in the first DS 100.

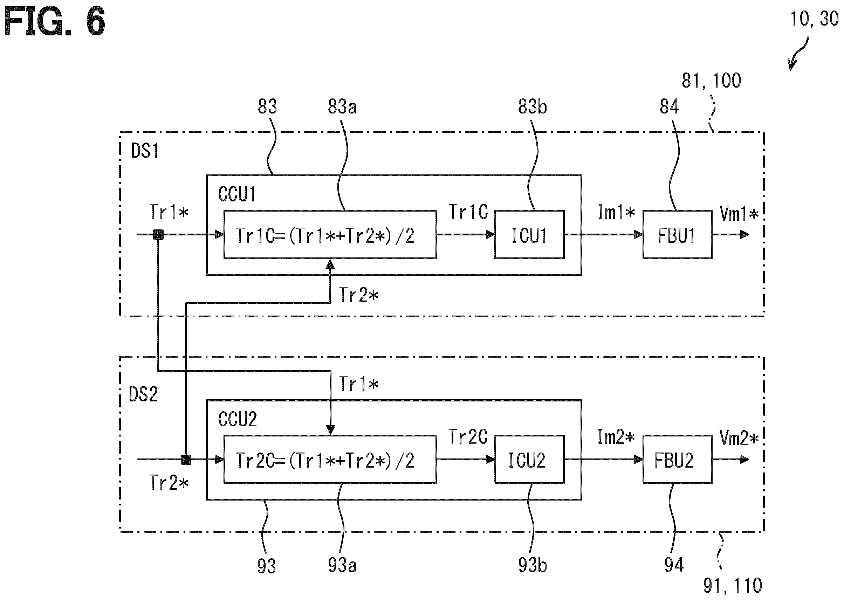

In the coordinated control, as shown in FIG. 6, the first speed control unit 82 outputs the first instruction torque Tr1* to the second current instruction unit 93 in addition to the first current instruction unit 83. The second speed control unit 92 outputs the second instruction torque Tr2* to the second current instruction unit 93 in addition to the first current instruction unit 83.

The first current instruction unit 83 has a first torque coordination unit 83a and a first coordination instruction unit 83b. Both of the first instruction torque Tr1* and the second instruction torque Tr2* are input to the first torque coordination unit 83a. The first torque coordination unit 83a calculates a first coordinated torque Tr1C using the first instruction torque Tr1* and the second instruction torque Tr2*. The first torque coordination unit 83a outputs the first coordinated torque Tr1C to the first coordination instruction unit 83b. The first coordinated torque Tr1C is an instruction torque, and is calculated by the coordination of the first instruction torque Tr1* and the second instruction torque Tr2*. The first torque coordination unit 83a calculates, for example, an average value of the first instruction torque Tr1* and the second instruction torque Tr2* as the first coordinated torque Tr1C. Regarding the first coordinated torque Tr1C, Equation 1 holds true.

$$Tr1C = (Tr1^* + Tr2^*) / 2 \qquad \ldots \ldots \qquad \text{Equation 1}$$

In the equation 1, a contribution degree of the first instruction torque Tr1* to the first coordinated torque Tr1C is the same as that of the second instruction torque Tr2*. That is, a ratio at which the first instruction torque Tr1* contributes to the first coordinated torque Tr1C is the same as a ratio at which the second instruction torque Tr2* contributes to the first coordinated torque Tr1C. Note that the first coordinated torque Tr1C corresponds to an averaged instruction, and the first torque coordination unit 83a corresponds to an instruction averaging unit.

The first coordination instruction unit 83b calculates the first instruction current Im1* using the first coordinated torque Tr1C. The first coordinated torque Tr1C is input to the first coordination instruction unit 83b. The first coordination instruction unit 83b calculates the first instruction current Im1* from the first coordinated torque Tr1C using a predetermined function, arithmetic expression, map, or the like. The first coordination instruction unit 83b outputs the first instruction current Im1* to the first current instruction unit 83.

The second current instruction unit 93 has a second torque coordination unit 93a and a second coordination instruction unit 93b. Both of the first instruction torque Tr1* and the second instruction torque Tr2* are input to the second torque coordination unit 93a. The second torque coordination unit 93a calculates a second coordinated torque Tr2C using the first instruction torque Tr1* and the second instruction torque Tr2*. The second torque coordination unit 93a outputs the second coordinated torque Tr2C to the second coordination instruction unit 93b. The second coordinated torque Tr2C is an instruction torque, and is calculated by coordinating the first instruction torque Tr1* and the second instruction torque Tr2*. The second torque coordination unit 93a calculates, for example, an average value of the first instruction torque Tr1* and the second instruction torque Tr2* as the second coordinated torque Tr2C. Regarding the second coordinated torque Tr2C, Equation 2 holds true.

$$Tr2C = (Tr1^* + Tr2^*) / 2 \qquad \ldots \ldots \qquad \text{Equation 2}$$

In the equation 2, the contribution degree of the first instruction torque Tr1* to the second coordinated torque Tr2C is the same as that of the second instruction torque Tr2*. That is, a ratio at which the first instruction torque Tr1* contributes to the second coordinated torque Tr2C is the same as a ratio at which the second instruction torque Tr2* contributes to the second coordinated torque Tr2C. The second coordinated torque Tr2C corresponds to an averaged instruction, and the second torque coordination unit 93a corresponds to an instruction averaging unit.

The second coordination instruction unit 93b calculates the second instruction current Im2* using the second coordinated torque Tr2C. The second coordinated torque Tr2C is input to the second coordination instruction unit 93b. The second coordination instruction unit 93b calculates the second instruction current Im2* from the second coordinated torque Tr2C using a predetermined function, arithmetic expression, map, or the like. The second coordination instruction unit 93b outputs the second instruction current Im2* to the second current instruction unit 93.

In FIG. 6, the equation 1 is illustrated in the first torque coordination unit 83a, and the equation 2 is illustrated in the second torque coordination unit 93a. Further, the first coordination instruction unit 83b is illustrated as ICU1, and the second coordination instruction unit 93b is illustrated as ICU2.

The integration ECU 40 performs EPU control. The EPU control includes a process for setting an operation mode of the DSs 100 and 110. The operation modes of the DSs 100, 110 include a start-up mode, a normal mode, and an abnormal mode. The start-up mode is a mode for starting the operation of the DSs 100 and 110. In the start-up mode, a pre-speed follow-up situation is likely to occur. In a state before the speed follow-up, one of the motors 61, 71 cannot follow the other immediately after the DSs 100, 110 start to drive, and clutch slippage is likely to occur. Then, when one catches up to follow the other, the operation mode is switched to the normal mode. In the normal mode, clutch slippage is eliminated.

When at least one of the DSs 100 and 110 stops, the operation mode is switched to an abnormal mode. In the abnormal mode, the drive of the motors 61 and 71 is stopped, thereby causing the clutch slippage.

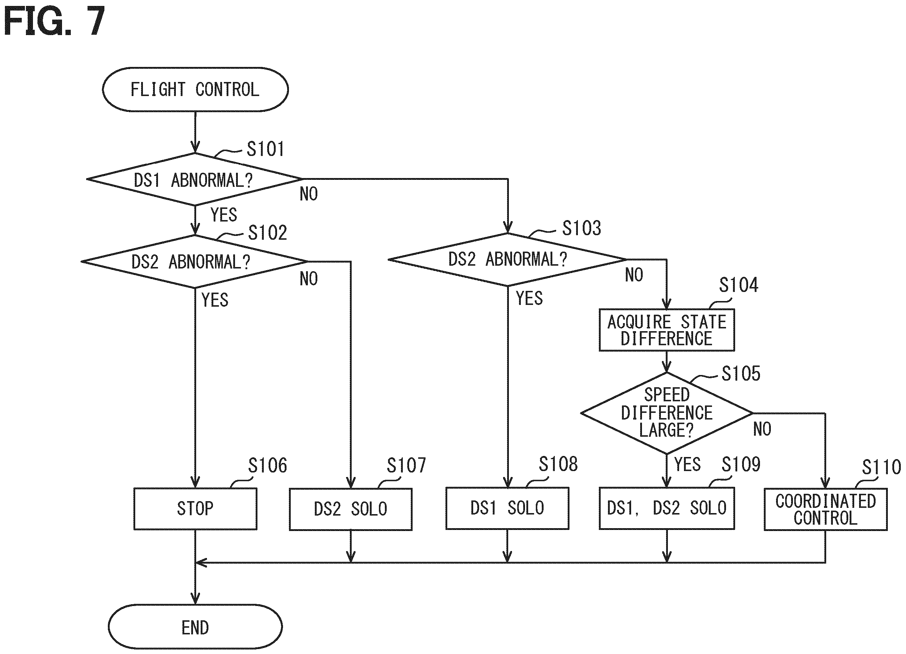

The integration ECU 40 performs the flight control processing. The flight control processing will be described with reference to a flowchart of FIG. 7. The integration ECU 40 repeatedly performs flight control processing at a predetermined control cycle. The integration ECU 40 has a function of executing the processing of each step of the flight control processing. The flight control processing includes a drive control process for driving the EPU 50. The control method executed by the drive control process corresponds to a drive control method.

The processing in steps S101 to S110 shown in FIG. 7 is for performing a drive control of one EPU 50. The integration ECU 40 performs drive control for each of the plurality of EPUs 50 through steps S101 to S110.

In steps S101 to S103, the integration ECU 40 determines whether or not an abnormality has occurred in the first DS 100 and the second DS 110. For example, the integration ECU 40 determines in step S101 whether or not an abnormality has occurred in the first DS 100. If an abnormality occurs in the first DS 100, the integration ECU 40 proceeds to step S102, where it determines whether or not an abnormality occurs in the second DS 110. On the other hand, if no abnormality has occurred in the first DS 100, the integration ECU 40 proceeds to step S103, where it determines whether or not an abnormality has occurred in the second DS 110.

In steps S101 and S103, it is determined whether or not an abnormality has occurred in the first DS 100. The integration ECU 40 acquires a state of the first DS 100, and uses the acquired state to determine whether the first DS 100 has an abnormality. The abnormality determination of the first DS 100 includes an abnormality determination of the first motor 61. The state of the first DS 100 may be, for example, a state of the first motor 61 or a state of the first inverter circuit 85. The integration ECU 40 acquires the state of the first DS 100 using, for example, detection signals from the first current sensor 86 and the first rotation sensor 64. The first DS 100 acquires detection signals from the first current sensor 86 and the first rotation sensor 64 via the first inverter control unit 81.

Note that the first inverter control unit 81 may acquire the state of the first DS 100 using detection signals from the first current sensor 86 and the first rotation sensor 64. Further, the first inverter control unit 81 may determine whether or not an abnormality has occurred in the first DS 100. In those configurations, it is preferable that the state of the first DS 100 and the abnormality determination result are input from the first inverter control unit 81 to the integration ECU 40. In such manner, the integration ECU 40 can determine whether or not the first DS 100 has an abnormality.

In step S102, it is determined whether or not an abnormality has occurred in the second DS 110. The integration ECU 40 performs an abnormality determination for the second DS 110 in the same manner as the abnormality determination for the first DS 100. The integration ECU 40 acquires a state of the second DS 110 and uses the acquired state to determine whether the second DS 110 has an abnormality. The abnormality determination of the second DS 110 includes an abnormality determination of the second motor 71. The state of the second DS 110 may be, for example, the state of the second motor 71 or the state of the second inverter circuit 95. The integration ECU 40 acquires the state of the second DS 110 using, for example, detection signals from the second current sensor 96 and the second rotation sensor 74. The second DS 110 acquires detection signals from the second current sensor 96 and the second rotation sensor 74 via the second inverter control unit 91.

Note that the second inverter control unit 91 may acquire the state of the second DS 110 using detection signals from the second current sensor 96 and the second rotation sensor 74. Further, the second inverter control unit 91 may determine whether or not an abnormality has occurred in the second DS 110. In those configurations, it is preferable that the state of the second DS 110 and the abnormality determination result are input from the second inverter control unit 91 to the integration ECU 40. In such manner, the integration ECU 40 can determine whether or not the second DS 110 has an abnormality.

When an abnormality has occurred in both of the first DS 100 and the second DS 110, the integration ECU 40 proceeds to step S106, and performs a stop process. In the stop process, both of the first DS 100 and the second DS 110 are stopped. The integration ECU 40 performs a first stop process and a second stop process. The first stop process is a process for stopping the drive of the first DS 100. The second stop process is a process for stopping the drive of the second DS 110.

The first stop process is also a process for stopping the drive of the first motor 61. In the first stop process, an instruction signal for stopping the drive of the first motor 61 is output to the first inverter control unit 81. The integration ECU 40 generates the first instruction speed Sr1* so that the first motor speed Sr1 becomes zero, for example, and outputs the first instruction speed Sr1* to the first speed control unit 82. The second stop process is also a process for stopping the drive of the second motor 71. In the second stop process, the integration ECU 40 outputs an instruction signal to the second inverter control unit 91 to stop driving the second motor 71. The integration ECU 40 calculates the second instruction speed Sr2* so that the second motor speed Sr2 becomes zero, for example, and outputs the second instruction speed Sr2* to the second speed control unit 92.

When an abnormality has occurred in the first DS 100 but not in the second DS 110, the integration ECU 40 proceeds to step S107. In step S107, the integration ECU 40 performs a process for driving the second DS 110 independently. Such a process includes the first stop process and a second solo process. The second solo process is a process for driving the second DS 110 independently so as not to coordinate with the first DS 100. The second solo process is also a process for driving the second motor 71 independently so that the second motor 71 does not coordinate with the first motor 61.

In the second solo process, the second inverter control unit 91 controls the second motor 71 using the second instruction torque Tr2*, but not using the first instruction torque Tr1*. The second current instruction unit 93 calculates the second instruction current Im2* by using only the second instruction torque Tr2* from among the first instruction torque Tr1* and the second instruction torque Tr2*. That is, the second current instruction unit 93 does not use the first instruction torque Tr1* to calculate the second instruction current Im2*. For example, the first speed control unit 82 does not output the first instruction torque Tr1* to the second current instruction unit 93. Note that, when the first instruction torque Tr1* is not used to calculate the second instruction current Im2*, the first instruction torque Tr1* may be output from the first speed control unit 82 or may be input to the second current instruction unit 93.

When an abnormality has occurred in the second DS 110 but not in the first DS 100, the integration ECU 40 proceeds to step S108. In step S108, the integration ECU 40 performs a process for driving the first DS 100 independently. Such a process includes the second stop process and a first solo process. The first solo process is a process for driving the first DS 100 independently so as not to coordinate with the second DS 110. The first solo process is also a process for driving the first motor 61 independently so that the first motor 61 does not coordinate with the second motor 71.

In the first solo process, the first inverter control unit 81 controls the first motor 61 using the first instruction torque Tr1*, but does not use the second instruction torque Tr2*. The first current instruction unit 83 calculates the first instruction current Im1* using only the first instruction torque Tr1* from among the first instruction torque Tr1* and the second instruction torque Tr2*. That is, the first current instruction unit 83 does not use the second instruction torque Tr2* to calculate the first instruction current Im1*. For example, the second speed control unit 92 does not output the second instruction torque Tr2* to the first current instruction unit 83. Note that, when the second instruction torque Tr2* is not used to calculate the first instruction current Im1*, the second instruction torque Tr2* may be output from the second speed control unit 92 or may be input to the first current instruction unit 83.

When an abnormality has not occurred in any of the first DS 100 and the second DS 110, the integration ECU 40 proceeds to step S104, and acquires a DS state difference. The DS state difference is a difference between a state of the first DS 100 and a state of the second DS 110. The DS state difference includes a motor state difference and the like. The motor state difference is a difference between a state of the first motor 61 and a state of the second motor 71. The motor state difference includes a speed difference between the first motor speed Sr1 and the second motor speed Sr2, a current difference between the first motor current Im1 and the second motor current Im2, and the like. The speed difference is a difference between detection values of the motor speeds Sr1 and Sr2. The current difference is a difference between detection values of the motor currents Im1 and Im2. The motor state difference may also be a difference between state-related values. In step S104, at least the speed difference is acquired as the motor state difference.

In step S105, the integration ECU 40 determines whether the speed difference is too large. The integration ECU 40 determines whether the speed difference is greater than a predetermined speed reference value, and determines that the speed difference is too large if the speed difference is greater than the speed reference value. When the speed difference is not greater than the speed reference value, the integration ECU 40 determines that the speed difference is not too large. The speed reference value is, for example, an upper limit of an allowable range for the speed difference. When the speed difference is greater than the speed reference value, clutch slippage is likely to occur in a motor rotating at a slower speed from among the first motor 61 and the second motor 71. That is, the slower motor is more likely to slip in rotation. The integration ECU 40 determines whether the speed difference is greater than the speed reference value, thereby determining whether the motor state difference is within the allowable range.

When the speed difference is too large, the integration ECU 40 determines that clutch slippage is likely to occur, and proceeds to step S109. In step S109, the integration ECU 40 performs a process for driving each of the first DS 100 and the second DS 110 independently. This process includes the first solo process and the second solo process. In such a process, the outputs of the first motor 61 and the second motor 71 are not equalized. Note that the integration ECU 40 may determine that clutch slippage is occurring when the speed difference is too large, and may determine that clutch slippage is not occurring when the speed difference is not too large.

When the speed difference is not too large, the integration ECU 40 determines that clutch slippage is unlikely to occur, and proceeds to step S110. The integration ECU 40 performs a coordinated control processing in step S110. In the coordinated control processing, coordinated control of the inverter control units 81 and 91 is performed. In the coordinated control processing, the inverter control units 81 and 91 perform motor control so that the output of the first motor 61 and the output of the second motor 71 become the same as each other.

Note that, in step S105, it may be determined whether a communication abnormality has occurred in the EPU 50. The communication abnormality of the EPU 50 may be an abnormality in communication between the integration ECU 40 and the inverter control units 81 and 91 due to an abnormality in the integration path 33 or the like. Further, the communication abnormality of the EPU 50 may also be an abnormality occurring in communication between the first inverter control unit 81 and the second inverter control unit 91 due to an abnormality in the EPU path 55 or the like. When a communication abnormality occurs in the EPU 50, it is preferable that the integration ECU 40 proceeds to step S109, and performs the first solo process and the second solo process regardless of the speed difference.

Further, in step S105, a determination may be made as to which mode the operation mode is. For example, when it is determined that the operation mode is the start-up mode, the integration ECU 40 proceeds to step S109, and performs the first solo process and the second solo process. On the other hand, when it is determined that the operation mode is the normal mode, the integration ECU 40 proceeds to step S110, and performs the coordinated control processing. Further, when it is determined in steps S101 to S103 that an abnormality has occurred in the DSs 100, 110, the integration ECU 40 performs, by determining that the operation mode is the abnormal mode, the processes of steps S106 to S109.

According to the present embodiment described above, the inverter control units 81, 91 control the motors 61, 71 so that the output of the first motor 61 and the output of the second motor 71 become the same as each other. In such a configuration, a difference between the output of the first motor 61 and the output of the second motor 71 is unlikely to occur. Therefore, it is unlikely that the outputs of the first motor 61 and the second motor 71 are exchanged via the EPU shaft 51. Therefore, it is possible to suppress (a) an increase in the electrical load on the one having the greater output among the first motor 61 and the second motor 71, and (b) an increase in the thermal load on the one having the smaller output among the first motor 61 and the second motor 71. In such manner, the load on each of the first motor 61 and the second motor 71 is reducible.

For example, it is assumed that the output of the first motor 61 is greater than the output of the second motor 71 and no clutch slippage is occurring in either of the motors 61, 71. In such case, the first motor 61 rotates the second motor 71 via the EPU shaft 51. The first motor 61 powers the second motor 71 to rotate. The second motor 71 performs regeneration so as to generate regenerative electric power. The second motor 71 acts as a load on the first motor 61, and there is a concern that the electrical load on the first motor 61 will increase by an amount of regeneration of the second motor 71. For the second motor 71, the generation of regenerative electric power makes it more likely to generate heat, and there is a concern that the thermal load will increase. Further, both of the first motor 61 and the second motor 71 are put in a severe thermal condition.

In contrast, in the present embodiment, the regenerative electric power generated by the second motor 71 is reducible by reducing the output difference among the motors 61 and 71. Therefore, the electrical load on the first motor 61 caused by regeneration of the second motor 71 is reducible. For the second motor 71, the thermal load of heat generation due to regeneration is reducible. Further, by equalizing the outputs of the first motor 61 and the second motor 71 that are driven simultaneously, the output performance and thermal design of the DSs 100 and 110 are optimized. In such manner, the weight and size of the DSs 100 and 110 are reducible.

According to the present embodiment, the inverter control units 81 and 91 control the motors 61 and 71, respectively, using the first instruction torque Tr1* and the second instruction torque Tr2*. In such a configuration, the first inverter control unit 81 and the second inverter control unit 91 can share the instruction torques Tr1*, Tr2* for controlling the motors 61, 71. Therefore, a method by which the first inverter control unit 81 controls the first motor 61 and a method by which the second inverter control unit 91 controls the second motor 71 can be standardized by using the instruction torques Tr1* and Tr2*. That is, the inverter control units 81, 91 can adjust the outputs of the motors 61, 71 using the same control method by using the instruction torques Tr1*, Tr2*. Therefore, when manufacturing the EPU 50, it is not necessary to design the inverter control units 81, 91 independently, and the design load of the inverter control units 81, 91 is reducible.

In the present embodiment, the first DS 100 and the second DS 110 exchange the first instruction torque Tr1* and the second instruction torque Tr2* as instruction values in the inner loop control. Therefore, in each of the first DS 100 and the second DS 110, output adjustment of the inner loop control becomes easy. That is, by exchanging the first instruction torque Tr1* and the second instruction torque Tr2*, it becomes easier to adjust the first instruction voltage Vm1* and the second instruction voltage Vm2*.

According to the present embodiment, the inverter control units 81, 91 control the motors 61, 71 using the coordinated torques Tr1C, Tr2C which are average values of the instruction torques Tr1*, Tr2*. In such a configuration, the first instruction torque Tr1* and the second instruction torque Tr2* can have the same contribution degree to the output of the motors 61, 71. By making the contribution degree of the first instruction torque Tr1* and the contribution degree of the second instruction torque Tr2* equal to each other, the output of the first motor 61 and the output of the second motor 71 tend to become equal.

For example, when the output of the first motor 61 is greater than the output of the second motor 71 and the contribution degree of the first instruction torque Tr1* is made greater than the contribution degree of the second instruction torque Tr2*, there is a concern that the output of the first motor 61 will become even greater. Further, in such a state, when the contribution degree of the first instruction torque Tr1* is made smaller than the contribution degree of the second instruction torque Tr2*, there is a concern that the output of the second motor 71 will become even smaller. In either case, when the difference exists in the contribution degrees of the instruction torques Tr1* and Tr21*, the output difference among the motors 61 and 71 increases, thereby increasing the load on the motors 61 and 71.

The first coordinated torque Tr1C and the second coordinated torque Tr2C are both average values of the instruction torques Tr1* and Tr2*, and therefore have the same value. In such manner, since the first coordinated torque Tr1C and the second coordinated torque Tr2C are the same, the first motor speed Sr1 and the second motor speed Sr2 tend to become the same as each other. Therefore, in each of the first DS 100 and the second DS 110, the output performance and the thermal design can be optimized by the coordinated torques Tr1C and Tr2C.

According to the present embodiment, the first instruction speed Sr1* and the second instruction speed Sr2* calculated by the integration ECU 40 are the common instruction value. In such a configuration, the first instruction torque Tr1* calculated using the first instruction speed Sr1* and the second instruction torque Tr2* calculated using the second instruction speed Sr2* tend to have the same value. Therefore, for example, compared to a configuration in which the first instruction speed Sr1* and the second instruction speed Sr2* are not common, it is easier to equalize the output of the first motor 61 and the output of the second motor 71.

In the present embodiment, the integration ECU 40 standardizes the first instruction speed Sr1* and the second instruction speed Sr2*. In such a configuration, the control of the motors 61, 71 by the integration ECU 40 can be simplified. Even when the motor control by the integration ECU 40 is simplified, the control accuracy of the motors 61, 71 is unlikely to lower because the inverter control units 81, 91 perform motor control independently. Further, in such a configuration, the first inverter control unit 81 and the second inverter control unit 91 do not need to exchange common instruction speeds Sr1*, Sr2*. Therefore, there is no need for the first inverter control unit 81 and the second inverter control unit 91 to have an interface for exchanging the instruction speeds Sr1* and Sr2*. Therefore, the DSs 100, 110 can reduce the size and weight by eliminating the interface for instruction speed.

In the present embodiment, the instruction values for the output amounts of the motors 61, 71 include the instruction torques Tr1*, Tr2* and the instruction currents Im1*, Im2*. The instruction torques Tr1*, Tr2* and the instruction currents Im1*, Im2* are state quantities that are highly correlated with the outputs of the DSs 100 and 110 and the motors 61 and 71. Therefore, by controlling the motors 61, 71 using the instruction torques Tr1*, Tr2* and the instruction currents Im1*, Im2*, it becomes easy to adjust the output distribution of the motors 61, 71 among the first DS 100 and the second DS 110.

In the present embodiment, the speed control of the motors 61 and 71 is performed by inverter control units 81 and 91. In such a configuration, speed information such as the detection signals of the rotation sensors 64, 74 only needs to be input to the inverter control units 81, 91, and does not need to be input to the integration ECU 40. Therefore, there is no need to provide the integration ECU 40 with an interface for an input of the speed information. Therefore, in the integration ECU 40, the size and weight are reducible by eliminating the interface for the speed information.

According to the present embodiment, the EPU path 55 communicably connects the first speed control unit 82 and the second speed control unit 92 without passing through the integration controller 41. In such a configuration, the time required for communication between the first speed control unit 82 and the second speed control unit 92 is reducible. Therefore, it is unlikely that the timing at which the instruction torques Tr1*, Tr2* are input to the current instruction units 83, 93 via the EPU path 55 will be delayed relative to the timing at which the instruction currents Im1*, Im2* are calculated by the current instruction units 83, 93. Therefore, it is possible to suppress a lowering in the control accuracy of the motor output caused by the communication of the instruction torques Tr1*, Tr2* not being able to keep up with the calculation of the instruction currents Im1*, Im2*. In other words, the accuracy of output adjustment of the motors 61, 71 is improvable.

In the present embodiment, when an abnormality occurs in one of the DSs 100 and 110, the operation of the one in which the abnormality is occurring is stopped, while the operation of the other in which the abnormality is not occurring continues. Therefore, the operation time of the EPU 50 can be secured by driving either the DS 100 or 110 whichever is not experiencing an abnormality.

According to the present embodiment, the motors 61 and 71 are mounted on the eVTOL 10 that flies by rotating the propeller 20. Optimizing the output performance and thermal design of the motors 61, 71 is effective in reducing the weight and size of the motors 61, 71 mounted on the eVTOL 10. In such manner, achieving weight reduction effects by optimizing the output performance and thermal design of the DSs 100, 110 is important in designing an electric flying vehicle such as the eVTOL10.

<Second Embodiment>

In the above-described first embodiment, the first DS 100 and the second DS 110 are arranged along the EPU axis Cepu. In contrast, in the second embodiment, the first DS 100 and the second DS 110 are not arranged along the EPU axis Cepu. Configurations, operations, and effects not particularly described in the second embodiment are the same as those of the first embodiment. In the second embodiment, differences from the first embodiment will be mainly described.

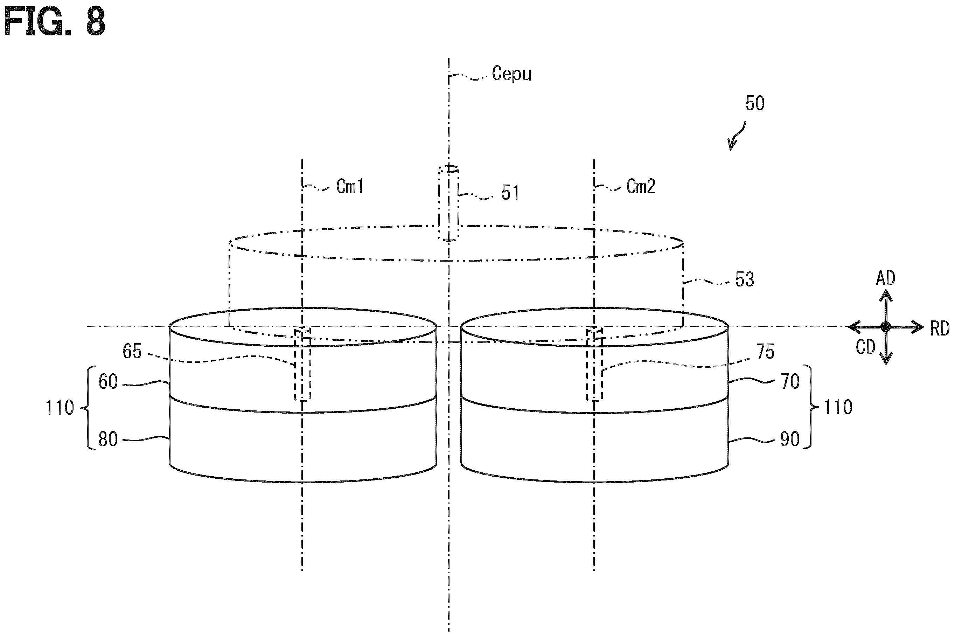

In the EPU 50 shown in FIG. 8, the first DS 100 and the second DS 110 are arranged in the radial direction RD. The first motor shaft 65 and the second motor shaft 75 are arranged in the radial direction RD. The first motor shaft 65 and the second motor shaft 75 are provided at a position spaced apart from the EPU shaft 51 in the radial direction RD. The EPU shaft 51 is disposed at a position between the first motor shaft 65 and the second motor shaft 75 in the radial direction RD.

The gear 53 is arranged in the axial direction AD with respect to the DSs 100 and 110. The gear 53 is disposed across the first DS 100 and the second DS 110 in the radial direction RD. The gear 53 is fixed to both of the first DS 100 and the second DS 110. The gear 53 connects each of the first motor shaft 65 and the second motor shaft 75 to the EPU shaft 51.

The gear 53 is capable of setting the reduction ratio for each of the first DS 100 and the second DS 110 independently. The gear 53 has a first gear portion and a second gear portion. The first gear portion is capable of setting the reduction ratio of the first motor 61 with respect to the propeller 20. The second gear portion is capable of setting the reduction ratio of the second motor 71 with respect to the propeller 20.

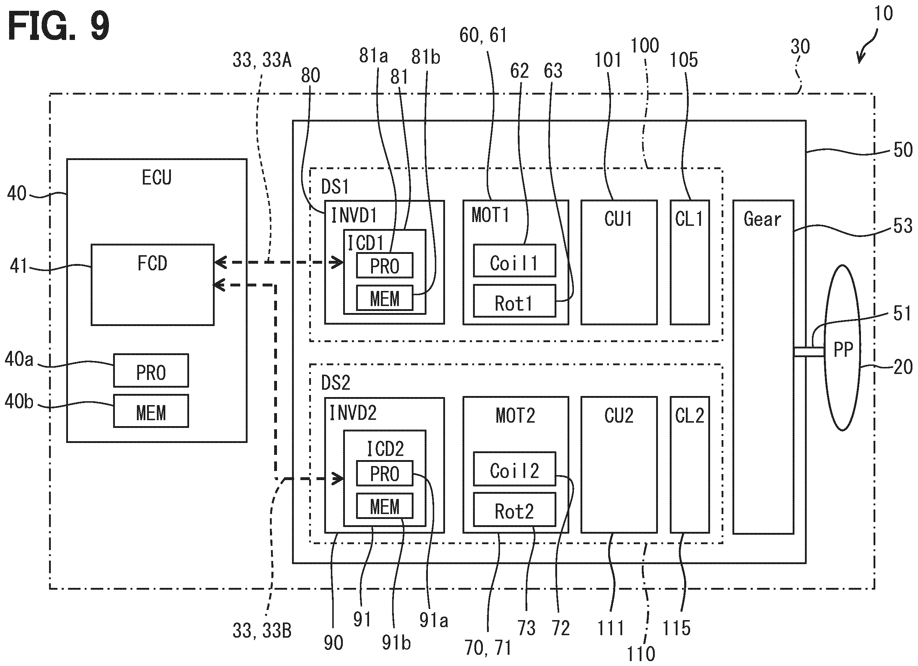

As shown in FIG. 9, the first DS 100 and the second DS 110 are communicably connected via the integration paths 33A and 33B. In the present embodiment, unlike the first embodiment, the EPU 50 does not have the EPU path 55. Therefore, the first inverter control unit 81 and the second inverter control unit 91 are connected to each other to be communicable with each other via the integration paths 33A, 33B and the integration ECU 40. For example, a signal output from the first inverter control unit 81 is input to the second inverter device 90 via the integration paths 33A, 33B and the integration ECU 40.

The gear 53 is communicably connected to the integration ECU 40 via the integration path 33. The integration ECU 40 controls the operation of the gear 53 by outputting an instruction signal. The integration ECU 40 changes the reduction ratio of the gear 53 in accordance with a thermal margin of the DSs 100, 110.

For example, the integration ECU 40 controls the gear 53 so that the reduction ratio of the DSs 100, 110 in a motor heated state is lowered. The motor heated state is a state in which the motors 61 and 71 have a smaller thermal margin than the inverter circuits 85 and 95. An example of the motor heated state is a state in which the temperature of the motor devices 60, 70 is higher than the temperature of the inverter devices 80, 90. In the DSs 100 and 110 in the motor heated state, the reduction ratio of the gear 53 is lowered, thereby suppressing the rotation speeds of the motors 61 and 71. In the motors 61 and 71, the rotation speed lowers while the torque increases.

The integration ECU 40 controls the gear 53 so that the reduction ratio of the DSs 100, 110 in an inverter heated state is raised. The inverter heated state is a state in which the inverter circuits 85, 95 have a smaller thermal margin than the motors 61, 71. The inverter heated state is, for example, a state in which the temperatures of the inverter devices 80, 90 are higher than the temperatures of the motor devices 60, 70. In the DSs 100 and 110 in the inverter heated state, the reduction ratio of the gear 53 is raised, thereby suppressing the electric current of the motors 61 and 71. In the motors 61 and 71, the rotation speed increases while the torque decreases. Note that, when the torque of the motors 61, 71 is suppressed by increasing the reduction ratio of the gear 53, the electric current in the motors 61, 71 decreases.

The higher the rotation speed of the motors 61, 71, the more severe the thermal conditions of the motors 61, 71 become. In the DSs 100, 110, even when the rotation speed of the motors 61, 71 increases, there is no thermal effect on the inverter circuits 85, 95. Since the inverter circuits 85 and 95 depend on the electric current flowing therethrough, the greater such electric current is, the more severe the thermal conditions become. However, in the EPU 50 provided with the cooling fans rotated by the motors 61, 71, the inverter circuits 85, 95 become more thermally advantageous as the rotation speeds of the motors 61, 71 increase. The cooling fans are connected to the motor shafts 65 and 75, and are capable of blowing air so that cooling air flows along an outer surface of the EPU 50.

In the EPU 50, the thermal conditions of the DSs 100 and 110 tend to differ depending on the arrangement of the DSs 100 and 110. For example, even inside the EPU 50, the thermal conditions are different between (a) a parallel arrangement in which the DSs 100, 110 are arranged in the radial direction RD as in the present embodiment and (b) a series arrangement in which the DSs 100, 110 are arranged in the axial direction AD as in the first embodiment. In particular, in a configuration in which the DSs 100 and 110 are stacked as shown in the first embodiment, differences in thermal conditions are likely to occur between the DSs 100 and 110. For example, a difference is likely to occur in which one of the DSs 100 and 110 has better cooling conditions than the other.

In the present embodiment, since the EPU 50 does not have the EPU path 55, a direct interface for exchanging information between the inverter control units 81 and 91 is not required. That is, there is no need to provide a direct interface in the first DS 100 and the second DS 110. Thus, the DSs 100, 110 respectively have reduced size and weight due to elimination of the direct interface.

<Third Embodiment>

In the first embodiment, the coordinated control of the inverter control units 81, 91 is performed using the instruction torques Tr1*, Tr2*. In contrast to the above, in the third embodiment, the coordinated control of the inverter control units 81, 91 is performed using the instruction currents Im1*, Im2*. Configurations, operations, and effects not particularly described in the third embodiment are the same as those in the first embodiment. In the third embodiment, differences from the first embodiment will be mainly described.

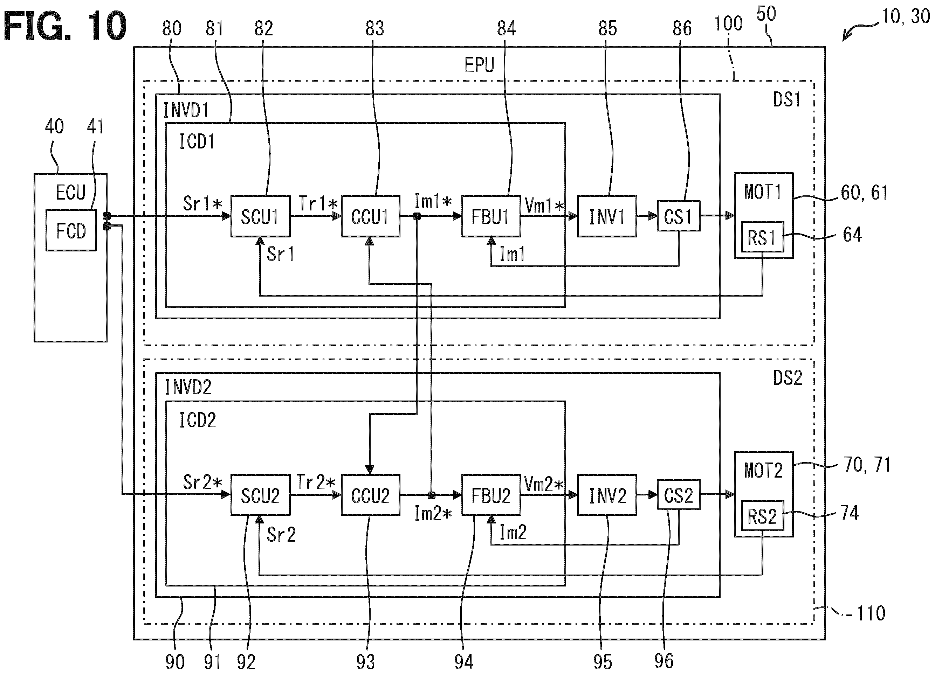

As shown in FIG. 10, the first inverter control unit 81 and the second inverter control unit 91 exchange the instruction currents Im1* and Im2* as instruction outputs. In the first inverter control unit 81, the first current instruction unit 83 outputs the first instruction current Im1* to the first current control unit 84 and to the second current instruction unit 93. The first instruction current Im1* is input from the first current instruction unit 83 to the second current instruction unit 93 via the EPU path 55. In the second inverter control unit 91, the second current instruction unit 93 outputs the second instruction current Im2* to the first current instruction unit 83 and to the second current control unit 94. The second instruction current Im2* is input from the second current instruction unit 93 to the first current instruction unit 83 via the EPU path 55.

The first current instruction unit 83 calculates the first instruction current Im1* by using the first instruction torque Tr1* and the second instruction current Im2*. The second current instruction unit 93 calculates the second instruction current Im2* using the first instruction current Im1* and the second instruction torque Tr2*. In such manner, the inverter control units 81, 91 share the instruction currents Im1*, Im2*, so that the first instruction current Im1* and the second instruction current Im2* tend to become the same as each other.

For example, the first current instruction unit 83 calculates a first coordinated current using the first instruction torque Tr1*, and outputs the first coordinated current calculated in such manner to the second current instruction unit 93. The second current instruction unit 93 calculates a second coordinated current using the second instruction torque Tr2*, and outputs the second coordinated current calculated in such manner to the first current instruction unit 83. The first current instruction unit 83 calculates the first instruction current Im1* using the first coordinated current and the second coordinated current. For example, the first current instruction unit 83 calculates an average value of the first coordinated current and the second coordinated current as the first instruction current Im1*. The second current instruction unit 93 calculates the second instruction current Im2* using the first coordinated current and the second coordinated current. For example, the second current instruction unit 93 calculates an average value of the first coordinated current and the second coordinated current as the second instruction current Im2*.

<Fourth Embodiment>

In the first embodiment, the coordinated control of the inverter control units 81 and 91 is performed using instruction outputs. In contrast to the above, in the fourth embodiment, the coordinated control of the inverter control units 81 and 91 is performed using motor information. Configurations, operations, and effects not particularly described in the fourth embodiment are the same as those in the first embodiment described above. In the fourth embodiment, differences from the first embodiment will be mainly described.

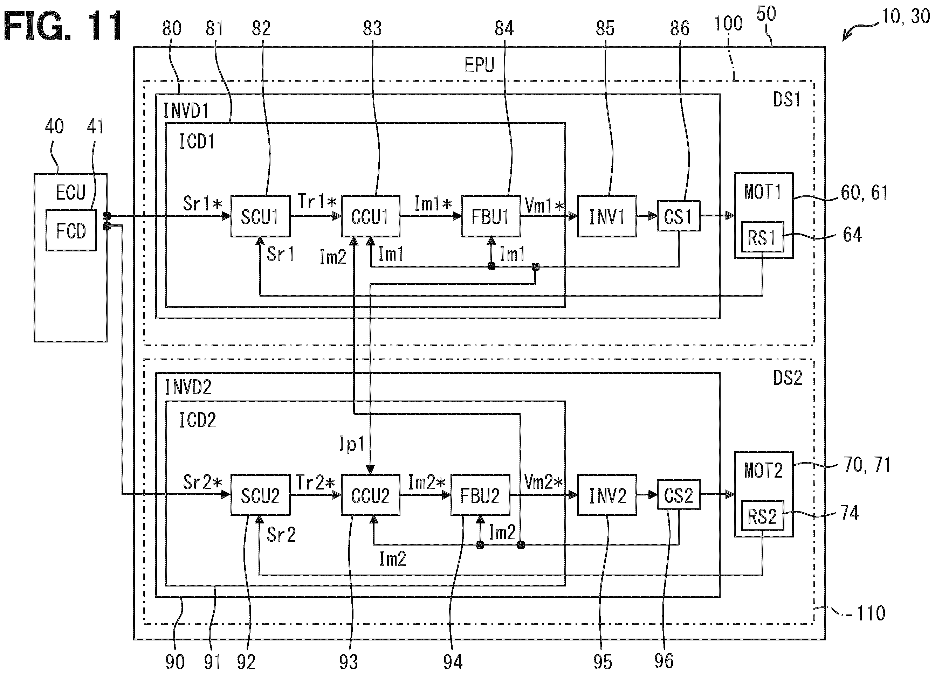

As shown in FIG. 11, the current instruction units 83, 93 calculate the instruction currents Im1*, Im2* using the motor currents Im1, Im2 and the instruction torques Tr1*, Tr2*. In the first inverter device 80, the first current sensor 86 outputs the first motor current Im1 to the first current control unit 84 and to the first current instruction unit 83. The first current instruction unit 83 calculates the first instruction current Im1* using the first motor current Im1 and the first instruction torque Tr1*. The first current instruction unit 83 calculates the first instruction current Im1* from the first instruction torque Tr1* and the first motor current Im1 by using a function or the like.

In the second inverter device 90, the second current sensor 96 outputs the second motor current Im2 to the second current instruction unit 93 and to the second current control unit 94. The second current instruction unit 93 calculates the second instruction current Im2* using the second motor current Im2 and the second instruction torque Tr2*. The second current instruction unit 93 calculates the second instruction current Im2* from the second instruction torque Tr2* and the second motor current Im2 using a function or the like.

The inverter control units 81 and 91 perform coordinated control using the motor currents Im1 and Im2 as motor information. The motor currents Im1 and Im2 used in such coordinated control are values acquired by detecting the states of the motors 61 and 71. The first inverter control unit 81 and the second inverter control unit 91 exchange the motor currents Im1, Im2 as motor information. The inverter control units 81, 91 perform coordinated control so that the first motor current Im1, which is an output of the first motor 61, and the second motor current Im2, which is an output of the second motor 71, become the same as each other. That is, the inverter control units 81, 91 perform coordinated control to minimize the difference between the first motor current Im1 and the second motor current Im2.

The first current sensor 86 outputs the first motor current Im1 to the second current instruction unit 93 and to the first current instruction unit 83. The first motor current Im1 is input from the first current sensor 86 via the EPU path 55 to the second current instruction unit 93. The second current sensor 96 outputs the second motor current Im2 to the first current instruction unit 83 and to the second current instruction unit 93. The second motor current Im2 is input from the second current sensor 96 via the EPU path 55 to the first current instruction unit 83.

The first current instruction unit 83 calculates the first instruction current Im1* using the second motor current Im2 in addition to the first instruction torque Tr1* and the first motor current Im1. The second current instruction unit 93 calculates the second instruction current Im2* using the first motor current Im1 in addition to the second instruction torque Tr2* and the second motor current Im2. In such manner, the motor currents Im1, Im2 are shared by the inverter control units 81, 91, so that the first instruction current Im1* and the second instruction current Im2* tend to become the same as each other.

For example, the first current instruction unit 83 calculates a first detected current using the first motor current Im1 and the second motor current Im2. For example, the first current instruction unit 83 calculates an average value of the first motor current Im1 and the second motor current Im2 as the first detected current. Then, the first current instruction unit 83 calculates a first calculated torque from the first detected current using a function or the like. The first calculated torque is an estimated value indicating the torque of the motors 61 and 71. The first current instruction unit 83 calculates the first instruction current Im1* by using the first calculated torque through feedback control or the like. For example, the first current instruction unit 83 calculates the first instruction current Im1* so that the first calculated torque becomes the first instruction torque Tr1*.

The second current instruction unit 93 calculates a second detected current using the first motor current Im1 and the second motor current Im2. For example, the second current instruction unit 93 calculates an average value of the first motor current Im1 and the second motor current Im2 as the second detected current. Then, the second current instruction unit 93 calculates a second calculated torque from the second detected current using a function or the like. The second calculated torque is an estimated value indicating the torque of the motors 61 and 71. The second current instruction unit 93 calculates the second instruction current Im2* by using the second calculated torque through feedback control or the like. For example, the second current instruction unit 93 calculates the second instruction current Im2* so that the second calculated torque becomes the second instruction torque Tr2*.

According to the present embodiment, the inverter control units 81, 91 control the motors 61, 71 using the first motor current Im1 and the second motor current Im2. In such a configuration, the first inverter control unit 81 and the second inverter control unit 91 can share the motor currents Im1, Im2 for controlling the motors 61, 71. Therefore, the method by which the first inverter control unit 81 controls the first motor 61 and the method by which the second inverter control unit 91 controls the second motor 71 can be standardized by the motor currents Im1 and Im2. That is, the inverter control units 81, 91 can adjust the outputs of the motors 61, 71 using the same control method by using the motor currents Im1, Im2.

According to the present embodiment, the first DS 100 and the second DS 110 exchange the first motor current Im1 and the second motor current Im2 as detection values indicating the output states of the motors 61, 71. Therefore, in the first DS 100, the accuracy of adjusting the first motor current Im1 can be improved by using the second motor current Im2. Similarly, in the second DS 110, the accuracy of adjusting the second motor current Im2 can be improved by using the first motor current Im1. In other words, the adjustment accuracy of the motor currents Im1, Im2 which are the outputs of the motors 61, 71 is improvable.

According to the present embodiment, the inverter control units 81, 91 control the motors 61, 71 so that the first motor current Im1 and the second motor current Im2 become the same as each other. In such a configuration, the first motor current Im1 and the second motor current Im2 are made equal, and thus the outputs of the first motor 61 and the second motor 71 are made equal. In such manner, the load on each of the first motor 61 and the second motor 71 is reducible by the motor currents Im1 and Im2.

<Fifth Embodiment>

In the fourth embodiment, the coordinated control of the inverter control units 81 and 91 is performed using the detection values as the motor information. In contrast to the above, in the fifth embodiment, the coordinated control of the inverter control units 81 and 91 is performed using an estimated value. Configurations, operations, and effects which are not particularly described in the fifth embodiment are the same as those in the fourth embodiment. In the fifth embodiment, differences from the fourth embodiment will be mainly described.

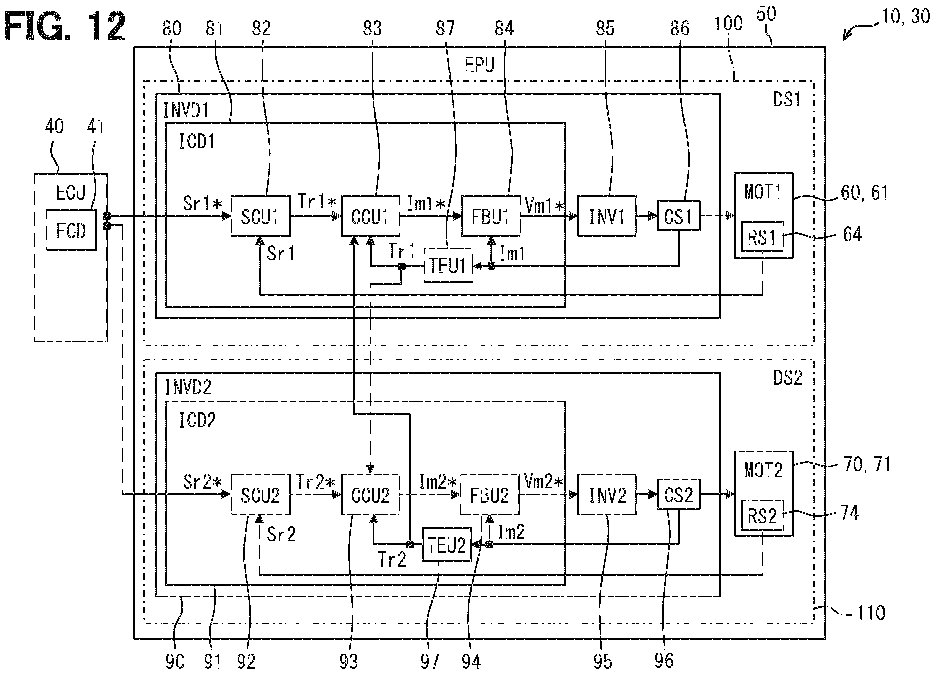

As shown in FIG. 12, the first inverter control unit 81 has a first torque estimation unit 87. The second inverter control unit 91 has a second torque estimation unit 97. In FIG. 12, the first torque estimation unit 87 is illustrated as TEU1, and the second torque estimation unit 97 is illustrated as TEU2.

In the first inverter device 80, the first current sensor 86 outputs the first motor current Im1 to the first current control unit 84 and to the first torque estimation unit 87. The first torque estimation unit 87 calculates the first motor torque Tr1 using the first motor current Im1. The first motor torque Tr1 is an estimated value of a torque of the first motor 61. The first motor torque Tr1 is information indicating a state of the first motor 61, and corresponds to first motor information. The first torque estimation unit 87 calculates the first motor torque Tr1 from the first motor current Im1 using a predetermined function, arithmetic expression, map, or the like. The first torque estimation unit 87 outputs the first motor torque Tr1 to the first current instruction unit 83 and to the second current instruction unit 93. The first current instruction unit 83 and the first current control unit 84 acquire the first motor torque Tr1. The first current instruction unit 83 and the first current control unit 84 correspond to a first information acquisition unit.

In the second inverter device 90, the second current sensor 96 outputs the second motor current Im2 to the second current control unit 94 and to the second torque estimation unit 97. The second torque estimation unit 97 calculates the second motor torque Tr2 using the second motor current Im2. The second motor torque Tr2 is an estimated value of a torque of the second motor 71. The second motor torque Tr2 is information indicating a state of the second motor 71, and corresponds to second motor information. The second torque estimation unit 97 calculates the second motor torque Tr2 from the second motor current Im2 using a predetermined function, arithmetic expression, map, or the like. The second torque estimation unit 97 outputs the second motor torque Tr2 to the first current instruction unit 83 and the second current instruction unit 93. The second current instruction unit 93 and the second current control unit 94 acquire the second motor torque Tr2. The second current instruction unit 93 and the second current control unit 94 correspond to a second information acquisition unit.

The inverter control units 81 and 91 perform coordinated control using the motor torques Tr1 and Tr2 as motor information. The motor torques Tr1 and Tr2 used in such coordinated control are estimated values acquired by estimating the states of the motors 61 and 71. The first inverter control unit 81 and the second inverter control unit 91 exchange the motor torques Tr1 and Tr2 as motor information. The inverter control units 81 and 91 perform coordinated control so that the first motor torque Tr1 which is an output of the first motor 61 and the second motor torque Tr2 which is an output of the second motor 71 become the same as each other. That is, the inverter control units 81, 91 perform the coordinated control to minimize the difference between the first motor torque Tr1 and the second motor torque Tr2.

The first current instruction unit 83 calculates the first instruction current Im1* using, in addition to the first instruction torque Tr1*, the first motor torque Tr1 and the second motor torque Tr2. The second current instruction unit 93 calculates the second instruction current Im2* using, in addition to the second instruction torque Tr2*, the first motor torque Tr1 and the second motor torque Tr2. In such manner, the motor torques Tr1, Tr2 are shared by the inverter control units 81, 91, so that the first instruction current Im1* and the second instruction current Im2* tend to become the same as each other.

For example, the first current instruction unit 83 calculates a first estimated torque using the first motor torque Tr1 and the second motor torque Tr2. For example, the first current instruction unit 83 calculates an average value of the first motor torque Tr1 and the second motor torque Tr2 as the first estimated torque. Then, the first current instruction unit 83 calculates the first instruction current Im1* by using the first estimated torque through feedback control or the like. For example, the first current instruction unit 83 calculates the first instruction current Im1* so that the first estimated torque becomes the first instruction torque Tr1*.

The second current instruction unit 93 calculates a second estimated torque using the first motor torque Tr1 and the second motor torque Tr2. For example, the second current instruction unit 93 calculates an average value of the first motor torque Tr1 and the second motor torque Tr2 as the second estimated torque. Then, the second current instruction unit 93 calculates the second instruction current Im2* by using the second estimated torque through feedback control or the like. For example, the second current instruction unit 93 calculates the second instruction current Im2* so that the second estimated torque becomes the second instruction torque Tr2*.

According to the present embodiment, the inverter control units 81, 91 control the motors 61, 71 using the first motor torque Tr1 and the second motor torque Tr2. In such a configuration, the first inverter control unit 81 and the second inverter control unit 91 can share the motor torques Tr1, Tr2 for controlling the motors 61, 71. Therefore, the method by which the first inverter control unit 81 controls the first motor 61 and the method by which the second inverter control unit 91 controls the second motor 71 can be standardized by the motor torques Tr1 and Tr2. That is, the inverter control units 81 and 91 can adjust the outputs of the motors 61 and 71 using the same control method by using the motor torques Tr1 and Tr2.

In the present embodiment, the first DS 100 and the second DS 110 exchange the first motor torque Tr1 and the second motor torque Tr2 as estimated values indicating the output states of the motors 61, 71. Therefore, in the first DS 100, the accuracy of adjusting the first motor torque Tr1 is improvable by using the second motor torque Tr2. Similarly, in the second DS 110, the accuracy of adjusting the second motor torque Tr2 is improvable by using the first motor torque Tr1. In other words, the adjustment accuracy of the motor torques Tr1, Tr2, which are the outputs of the motors 61, 71, is improvable.

In the inverter control units 81, 91, the motor torques Tr1, Tr2 are estimated, so there is no need to detect the motor torques Tr1, Tr2. In other words, there is no need to provide the DSs 100 and 110 with sensors for detecting the motor torques Tr1 and Tr2. By eliminating sensors for detecting a torque, the weight and size of the DSs 100 and 110 are reducible.

<Sixth Embodiment>

In the first embodiment, the inverter control units 81 and 91 calculate the instruction torques Tr1* and Tr2* as instruction values for the torques of the motors 61 and 71. In contrast to the above, in the sixth embodiment, the integration ECU 40 calculates the instruction values for the torques of the motors 61 and 71. Configurations, operations, and effects not particularly described in the sixth embodiment are the same as those of the first embodiment. In the sixth embodiment, differences from the first embodiment will be mainly described.

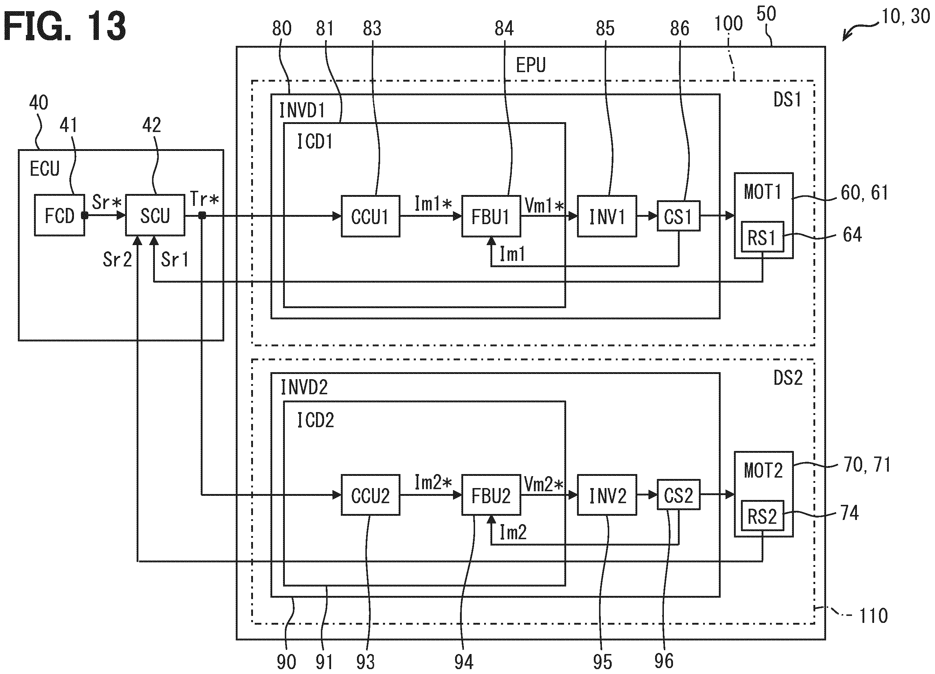

As shown in FIG. 13, the integration ECU 40 has an integration speed controller 42 in addition to the integration controller 41. The integration controller 41 does not calculate the first instruction speed Sr1* and the second instruction speed Sr2* as in the first embodiment, but calculates an integration instruction speed Sr*. The integration instruction speed Sr* is a common instruction speed for the first motor 61 and the second motor 71. The integration controller 41 calculates the integration instruction speed Sr* in accordance with a manner with which the pilot operates a controller or the like. The integration instruction speed Sr* is input to the integration speed controller 42. In FIG. 13, the integration speed controller 42 is illustrated as SCU.

In the present embodiment, the integration ECU 40 has the integration speed controller 42, whereas the inverter control units 81, 91 do not have the speed control units 82, 92. The rotation sensors 64, 74 output the motor speeds Sr1, Sr2 to the integration speed controller 42. The motor speeds Sr1, Sr2 are input to the integration speed controller 42 from the rotation sensors 64, 74 via the integration paths 33A, 33B.

The integration speed controller 42 performs speed control by feedback control or the like. The integration speed controller 42 controls the rotation speeds of the motors 61 and 71 as speed control. The integration speed controller 42 calculates an integration instruction torque Tr*. The integration instruction torque Tr* is a common instruction value for the torques of the motors 61 and 71. The integration instruction torque Tr* is a common instruction output for adjusting the outputs of the motors 61 and 71.

The integration speed controller 42 calculates the integration instruction torque Tr* using the integration instruction speed Sr* and the motor speeds Sr1, Sr2. The integration speed controller 42 calculates a coordinated speed using the first motor speed Sr1 and the second motor speed Sr2. For example, the integration speed controller 42 calculates an average value of the first motor speed Sr1 and the second motor speed Sr2 as the coordinated speed. Then, the integration speed controller 42 calculates the integration instruction torque Tr* by using the coordinated speed through feedback control or the like. For example, the integration speed controller 42 calculates the integration instruction torque Tr* so that the coordinated speed becomes the integration instruction speed Sr*.

The integration speed controller 42 outputs the integration instruction torque Tr* to each of the first current instruction unit 83 and the second current instruction unit 93. The integration instruction torque Tr* is input from the integration ECU 40 to the first inverter control unit 81 via the first integration path 33A. Further, the integration instruction torque Tr* is input from the integration ECU 40 to the second inverter control unit 91 via the second integration path 33B. The first current instruction unit 83 calculates the first instruction current Im1* by using the integration instruction torque Tr*. The second current instruction unit 93 calculates the second instruction current Im2* by using the integration instruction torque Tr*.

In the present embodiment, the integration instruction torque Tr* is used for both of (a) the output adjustment of the first motor 61 and (b) the output adjustment of the second motor 71 as the coordinated control of the inverter control units 81 and 91. The integration instruction torque Tr* is an instruction value common to the first inverter control unit 81 and the second inverter control unit 91, and corresponds to a common instruction. By using the integration instruction torque Tr* for coordinated control in the above-described manner, the output of the first motor 61 and the output of the second motor 71 are easily equalized.

According to the present embodiment, the integration instruction torque Tr* is used as a common instruction value for both of the output adjustment of the first motor 61 and the output adjustment of the second motor 71. In such a configuration, since the instruction currents Im1* and Im2* are calculated using the integration instruction torque Tr*, the first instruction current Im1* and the second instruction current Im2* tend to have the same value. Therefore, it is easier to equalize the output values of the first motor 61 and the second motor 71 compared to a configuration in which, for example, the parameters used to calculate the first instruction current Im1* and the parameters used to calculate the second instruction current Im2* are different.

In the present embodiment, the integration ECU 40 uses the same integration instruction torque Tr* as the instruction torque for both of the first motor 61 and the second motor 71. In such a configuration, the integration ECU 40 needs to output the same integration instruction torque Tr* to both of the first inverter control unit 81 and the second inverter control unit 91. Therefore, by using the integration instruction torque Tr*, both of (a) simplifying the control of the motors 61, 71 by the integration ECU 40 and (b) improvement of the control accuracy of the motors 61, 71 are achievable. Further, in such a configuration, there is no need to exchange the instruction torque between the first inverter control unit 81 and the second inverter control unit 91. Therefore, the interface for exchanging the instruction torque between the first inverter control unit 81 and the second inverter control unit 91 can be eliminated.

<Seventh Embodiment>

In the sixth embodiment, the integration ECU 40 controls the outputs of the motors 61, 71 in accordance with the motor speeds Sr1, Sr2 indicating the rotation states of the motors 61, 71. In contrast to the above, in the seventh embodiment, the integration ECU 40 controls the outputs of the motors 61, 71 in accordance with the rotation state of the EPU shaft 51. Configurations, operations, and effects not particularly described in the seventh embodiment are the same as those of the sixth embodiment. In the seventh embodiment, the differences from the sixth embodiment will be mainly described.

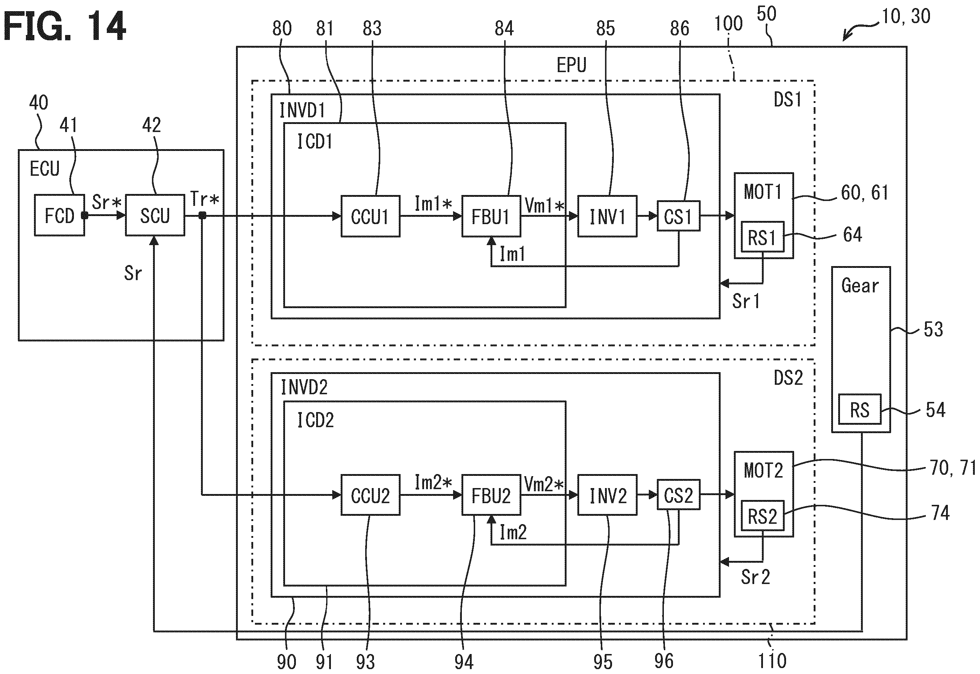

As shown in FIG. 14, the EPU 50 has an EPU rotation sensor 54. The EPU rotation sensor 54 detects the rotation speed of the EPU shaft 51 as an EPU rotation speed. The EPU rotation sensor 54 includes, for example, an encoder, a resolver and the like. The EPU rotation sensor 54 is provided on the gear 53, for example. The EPU rotation sensor 54 is communicably connected to the integration ECU 40, and outputs a detection signal to the integration ECU 40. The EPU rotation sensor 54 is connected to the integration ECU 40 via the integration path 33. In FIG. 14, the EPU rotation sensor 54 is illustrated as RS.

The EPU rotation sensor 54 detects a state of the EPU 50 by detecting the EPU rotation speed. The EPU rotation sensor 54 outputs an EPU speed Sr to the integration ECU 40. The EPU speed Sr is a detection result of the EPU rotation sensor 54, and is a detection value indicating the rotation speed of the EPU shaft 51. The EPU speed Sr is information indicating a state of the EPU 50 and the motors 61 and 71. The EPU speed Sr is included in the detection signal of the EPU rotation sensor 54. The EPU speed Sr is input from the EPU rotation sensor 54 to the integration speed controller 42 via the integration path 33.

The integration speed controller 42 calculates the integration instruction torque Tr* using the integration instruction speed Sr* and the EPU speed Sr. For example, the integration speed controller 42 calculates the integration instruction torque Tr* so that the EPU speed Sr becomes the integration instruction speed Sr*.

<Eighth Embodiment>

In the eighth embodiment, average values are calculated for the instruction values of the instruction torques Tr1*, Tr2*, and the like. Configurations, operations, and effects not particularly described in the eighth embodiment are the same as those of the first embodiment. In the eighth embodiment, differences from the first embodiment described above will be mainly described.

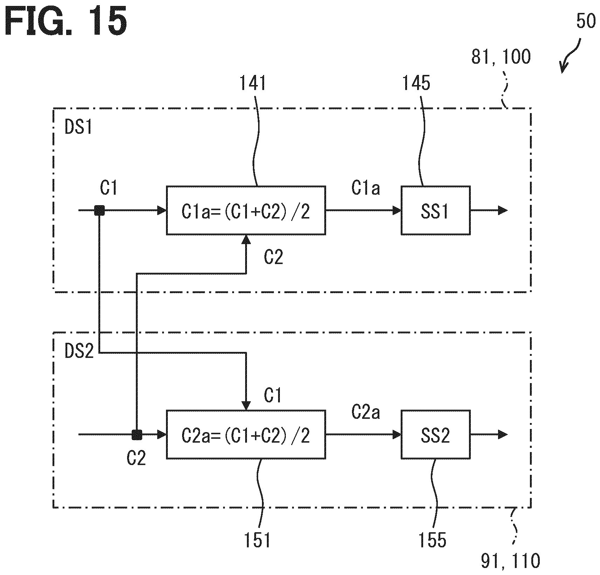

As shown in FIG. 15, the first inverter control unit 81 includes a first averaging unit 141 and a first signal unit 145. The first averaging unit 141 receives a first instruction value C1. The second inverter control unit 91 includes a second averaging unit 151 and a second signal unit 155. The second averaging unit 151 receives a second instruction value C2. The first instruction value C1 and the second instruction value C2 are, for example, the first instruction torque Tr1* and the second instruction torque Tr2* in the first embodiment. The first averaging unit 141 and the second averaging unit 151 are, for example, the first current instruction unit 83 and the second current instruction unit 93.

In the inverter control units 81 and 91, coordinated control is performed using the first instruction value C1 and the second instruction value C2. In the first inverter control unit 81, in addition to the first instruction value C1, the second instruction value C2 is input to the first averaging unit 141. The first averaging unit 141 calculates an average value of the first instruction value C1 and the second instruction value C2 as a first averaged instruction C1a. The first averaging unit 141 outputs the first averaged instruction C1a to the first signal unit 145. The first averaged instruction C1a is, for example, the first instruction current Im1* in the first embodiment. For the first averaged instruction C1a, an equation 3 holds true.

$$C1a = (C1 + C2) / 2 \qquad \ldots \ldots \qquad \text{Equation 3}$$

In the equation 3, the contribution degree of the first instruction value C1 to the first averaged instruction C1a is the same as that of the second instruction value C2. That is, the ratio at which the first instruction value C1 contributes to the first averaged instruction C1a is the same as the ratio at which the second instruction value C2 contributes to the first averaged instruction C1a. Note that the first averaged instruction C1a corresponds to an averaged instruction, and the first averaging unit 141 corresponds to an instruction averaging unit.

The first signal unit 145 calculates a first motor instruction using the first averaged instruction C1a. The first signal unit 145 receives the first averaged instruction C1a. The first signal unit 145 calculates the first motor instruction from the first averaged instruction C1a using a predetermined function, arithmetic expression, map, or the like. The first signal unit 145 outputs the first motor instruction to the first inverter circuit 85, for example. The first motor instruction and first signal unit 145 are, for example, the first instruction voltage Vm1* and the first current control unit 84.

In the second inverter control unit 91, the second instruction value C2 is input to the second averaging unit 151 in addition to the first instruction value C1. The second averaging unit 151 calculates an average value of the first instruction value C1 and the second instruction value C2 as a second averaged instruction C2a. The second averaging unit 151 outputs the second averaged instruction C2a to the second signal unit 155. The second averaged instruction C2a is, for example, the second instruction current Im2* in the first embodiment. For the second averaged instruction C2a, Equation 4 holds true.

$$C2a = (C1 + C2) / 2 \qquad \ldots \ldots \qquad \text{Equation 4}$$

In the equation 4, the contribution degree of the first instruction value C1 to the second averaged instruction C2a is the same as that of the second instruction value C2. That is, the ratio at which the first instruction value C1 contributes to the second averaged instruction C2a is the same as the ratio at which the second instruction value C2 contributes to the second averaged instruction C2a. Note that the second averaged instruction C2a corresponds to an averaged instruction, and the second averaging unit 151 corresponds to an instruction averaging unit.

The second signal unit 155 calculates a second motor instruction using the second averaged instruction C2a. The second signal unit 155 receives the second averaged instruction C2a. The second signal unit 155 calculates the second motor instruction from the second averaged instruction C2a using a predetermined function, arithmetic expression, map, or the like. The second signal unit 155 outputs the second motor instruction to, for example, the second inverter circuit 95. The second motor instruction and the second signal unit 155 are, for example, the second instruction voltage Vm2* and a second the control unit 94.

In FIG. 15, the equation 3 is illustrated in the first averaging unit 141, and the equation 4 is illustrated in the second averaging unit 151. Also, the first signal unit 145 is illustrated as SS1, and the second signal unit 155 is illustrated as SS2.

According to the present embodiment, the averaged instructions C1a, C2a used by the inverter control units 81, 91 to control the motors 61, 71 are average values of the instruction values C1, C2. In such a configuration, the first instruction value C1 and the second instruction value C2 can have the same contribution degree to the output of the motors 61, 71. By making the contribution degree of the first instruction value C1 and the contribution degree of the second instruction value C2 equal in such manner, the output of the first motor 61 and the output of the second motor 71 tend to become equal.

For example, when the output of the first motor 61 is greater than the output of the second motor 71 and the contribution degree of the first instruction value C1 is made greater than the contribution degree of the second instruction value C2, there is a concern that the output of the first motor 61 will become even greater. Further, in such state, when the contribution degree of the first instruction value C1 is made smaller than the contribution degree of the second instruction value C2, there is a concern that the output of the second motor 71 will become even smaller. In either case, the difference in the contribution degrees between the instruction values C1 and C2 increases the output difference among the motors 61 and 71, thereby increasing the load on the motors 61 and 71.

The first averaged instruction C1a and the second averaged instruction C2a are both average values of the instruction values C1 and C2, and therefore are the same value. In such manner, since the first averaged instruction C1a and the second averaged instruction C2a are the same, the outputs of the motor speeds Sr1, Sr2, and the like of the motors 61, 71 tend to be the same. Therefore, in the first DS 100 and the second DS 110, it is possible to optimize the output performance and thermal design by the averaged instructions C1a and C2a, respectively.

<Ninth Embodiment>

In the ninth embodiment, the instruction values of the instruction torques Tr1*, Tr2*, and the like are corrected using the detection values of the motor currents Im1, Im2, and the like. Configurations, operations, and effects of the ninth embodiment that are not specifically described are similar to those of the fourth and eighth embodiments. In the ninth embodiment, the differences from the fourth and eighth embodiments will be mainly described.

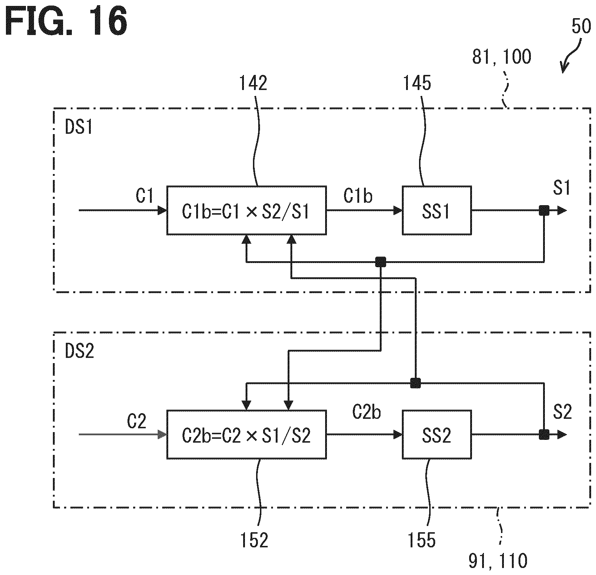

As shown in FIG. 16, the first inverter control unit 81 includes a first ratio unit 142 and the first signal unit 145. The first ratio unit 142 receives the first instruction value C1 and a first detection value S1. The second inverter control unit 91 has a second ratio unit 152 and the second signal unit 155. The second ratio unit 152 receives the second instruction value C2 and a second detection value S2. The first detection value S1 and the second detection value S2 are, for example, the first motor current Im1 and the second motor current Im2 in the fourth embodiment. The first ratio unit 142 and the second ratio unit 152 are, for example, the first current instruction unit 83 and the second current instruction unit 93. The first detection value S1 and the second detection value S2 are control amounts controlled by the inverter control units 81 and 91.

In the inverter control units 81 and 91, coordinated control is performed using the first detection value S1 and the second detection value S2. In the first inverter control unit 81, the second motor current Im2 is input to the first ratio unit 142 in addition to the first motor current Im1. The first ratio unit 142 calculates a first ratio instruction C1b from the first instruction value C1 using the ratio between the first motor current Im1 and the second motor current Im2. The first ratio unit 142 outputs the first ratio instruction C1b to the first signal unit 145. The first ratio instruction C1b is a value acquired by correcting the first instruction value C1 based on the ratio between the motor currents Im1 and Im2. For example, the first ratio unit 142 calculates the first ratio instruction C1b by multiplying the first instruction value C1 by the ratio of the second motor current Im2 to the first motor current Im1. The first ratio instruction C1b is, for example, the first instruction current Im1* in the fourth embodiment. For the first ratio instruction C1b, an equation 5 holds true.

$$C1b = C1 \times S2 / S1 \qquad \ldots \ldots \qquad \text{Equation 5}$$

In the equation 5, the contribution degree of the first instruction value C1 to the first ratio instruction C1b changes according to the ratio of the second motor current Im2 to the first motor current Im1. For example, the greater the second motor current Im2 is relative to the first motor current Im1, the greater the first ratio instruction C1b is set relative to the first instruction value C1. The first signal unit 145 calculates the first motor instruction using the first ratio instruction C1b.

In the second inverter control unit 91, the first motor current Im1 is input to the second ratio unit 152 in addition to the second motor current Im2. The second ratio unit 152 calculates a second ratio instruction C2b from the second instruction value C2 using the ratio between the first motor current Im1 and the second motor current Im2. The second ratio unit 152 outputs the second ratio instruction C2b to the second signal unit 155. The second ratio instruction C2b is a value acquired by correcting the second instruction value C2 based on the ratio between the motor currents Im1 and Im2. For example, the second ratio unit 152 calculates the second ratio instruction C2b by multiplying the second instruction value C2 by the ratio of the first motor current Im1 to the second motor current Im2. The second ratio instruction C2b is, for example, the second instruction current Im2* in the fourth embodiment. For the second ratio instruction C2b, an equation 6 holds true.

$$C2b = C2 \times S1 / S2 \qquad \ldots \ldots \qquad \text{Equation 6}$$

In the equation 6, the contribution degree of the second instruction value C2 to the second ratio instruction C2b changes according to the ratio of the first motor current Im1 to the second motor current Im2. For example, the greater the first motor current Im1 is relative to the second motor current Im2, the greater the second ratio instruction C2b is set relative to the second instruction value C2. The second signal unit 155 calculates the second motor instruction using the second ratio instruction C2b.

<Tenth Embodiment>

In the tenth embodiment, feedback control is performed so that the detection values of the motor currents Im1, Im2, and the like of the first motor 61 and the second motor 71 are the same. Configurations, operations, and effects of the tenth embodiment that are not specifically described are similar to those of the first and ninth embodiments. In the tenth embodiment, the differences from the first and ninth embodiments will be mainly described.

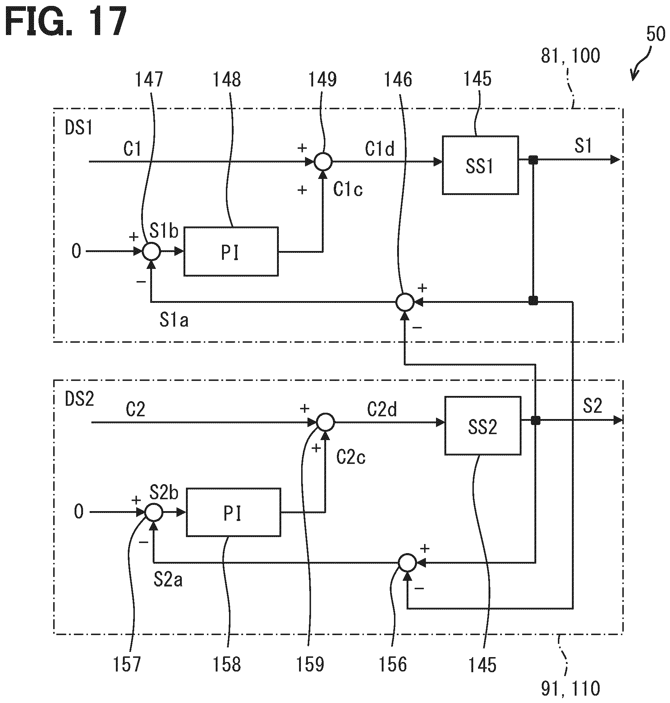

As shown in FIG. 17, the first inverter control unit 81 has the first signal unit 145, a first detection difference unit 146, a first zero difference unit 147, a first calculation unit 148 and a first adder 149. The second inverter control unit 91 has the second signal unit 155, a second detection difference unit 156, a second zero difference unit 157, a second calculation unit 158, and a second adder 159.

In the inverter control units 81 and 91, coordinated control is performed using the first detection value S1 and the second detection value S2, similarly to the ninth embodiment. In the first inverter control unit 81, the first detection value S1 and the second detection value S2 are input to the first detection difference unit 146. The second detection value S2 is input from the second DS 110 to the first DS 100 via the EPU path 55. The first detection difference unit 146 calculates a difference between the first detection value S1 and the second detection value S2 as a first detection difference value S1a. The first zero difference unit 147 calculates a difference between zero and the first detection difference value S1a as a first zero difference value S1b. The first calculation unit 148 calculates a first calculation value C1c by feedback control such as PI control or the like. The first calculation unit 148 calculates the first calculation value C1c so that the first zero difference value S1b becomes zero, for example. The first adder 149 adds the first instruction value C1 and the first calculation value C1c to calculate a first addition value C1d. The first signal unit 145 calculates the first motor instruction using the first addition value C1d.

In the second inverter control unit 91, the first detection value S1 and the second detection value S2 are input to the second detection difference unit 156. The first detection value S1 is input from the first DS 100 to the second DS 110 via the EPU path 55. The second detection difference unit 156 calculates a difference between the first detection value S1 and the second detection value S2 as a second detection difference value S2a. The second zero difference unit 157 calculates a difference between zero and the second detection difference value S2a as a second zero difference value S2b. The second calculation unit 158 calculates a second calculation value C2c by feedback control such as PI control or the like. The second calculation unit 158 calculates the second calculation value C2c so that the second zero difference value S2b becomes zero, for example. The second adder 159 adds the second instruction value C2 and the second calculation value C2c to calculate a second addition value C2d. The second signal unit 155 calculates a second motor instruction using the second addition value C2d.

<Eleventh Embodiment>

In the eleventh embodiment, the integration ECU 40 selectively performs, as the coordinated control, a first coordinated control and a second coordinated control. Configurations, operations, and effects not particularly described in the eleventh embodiment are the same as those in the first embodiment described above. In the eleventh embodiment, the differences from the first embodiment will be mainly described.

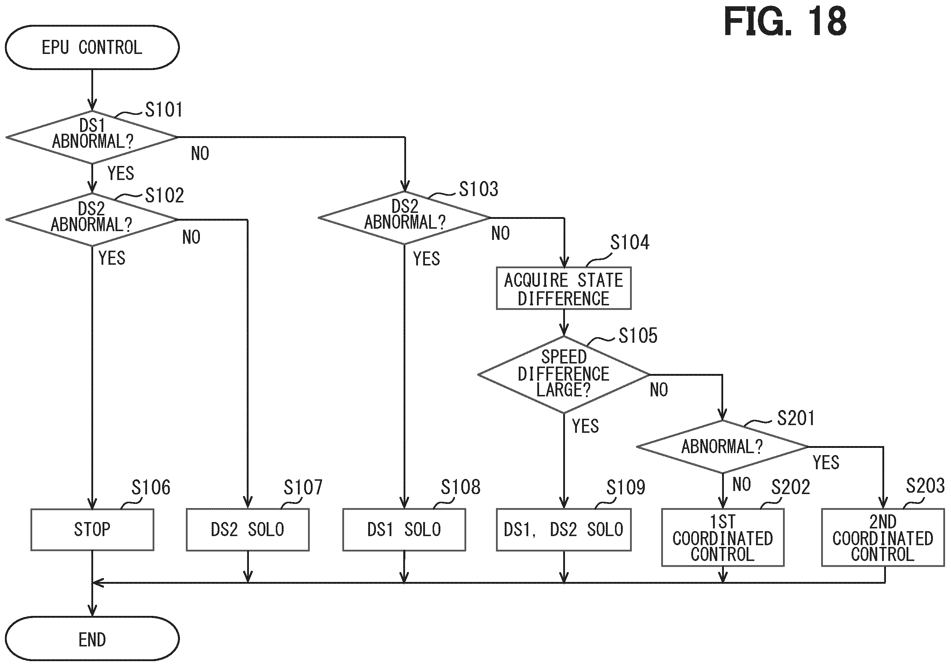

The flight control processing performed by the integration ECU 40 will be described with reference to the flowchart of FIG. 18. The integration ECU 40 performs the processes of steps S101 to S109 in the same manner as in the first embodiment.

In the present embodiment, if it is determined in step S105 that the speed difference is not too large, the integration ECU 40 proceeds to step S201. In step S201, the integration ECU 40 determines whether or not a DS glitch has occurred. The DS glitch is a glitch that occurs in the DSs 100, 110, and is a change that occurs in the DSs 100, 110 to an extent that it is not recognized as abnormality. For example, the integration ECU 40 determines whether or not the DS state difference is within a predetermined glitch range. Since the determination as to whether the speed difference is too large has been made in step S105, in step S201 it is determined whether a DS state difference other than the speed difference is included in the glitch range. When the DS state is included in the glitch range, the integration ECU 40 determines that a DS glitch has occurred. When the DS state difference other than the speed difference is not included in the glitch range, the integration ECU 40 determines that no DS glitch has occurred.

The DS glitch includes temperature glitch, deterioration glitch, partial glitch, and the like. An example of temperature glitch occurring is when the DS temperature difference reaches the glitch range. The DS temperature difference is a difference between the temperature of the first DS 100 and the temperature of the second DS 110. The temperatures of the DSs 100 and 110 are detected as the temperatures of thermally weak portions or components, such as the thermally weakest portion. The temperature of the DSs 100, 110 is, for example, the motor temperature. When the DS temperature difference is a predetermined difference abnormality, the integration ECU 40 determines that the DS temperature difference is not within the glitch range. Note that, as to the temperature of the DSs 100, 110, a cooling temperature may be taken. The cooling temperature includes a coolant temperature of the coolers 101 and 111 and the temperature of a cooling fin.

An example of deterioration glitch occurring is when the deterioration state of the DSs 100 and 110 reaches the glitch range, or similar situation. The integration ECU 40 acquires the deterioration state of the DSs 100 and 110 using a deterioration index. The integration ECU 40 calculates a deterioration index as an index indicating the deterioration state of the DSs 100 and 110, for example, and acquires the deterioration state using such a deterioration index. The integration ECU 40 calculates the deterioration index using at least one of the electric current, voltage, and rotation speed of the motors 61 and 71, for example. Further, the integration ECU 40 uses control instructions such as the instruction torques Tr1* and Tr2* to calculate the deterioration index. The integration ECU 40 may use the temperatures of the DSs 100 and 110 or the degree of increase in the temperatures of the DSs 100 and 110 to calculate the deterioration index. The integration ECU 40 may use the number of times that an abnormality is detected in the DSs 100 and 110 in steps S101 to S103 or a abnormality detection frequency to calculate the deterioration index. The integration ECU 40 may use a resistance value of the power path 32, loss occurring in the power path 32, and an efficiency of the motors 61, 71 to calculate the deterioration index.

An example of the partial glitch occurring is when a partial glitch occurs in the DSs 100 and 110 within a range in which the DSs 100 and 110 are drivable. The partial glitch may be a partial failure of the DSs 100 and 110, causing a partial loss of the output performance of the DSs 100 and 110 or the like. The partial failure of the DSs 100 and 110 includes one-phase failure and power supply limitation. A one-phase failure occurs when one of the multiple phases of the motors 61 and 71 fails. The power supply limitation occurs when an abnormality occurs in the battery 31 and the input power input from the battery 31 to the DSs 100 and 110 is limited.

If no DS glitch has occurred, the integration ECU 40 proceeds to step S202, and performs the first coordinated control. If a DS glitch occurs, the integration ECU 40 proceeds to step S203, and performs the second coordinated control. In step S201, the integration ECU 40 determines whether the inverter control units 81, 91 are to be coordinated through the first coordinated control or the second coordinated control. The function of executing the process of step S201 in the integration ECU 40 corresponds to an execution determination unit.

In step S202, the first coordinated control is the same as the coordinated control performed in step S110 in the first embodiment. In the first coordinated control, the inverter control units 81 and 91 perform motor control so that the output of the first motor 61 and the output of the second motor 71 become the same as each other. The function of executing the process of step S202 in the integration ECU 40 corresponds to a first execution unit.

In step S203, in the second coordinated control, the inverter control units 81 and 91 perform motor control so that an output difference occurs between the output of the first motor 61 and the output of the second motor 71. The function of executing the process of step S203 in the integration ECU 40 corresponds to a second execution unit.

In the second coordinated control, the ratio of the contribution degrees is set so that the first state-related value and the second state-related value have different contribution degrees regarding the output of the motors 61, 71. In the second coordinated control, the ratio of the contribution degrees is adjusted, thereby controlling the output distribution of the motors 61, 71. When the instruction output is used as the state-related value, the ratio of the contribution degrees is set so that the contribution degree to the output of the motors 61, 71 differs between the first instruction output and the second instruction output.

The ratio of the contribution degrees is set according to the magnitude relationship between the first state-related value and the second state-related value. For example, in a configuration in which the temperatures of DSs 100, 110 are used as the state-related values, when the DS temperature difference reaches the glitch range, the ratio of contribution degrees is set so that the motor output of the DSs 100, 110 with the higher temperature decreases and the motor output of the DSs 100, 110 with the lower temperature increases. Further, the ratio of the contribution degrees is set so that the greater the DS temperature difference is, the greater the difference in the motor output becomes.

Further, in a configuration in which the deterioration indexes of DSs 100, 110 are used as the state-related values, when the deterioration state of DSs 100, 110 reaches the glitch range, the ratio of the contribution degrees is set so that the motor output of more deteriorated one of the DSs 100, 110 becomes smaller. For the one of the DSs 100 and 110 which is less deteriorated, the ratio of the contribution degree is set so that the motor output becomes greater. Further, the ratio of the contribution degrees is set so that the greater the difference in the deterioration state is, the greater the difference in the motor output becomes.

In the second coordinated control, the ratio of the contribution degrees is set in consideration of the operation modes of the DSs 100 and 110. For example, when the operation mode is the normal mode, the ratio of the contribution degrees is set so that the output difference among the motors 61 and 71 is minimized. When the operation mode is the start-up mode, the ratio of the contribution degrees is set so that the output of the leading motor out of the motors 61 and 71 is smaller and the output of the lagging motor is greater.

In the second coordinated control, the distribution of the control amount between the first DS 100 and the second DS 110 is adjusted. That is, the outputs of the motors 61, 71 are adjusted based on the state-related values exchanged between the first inverter control unit 81 and the second inverter control unit 91. For example, in the second coordinated control, it is preferable that the coordinated torques Tr1C, Tr2C are calculated from the instruction torques Tr1*, Tr2* using the ratio of the contribution degrees, rather than being set as an average value of the instruction torques Tr1*, Tr2*. For example, the coordinated torques Tr1C and Tr2C are calculated by multiplying the sum of the first instruction torque Tr1* and the second instruction torque Tr2* by the respective ratios of the contribution degree. As a result, the first coordinated torque Tr1C and the second coordinated torque Tr2C have different values, and the distribution of the motor currents Im1, Im2, which are the control amounts, is adjusted.

Further, in a configuration in which the first inverter control unit 81 and the second inverter control unit 91 exchange the detection values S1, S2 as in the above-described ninth embodiment, it is preferable that ratio instructions C1b, C2b are calculated from the instruction values C1, C2 using the respective ratios of the contribution degrees. For example, the ratio instructions C1b and C2b are calculated by multiplying the sum of the first detection value S1 and the second detection value S2 by the respective ratios of the contribution degrees. As a result, the first ratio instruction C1b and the second ratio instruction C2b have different values, and the distribution of the detection values S1, S2, which are the control amounts, is adjusted.

According to the present embodiment, the integration ECU 40 is capable of selectively performing the first coordinated control and the second coordinated control. In such a configuration, it is possible to selectively use a control in which the outputs of the motors 61, 71 are equalized and a control in which the output difference is generated among the motors 61, 71. Therefore, by coordinating the motors 61 and 71 in accordance with the states of the motors 61 and 71, the load on the motors 61 and 71 is reducible.

According to the present embodiment, in the second coordinated control, the output difference among the motors 61 and 71 is adjusted in accordance with the states of the motors 61 and 71. In such a configuration, the output difference among the motors 61, 71 is adjusted so that the output of one of the motors 61, 71 is reduced and the output of the other is increased, thereby reducing the load on the motors 61, 71.

In the present embodiment, the distribution of the control amount between the first DS 100 and the second DS 110 is adjusted according to the state-related value. For example, when an overheated state occurs in DSs 100, 110, the distribution of (a) instruction outputs such as the instruction torques Tr1*, Tr2* and (b) motor information such as the motor currents Im1, Im2 is adjusted according to the state-related value including the temperature information of DSs 100, 110. In such manner, the overheated state of the DSs 100 and 110 can be resolved quickly. Further, when the deterioration of the DSs 100 and 110 progresses, the instruction output and the distribution of the motor information are adjusted according to the state-related values including the deterioration state of the DSs 100 and 110. In such manner, the load on the motors 61 and 71 is reducible so that the deterioration of the DSs 100 and 110 does not progress as easily.

In the present embodiment, the distribution of the control amount between the first DS 100 and the second DS 110 is adjusted according to the operation modes of the DSs 100 and 110. In such a configuration, the distribution of amounts that depends on the operation mode can be optimized. Thus, more effective design optimization of the EPU 50 is achievable. For example, in the EPU 50, it is possible to optimize the configuration relating to thermal design, the configuration for ensuring operation time in the event of an abnormality, and the configuration relating to suppression of deterioration.

In the present embodiment, the outputs of the motors 61 and 71 are adjusted in accordance with the difference between the first state-related value related to the first DS 100 and the second state-related value related to the second DS 110. When the difference between the state-related values has a large effect on the DSs 100 and 110, more effective design optimization is possible by not equalizing the outputs of the motors 61 and 71. For example, by performing coordinated control so as to generate an output difference among the motors 61, 71, it is possible to optimize the thermal design configuration, the configuration that ensures operation time in the event of an abnormality, and the configuration that suppresses deterioration.

<Twelfth Embodiment>

In the first embodiment, one motor has only one multi-phase motor coil. For example, the first motor 61 has only one three-phase first motor coil 62. In contrast to the above, in the twelfth embodiment, one motor has multiple motor coils of multiple phases. Configurations, operations, and effects not particularly described in the twelfth embodiment are the same as those in the first embodiment described above. In the twelfth embodiment, the differences from the first embodiment will be mainly described.

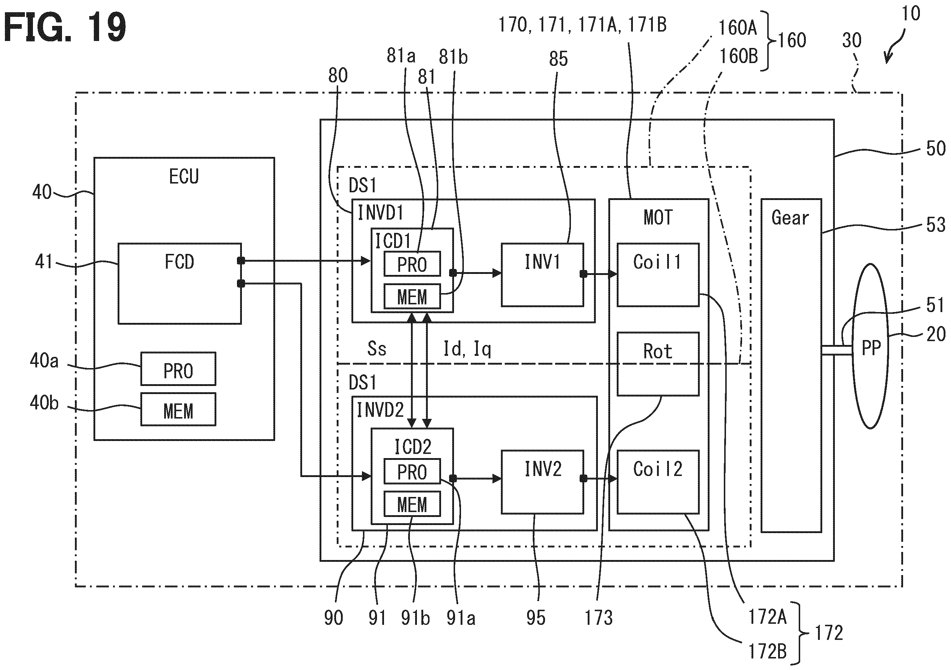

As shown in FIG. 19, the EPU 50 has a common coil 172 instead of the motor coils 62 and 72. The common coil 172 is a multi-phase coil. The common coil 172 can be electrically divided into multiple coils. For example, the multiple coils into which the common coil 172 can be divided include a first coil 172A and a second coil 172B. The first coil 172A and the second coil 172B are each a multi-phase coil. For example, one six-phase coil, called a common coil 172, is formed by two three-phase coils, which are the first coil 172A and the second coil 172B. In the common coil 172, the first coil 172A and the second coil 172B are arranged in the circumferential direction CD. For example, multiple coil portions forming the first coil 172A and multiple coil portions forming the second coil 172B are arranged alternately in the circumferential direction CD.

The common coil 172 is included in a common motor 171. In the common motor 171, the motor stators have a common core. The common core is a stator core common to the first coil 172A and the second coil 172B. The first coil 172A and the second coil 172B are mounted on the common core, so that the common coil 172 has a dual-system winding.

The common motor 171 has a common rotor 173 in addition to the common coil 172. The common rotor 173 rotates when the common motor 171 is energized. The common rotor 173 is provided so as to rotate when electric current is supplied to at least one of the first coil 172A and the second coil 172B. For example, the common rotor 173 is disposed across the first coil 172A and the second coil 172B. When both of the first coil 172A and the second coil 172B are energized, the common motor 171 is driven in six phases. In six-phase driving, the common motor 171 drives as a six-phase motor, and the common rotor 173 rotates as the rotor of the six-phase motor. In FIG. 19, the common rotor 173 is illustrated as Rot.

The common motor 171 includes a first motor 171A and a second motor 171B. The first motor 171A has the first coil 172A. The second motor 171B has the second coil 172B. When both of the first coil 172A and the second coil 172B are energized, the common motor 171 is driven in six phases by the first motor 171A and the second motor 171B. On the other hand, when only the first coil 172A is energized, the common motor 171 is driven in three phases. In such case, the common motor 171 is driven as a three-phase motor by the first motor 171A. When only the second coil 172B is energized, the common motor 171 is driven in three phases. In such case, the common motor 171 is driven as a three-phase motor by the second motor 171B. The common rotor 173 is included in both of the first motor 171A and the second motor 171B.

In the common motor 171, the first motor current Im1 flows through the first coil 172A, and the second motor current Im2 flows through the second coil 172B. The first motor current Im1 flows through the first coil 172A regardless of whether the common motor 171 is driven as a six-phase motor or a three-phase motor. The first motor current Im1 corresponds to a first coil current. The second motor current Im2 flows through the second coil 172B regardless of whether the common motor 171 is driven as a six-phase motor or a three-phase motor. The second motor current Im2 corresponds to a second coil current.

The common motor 171 is included in a common motor device 170. The common motor device 170 has a housing that houses the common motor 171. The housing houses the common coil 172. That is, the first coil 172A and the second coil 172B are accommodated together in this housing.

The common motor device 170 is included in a common DS 160. The common DS 160 includes the first inverter device 80 and the second inverter device 90 in addition to the common motor device 170. In the common DS 160, for example, the common motor device 170 and the inverter devices 80 and 90 are arranged in the axial direction AD. Note that, in the common DS 160, the first inverter device 80 and the second inverter device 90 may be arranged in the radial direction RD. In such a configuration, the common motor device 170 may be provided across the first inverter device 80 and the second inverter device 90 in the radial direction RD.

The common DS 160 includes a first DS 160A and a second DS 160B. The first DS 160A includes the first inverter device 80 and the first coil 172A. The second DS 160B includes the second inverter device 90 and the second coil 172B. When the common motor 171 is driven in six phases, the common DS 160 is driven as a six-phase DS by the first DS 160A and the second DS 160B. When the common motor 171 is driven in three phases by energizing the first coil 172A, the common DS 160 is driven as a three-phase first DS 160A. Further, when the common motor 171 is driven in three phases by energizing the second coil 172B, the common DS 160 is driven as the three-phase second DS 160B.

In the common DS 160, the common rotor 173 is connected to the EPU shaft 51. The EPU shaft 51 connects the common rotor 173 and the propeller 20. In the common DS 160, when the common motor 171 is driven in six phases, coordinated control is performed so that the output of the first motor 171A and the output of the second motor 171B become the same as each other. The output of the first motor 171A is, for example, the first motor current Im1 flowing through the first coil 172A. The output of the second motor 171B is, for example, the second motor current Im2 flowing through the second coil 172B.

When the common motor 171 is driven in six phases, the inverter control units 81 and 91 exchange first state-related data of the first motor 171A and second state-related data of the second motor 171B. The inverter control units 81 and 91 use both of the first state-related data and the second state-related data to drive the common motor 171 in six phases using the motors 171A and 171B. For example, the first inverter control unit 81 and the second inverter control unit 91 mutually transmit detection values of a d-axis current Id and a q-axis current Iq as motor information. The first inverter control unit 81 and the second inverter control unit 91 may mutually transmit the detection values of the phase currents as motor information.

When the common motor 171 is driven in six phases, the inverter control units 81 and 91 mutually transmit a synchronization signal Ss for synchronizing the first DS 160A and the second DS 160B. The synchronization signal Ss is transmitted, for example, via the EPU path 55. In such manner, it is preferable that the synchronization signal Ss be transmitted in a manner that does not cause or causes little delay in transmission. The synchronization signal Ss is transmitted unidirectionally or bidirectionally between the first inverter control unit 81 and the second inverter control unit 91. When the common motor 171 is driven in six phases, it is preferable to synchronize the switching of the inverter circuits 85, 95 between the first DS 160A and the second DS 160B. In such manner, it is possible to suppress magnetic interference occurring between the first DS 160A and the second DS 160B.

In the common DS 160, since the dual-system winding systems of the common coil 172 are realized by the coils 172A and 172B, oscillations are likely to occur due to mutual inductance. In the inverter control units 81 and 91, in feedback control including P control, it is preferable to set a control constant so as to suppress P gain. In such manner, the P gain, which is easily affected by the mutual inductance, is suppressible, and as a result, oscillation is suppressed.

The integration ECU 40 and the inverter control units 81 and 91 perform current sum control and current difference control for the dual-system winding of the common motor 171. In the current sum control, the electric current flowing through the common motor 171 is controlled as a current sum Ia of the two winding systems. The current sum Ia is a sum of the first motor current Im1 flowing through the first coil 172A and the second motor current Im2 flowing through the second coil 172B. In the current difference control, a difference between electric currents flowing through the dual-system windings is controlled as a current difference Ic. The current difference Ic is a difference between the first motor current Im1 and the second motor current Im2. The current difference control performs a coordinated control by controlling the motor currents Im1 and Im2 so that the current difference Ic becomes zero.

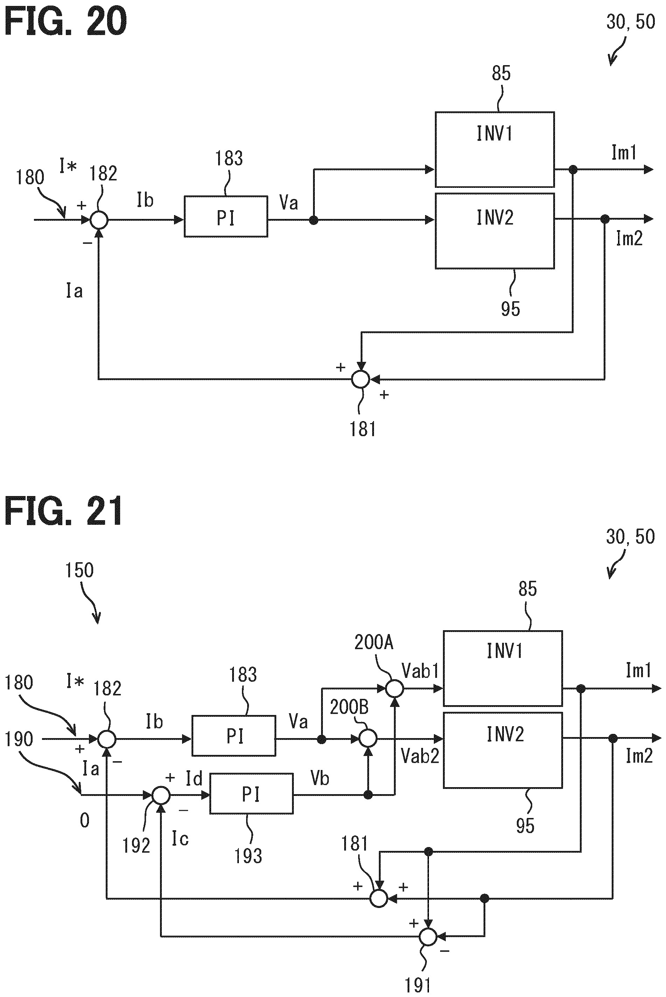

As shown in FIG. 20, the flight system 30 has a current sum control unit 180. The current sum control unit 180 controls the motor currents Im1 and Im2 by controlling the current sum Ia. The current sum control unit 180 is included in at least one of the integration ECU 40 and the inverter control units 81 and 91.

The current sum control unit 180 includes a sum calculation unit 181, an instruction difference unit 182, and a sum operation unit 183. The sum calculation unit 181 receives the first motor current Im1 and the second motor current Im2. The sum calculation unit 181 calculates a sum of the first motor current Im1 and the second motor current Im2 as the current sum Ia. The instruction current I* and the current sum Ia are input to the instruction difference unit 182. The instruction current I* is an instruction value for the output of the motors 61 and 71. The instruction current I* is an instruction value for the motor currents Im1 and Im2, and is calculated using an instruction torque or the like. The instruction difference unit 182 calculates a difference between the instruction current I* and the current sum Ia as an instruction current difference Ib.

The sum operation unit 183 calculates an instruction voltage Va by feedback control such as PI control. The sum operation unit 183 calculates the instruction voltage Va so that the instruction current difference Ib becomes zero, for example. The sum operation unit 183 outputs the instruction voltage Va to each of the inverter circuits 85 and 95. The inverter circuits 85 and 95 perform power conversion in response to the instruction voltage Va to drive the motors 61 and 71. In FIG. 20, the sum operation unit 183 is illustrated as PI.

As shown in FIG. 21, the flight system 30 has, in addition to the current sum control unit 180, a current difference control unit 190 and integration instruction units 200A and 200B. The current difference control unit 190 is included in at least one of the integration ECU 40 and the inverter control units 81 and 91.

The current difference control unit 190 includes a difference calculation unit 191, a zero difference unit 192, and a difference operation unit 193. The first motor current Im1 and the second motor current Im2 are input to the difference calculation unit 191. The difference calculation unit 191 calculates a difference between the first motor current Im1 and the second motor current Im2 as the current difference Ic. The zero difference unit 192 calculates a difference between zero and the current difference Ic as a zero current difference Iz. The difference operation unit 193 calculates the instruction voltage Vb by feedback control such as PI control. The difference operation unit 193 calculates the instruction voltage Vb so that the zero current difference Iz becomes zero, for example.

In current difference control unit 190, making the zero current difference Iz zero is equivalent to making the first motor current Im1 and the second motor current Im2 the same. Therefore, the current difference control unit 190 controls the motors 61, 71 so that the output of the first motor 171A and the output of the second motor 171B become the same as each other. The current difference control unit 190 corresponds to a motor controller. In FIG. 21, the difference operation unit 193 is illustrated as PI.

The integration instruction units 200A and 200B calculate integration voltages Vab1 and Vab2 using the instruction voltages Va and Vb. The integration instruction units 200A and 200B receive the instruction voltage Va from the current sum control unit 180 and the instruction voltage Vb from the current difference control unit 190. The integration instruction units 200A and 200B calculate, for example, average values of the instruction voltages Va and Vb as the integration voltages Vab1 and Vab2. The first integration instruction unit 200A calculates the first integration voltage Vab1 and outputs it to the first inverter circuit 85. The second integration instruction unit 200B calculates the second integration voltage Vab2 and outputs it to the second inverter circuit 95. The integration instruction units 200A and 200B may variably set the ratios at which the instruction voltages Va and Vb contribute to the integration voltages Vab1 and Vab2.

The integration ECU 40 selectively uses the current sum control unit 180 and the current difference control unit 190 depending on the motor state and the like. Further, the integration ECU 40 selectively uses six-phase drive and three-phase drive of the common motor 171 depending on the motor state and the like. For example, when an abnormality occurs in the first coil 172A, the integration ECU 40 stops energization of the first coil 172A and energizes the second coil 172B. In such case, the integration ECU 40 drives the common motor 171 in three phases by independently driving the second motor 171B.

When an abnormality occurs in the communication system of the EPU 50, the integration ECU 40 drives the common motor 171 in six phases by independently driving the first motor 171A and the second motor 171B. In such case, the integration ECU 40 controls the common motor 171 using the current sum control unit 180 without using the current difference control unit 190. The integration ECU 40 does not perform coordinated control of the first motor 171A and the second motor 171B by the current difference control unit 190. Abnormality in the communication system includes abnormality occurring in the information transmission between the systems in the common motor 171, abnormality due to failures occurring in the interface and the like.

When no abnormality occurs in the EPU 50, the integration ECU 40 controls the common motor 171 using both of the current sum control unit 180 and the current difference control unit 190. In such case, the integration ECU 40 controls the current sum Ia of the two systems, i.e., the first coil 172A and the second coil 172B, while controlling the current difference Ic of the two systems. The integration ECU 40 performs coordinated control of the first motor 171A and the second motor 171B using the current difference control unit 190.

According to the present embodiment, the current difference control unit 190 controls the motors 61, 71 so that the output of the first motor 61 and the output of the second motor 71 become the same as each other. Therefore, the current difference control unit 190 can reduce the load on each of the first motor 61 and the second motor 71, as in the first embodiment.

According to the present embodiment, in the common motor 171, the common rotor 173 is included in both of the first motor 171A and the second motor 171B. Therefore, by selectively driving the first motor 171A and the second motor 171B, the common motor 171 can be selectively driven in six phases or three phases. Further, the first motor 61 and the second motor 71 are each controlled so that the first motor current Im1 and the second motor current Im2 become the same as each other. Therefore, when the common motor 171 is driven in six phases by the first motor 171A and the second motor 171B, the output of the first motor 171A and the output of the second motor 171B can be equalized. Therefore, when the common motor 171 is driven in six phases, while the first motor 171A and the second motor 171B are driven in three phases, the load on each of the first motor 171A and the second motor 171B is reducible. In such manner, it is possible to stabilize the control of the motors 171A and 171B with respect to the six-phase drive of the common motor 171.

<Thirteenth Embodiment>

In the twelfth embodiment, coordinated control is performed so that the current difference Ic between the motor currents Im1 and Im2 becomes zero. In contrast to the above, in the thirteenth embodiment, when an abnormality occurs in the current difference Ic, an abnormality resolution process is performed to resolve the abnormality. Configurations, operations, and effects of the thirteenth embodiment that are not specifically described are the same as those of the twelfth embodiment. In the thirteenth embodiment, the differences from the twelfth embodiment will be mainly described.

In the present embodiment, similarly to the twelfth embodiment, the common rotor 173 is included in both of the first motor 171A and the second motor 171B. Therefore, in the present embodiment, as a state difference between the first motor 171A and the second motor 171B, among the speed difference and the current difference Ic, no speed difference is generated. In the present embodiment, when an abnormality occurs in the current difference Ic, energization to at least one of the first motor current Im1 and the second motor current Im2 is limited.

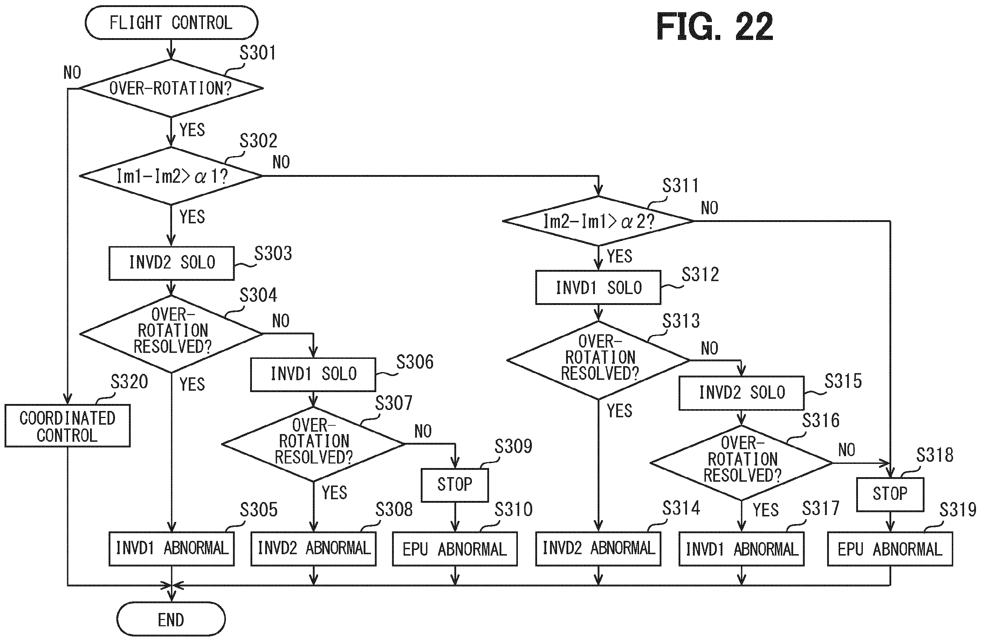

The flight control processing of the present embodiment will be described with reference to a flowchart of FIG. 22. In step S301 of the flight control processing, the integration ECU 40 determines whether or not over-rotation of the propeller 20 has occurred. For example, the integration ECU 40 determines whether or not the rotation speed of the propeller 20 is greater than a propeller threshold value. The propeller threshold value is a value determined in advance according to the rated values and the like regarding the EPU 50 and the common motor device 170, and is stored in, for example, the memory 40b or the like. The propeller threshold value may be variably set depending on the flight mode of the eVTOL 10, and the like.

The integration ECU 40 determines whether the rotation of the propeller 20 is abnormal by determining whether over-rotation of the propeller 20 has occurred. When over-rotation of the propeller 20 occurs, the integration ECU 40 determines that a rotation abnormality of the propeller 20 has occurred. The integration ECU 40 may use the motor rotation speed or the rotation speed of the EPU shaft 51 to determine whether or not a rotation abnormality has occurred in the propeller 20 as a rotor. For example, the integration ECU 40 determines whether or not the rotation speed of the common motor 171 is greater than a motor threshold value, and, determines that an abnormality has occurred in the rotor when the rotation speed is greater than the motor threshold value. The integration ECU 40 determines whether the rotation speed of the EPU shaft 51 is greater than an EPU threshold value, and, determines that an abnormality has occurred in the rotor when the rotation speed of the EPU shaft 51 is greater than the EPU threshold value. The motor threshold value and the EPU threshold value may be predetermined values or may be variably set, similar to the propeller threshold value.

When the propeller 20 is not over-rotating, the integration ECU 40 proceeds to step S320 and performs coordinated control processing. In the coordinated control processing, similarly to the twelfth embodiment, coordinated control is performed so that the output of the first motor 171A and the output of the second motor 171B become the same as each other. For example, the integration ECU 40 controls the motor currents Im1 and In2 so that the first motor current Im1 and the second motor current Im2 become the same as each other.

When the propeller 20 over-rotates, the integration ECU 40 determines in steps S302 and S311 whether or not an abnormality has occurred in the current difference Ic. For example, the integration ECU 40 determines whether the current difference Ic is greater than a current threshold value $\alpha$. When the current difference Ic is greater than the current threshold value $\alpha$, the integration ECU 40 determines that an abnormality has occurred in the current difference Ic. In a state in which the first motor current Im1 is greater than the second motor current Im2, a determination is made in step S302 as to whether or not the current difference Ic is greater than the current threshold value $\alpha$. In a state in which the second motor current Im2 is greater than the first motor current Im1, a determination is made in step S311 as to whether or not the current difference Ic is greater than the current threshold value $\alpha$.

In step S302, the integration ECU 40 determines whether the first current difference Ic1 is greater than the first threshold value $\alpha$1. The first current difference Ic1 is a value acquired by subtracting the second motor current Im2 from the first motor current Im1. The first current difference Ic1 is the current difference Ic in a state in which the first motor current Im1 is greater than the second motor current Im2. The first current difference Ic1 and the current difference Ic correspond to a motor current difference.

The first threshold value $\alpha$1 is a predetermined value, and is stored in the memory 40b or the like. The first threshold value $\alpha$1 is an upper limit of an allowable range for a state in which the first motor current Im1 is greater than the second motor current Im2. The first threshold value $\alpha$1 is set in accordance with the rated current of the inverter devices 80 and 90, the common motor device 170, and the like. For example, the first threshold value $\alpha$1 is set to a value equal to or less than 10% of the rated value of the first motor current Im1 or the second motor current Im2. Note that the first threshold value $\alpha$1 may be variably set depending on the flight mode, and the like.

When the first current difference Ic1 is greater than the first threshold value $\alpha$1, the integration ECU 40 proceeds to step S303. In step S303, the integration ECU 40 performs a process for allowing the second inverter device 90 to independently drive the common motor 171. In such process, only the second inverter device 90 supplies electric power to the common motor device 170, so that the common motor 171 is three-phase driven by the second inverter device 90. In such case, the common motor 171 is three-phase driven by the second motor current Im2.

The EPU 50 stops drive of the first inverter device 80 while continuing the drive of the second inverter device 90. That is, the integration ECU 40 continues the supply of the second motor current Im2 to the common motor 171, while stopping the supply of the first motor current Im1. The second motor current Im2 may or may not increase or decrease before and after the second inverter device 90 starts to drive the common motor 171 independently. The function of executing the process of step S303 in the integration ECU 40 corresponds to a big stop unit.

In step S304, the integration ECU 40 determines whether the over-rotation of the propeller 20 has been resolved. For example, the integration ECU 40 determines whether the rotation speed of the propeller 20 has become smaller than a propeller threshold value. When the supply of the first motor current Im1 to the common motor 171 is stopped and the over-rotation of the propeller 20 is resolved, the integration ECU 40 proceeds to step S305.

The integration ECU 40 performs the first inverter abnormality processing in step S305. In the first inverter abnormality processing, the integration ECU 40 determines that the cause of the rotation abnormality of the propeller 20 is at least the first inverter device 80. For example, in the first inverter abnormality processing, it is determined that the cause of the over-rotation of the propeller 20 is at least the first motor current Im1. Then, in the first inverter abnormality processing, processing is performed to continue the flight of the eVTOL 10 with the drive of the first inverter device 80 stopped. Further, in the first inverter abnormality processing, a pilot or the like is notified that an abnormality has occurred in the first inverter device 80 and that the operation of the first inverter device 80 has been stopped.

If the over-rotation of the propeller 20 is not resolved even when the second inverter device 90 alone drives the common motor 171, the integration ECU 40 proceeds to step S306. In step S306, the integration ECU 40 performs a process for allowing the first inverter device 80 to drive the common motor 171 alone. In such process, only the first inverter device 80 supplies electric power to the common motor device 170, so that the common motor 171 is three-phase driven by the first inverter device 80. In such case, the common motor 171 is three-phase driven by the first motor current Im1. the EPU 50 stops drive of the second inverter device 90 while continuing the drive of the first inverter device 80. That is, the integration ECU 40 continues the supply of the first motor current Im1 to the common motor 171, while stopping the supply of the second motor current Im2 to the common motor 171. The first motor current Im1 may or may not increase or decrease before and after the first inverter device 80 starts to independently drive the common motor 171. The function of executing the process of step S308 in the integration ECU 40 corresponds to a small stop unit.

In step S307, the integration ECU 40 determines whether the over-rotation of the propeller 20 has been resolved. When the over-rotation of the propeller 20 is resolved by stopping the supply of the second motor current Im2 to the common motor 171, the integration ECU 40 proceeds to step S308.

The integration ECU 40 performs the second inverter abnormality processing in step S308. In the second inverter abnormality processing, the integration ECU 40 determines that the cause of the rotation abnormality of the propeller 20 is at least the second inverter device 90. For example, in the second inverter abnormality processing, it is determined that the cause of the over-rotation of the propeller 20 is at least the second motor current Im2. Then, in the second inverter abnormality processing, processing is performed to allow the eVTOL 10 to continue flying with the drive of the second inverter device 90 stopped. Further, in the second inverter abnormality processing, the occurrence of an abnormality in the second inverter device 90, the stop of drive of the second inverter device 90, and the like are notified to the pilot or the like.

If the over-rotation of the propeller 20 is not resolved even when either the first inverter device 80 or the second inverter device 90 independently drives the common motor 171, the integration ECU 40 proceeds to step S309. The integration ECU 40 performs a process for stopping the common motor 171 in step S309. In such process, the supply of electric power from the first inverter device 80 and the second inverter device 90 to the common motor device 170 is stopped. The integration ECU 40 stops the supply of both of the first motor current Im1 and the second motor current Im2 to the common motor 171. That is, the integration ECU 40 stops the drive of the EPU 50, thereby stopping the rotation of the propeller 20. The function of executing the process of step S309 in the integration ECU 40 corresponds to a double stop unit.

The integration ECU 40 performs EPU abnormality processing in step S310. In the EPU abnormality processing, the integration ECU 40 determines that the rotation abnormality of the propeller 20 cannot be resolved. For example, in the EPU abnormality processing, it is determined that the cause of the rotation abnormality of the propeller 20 is at least the EPU 50. Then, in the EPU abnormality processing, with the rotation of the propeller 20 stopped, processing is performed to continue the flight of the eVTOL 10 using the remaining propeller 20. Further, in the EPU abnormality processing, the pilot and the like are notified that an abnormality has occurred in the EPU 50, that the drive of the EPU 50 has been stopped, that the rotation of the propeller 20 has been stopped, and the like.

In step S302, when the first current difference Ic1 is not greater than the first threshold value $\alpha 1$, the integration ECU 40 proceeds to step S311. In step S311, the integration ECU 40 determines whether the second current difference Ic2 is greater than a second threshold value $\alpha 2$. The second current difference Ic2 is a value acquired by subtracting the first motor current Im1 from the second motor current Im2. The second current difference Ic2 is the current difference Ic in a state where the second motor current Im2 is greater than the first motor current Im1. The second current difference Ic2 corresponds to a motor current difference.

The second threshold value $\alpha 2$ is a predetermined value, and is stored in the memory 40b or the like. The second threshold value $\alpha 2$ is an upper limit value of an allowable range for a state in which the second motor current Im2 is greater than the first motor current Im1. The second threshold value $\alpha 2$ is set in accordance with the rated current of the inverter devices 80 and 90, the common motor device 170, and the like. For example, the second threshold value $\alpha 2$ is set to a value equal to or less than 10% of the rated value of the first motor current Im1 or the second motor current Im2. Note that the second threshold value $\alpha 2$ may be variably set depending on the flight mode, and the like.

When the second current difference Ic2 is greater than the second threshold value $\alpha 2$, the integration ECU 40 proceeds to step S312. In step S312, the integration ECU 40 performs a process for allowing the first inverter device 80 to independently drive the common motor 171, similar to step S306. In step S312, the EPU 50 stops drive of the second inverter device 90 while continuing the drive of the first inverter device 80. The function of executing the process of step S312 in the integration ECU 40 corresponds to a big stop unit.

In step S313, the integration ECU 40 determines whether the over-rotation of the propeller 20 has been resolved. When the over-rotation of the propeller 20 is resolved by stopping the supply of the second motor current Im2 to the common motor 171, the integration ECU 40 proceeds to step S314. In step S314, the integration ECU 40 performs the second inverter abnormality processing in the same manner as in step S308.

If the over-rotation of the propeller 20 is not resolved even when the first inverter device 80 independently drives the common motor 171, the integration ECU 40 proceeds to step S315. In step S315, the integration ECU 40 performs a process for allowing the second inverter device 90 to independently drive the common motor 171, similar to step S303. In step S315, the manager EPU 50 stops drive of the second inverter device 90 while continuing the drive of the first inverter device 80. The function of executing the process of step S315 in the integration ECU 40 corresponds to a small stop unit.

In step S316, the integration ECU 40 determines whether the over-rotation of the propeller 20 has been resolved. When the over-rotation of the propeller 20 is resolved by stopping the supply of the first motor current Im1 to the common motor 171, the integration ECU 40 proceeds to step S317. In step S317, the integration ECU 40 performs the first inverter abnormality processing in the same manner as in step S305.

If the over-rotation of the propeller 20 is not resolved even when either the first inverter device 80 or the second inverter device 90 independently drives the common motor 171, the integration ECU 40 proceeds to step S318. In step S318, the integration ECU 40 performs a process for stopping the common motor 171, similar to step S309. In step S318, the integration ECU 40 stops the drive by the EPU 50, thereby stopping the rotation of the propeller 20. The function of executing the process of step S318 in the integration ECU 40 corresponds to a double stop unit.

In step S319, the integration ECU 40 performs the EPU abnormality processing in the same manner as in step S310. In step S311, when the second current difference Ic2 is not greater than the second threshold value $\alpha2$, the integration ECU 40 performs the processes of steps S318 and S319.

According to the present embodiment, the inverter control unit 81 is capable of performing both of (a) continuing the supply of the greater one and stopping the supply of the smaller one among the first motor current Im1 and the second motor current Im2 and (b) continuing the smaller one and stopping the greater one among the first motor current Im1 and the second motor current Im2. In such a configuration, in a state in which a rotation abnormality occurs in the propeller 20, it is possible to confirm whether the rotation abnormality in the propeller 20 is resolved or not, in both of the cases (a) continuing the supply of only the greater one among the motor currents Im1, Im2 and (b) continuing the supply of only the smaller one among the motor currents Im1, Im2. Therefore, by continuing the supply of the motor currents Im1 and Im2 in a state in which the rotation abnormality of the propeller 20 has been resolved, it is possible to continue the rotation of the propeller 20. In such manner, a configuration can be realized that does not require the propeller 20 to be stopped even if a rotation abnormality of the propeller 20 occurs.

When an over-rotation occurs in the propeller 20, it is highly likely that the greater one of the first motor current Im1 and the second motor current Im2 is the cause of the over-rotation. Therefore, in the present embodiment, when the over-rotation occurs in the propeller 20, the supply of only the greater one of the motor currents Im1, Im2 is stopped before the supply of only the smaller one of the motor currents Im1, Im2 is stopped. In such a configuration, for example, compared to a configuration in which only the smaller of the motor currents Im1, Im2 is stopped before only the greater one of the motor currents Im1, Im2 is stopped, there is a high possibility that over-rotation of the propeller 20 can be resolved at an earlier timing. Therefore, it is possible to quickly resolve the problem of the safety of the eVTOL 10 being lowered due to continued rotation abnormality of the propeller 20.

When (a) the propeller 20 is over-rotating at an overspeed, and (b) it is not clear whether the cause is the first inverter device 80 or the second inverter device 90, the EPU 50 firstly stops the greater one of the first motor current Im1 and the second motor current Im2. The over-rotation of the propeller 20 is a state in which output of the EPU 50 is excessive, thus there is a high possibility that an abnormality such as a failure has occurred in one of the inverter devices 80, 90 having the greater current. Therefore, by firstly stopping the greater one of the first motor current Im1 and the second motor current Im2, there is a high possibility of quickly responding to over-rotation of the propeller 20.

When the over-rotating propeller 20 is quickly stopped in the event of over-rotation of the propeller 20, there is a concern that the safety of the eVTOL 10 may be compromised. In contrast, according to the present embodiment, a method is explored for not stopping the rotation of the propeller 20 even when over-rotation of the propeller 20 occurs, thereby preventing a deterioration in the safety of the eVTOL 10, and the like.

According to the present embodiment, when the rotation abnormality of the propeller 20 is not resolved by stopping only the greater one of the motor currents Im1 and Im2, the integration ECU 40 stops only the smaller one of the motor currents Im1 and Im2. In such a configuration, when the rotation abnormality of the propeller 20 cannot be resolved by stopping the supply of the greater one of the motor currents Im1 and Im2, it is possible to determine whether the rotation abnormality of the propeller 20 is resolvable by stopping the supply of the smaller one of the motor currents Im1 and Im2. In other words, it is possible to determine whether the over-rotation of the propeller 20 is resolved or not by the switching of the drive inverter that drives the propeller 20 to rotate.

Further, when the rotation abnormality of the propeller 20 is not resolved even by stopping the supply of the smaller one of the motor currents Im1 and Im2, it can be determined that the rotation abnormality of the propeller 20 will not be resolved even when supply of either one of the motor currents Im1 and Im2 is stopped. In other words, it is possible to determine that the over-rotation of the propeller 20 is not resolved even by switching the inverter that is driving the propeller 20 to rotate.

When over-rotation of the propeller 20 occurs, in the eVTOL 10, it is highly likely to have a situation in which the integration ECU 40 is unable to control the rotation of the propeller 20. Therefore, there is a concern that over-rotation of the propeller 20 may lower the safety of the eVTOL 10. In contrast, according to the present embodiment, if the rotation abnormality of the propeller 20 is not resolved either by stopping the supply of only the greater one of the motor currents Im1, Im2 or by stopping the supply of only the smaller one of the motor currents Im1, Im2, the integration ECU 40 stops the supply of both of the motor currents Im1, Im2. In such a configuration, the rotation of the propeller 20 is stopped due to the stop of the supply of the motor currents Im1 and Im2, thereby over-rotation of the propeller 20 is quickly resolvable. Therefore, the safety of the eVTOL 10 is prevented from deteriorating due to failure of the integration ECU 40 regarding control of the rotation of the propeller 20.

<Fourteenth Embodiment>

In the thirteenth embodiment, it is possible to both stop the supply of the greater one of the motor currents Im1, Im2 and stop the supply of the smaller one of the motor currents Im1, Im2. In contrast to the above, in the fourteenth embodiment, it is possible to stop only the supply of the greater one of the motor currents Im1, Im2, or to stop only the supply of the smaller one of the motor currents Im1, Im2. Configurations, operations, and effects of the fourteenth embodiment that are not specifically described are similar to those of the thirteenth embodiment. In the fourteenth embodiment, the differences from the thirteenth embodiment will be mainly described.

In the present embodiment, from among (a) stopping the greater one of the motor currents Im1, Im2, and (b) stopping the supply of only the smaller one of the motor currents Im1, Im2, the inverter control unit 81 can stop the supply of only the greater one of the motor currents Im1, Im2. The inverter control unit 81 has a function of stopping only the supply of the greater one of the motor currents Im1, Im2, but does not have a function of stopping only the supply of the smaller one of the motor currents Im1, Im2.

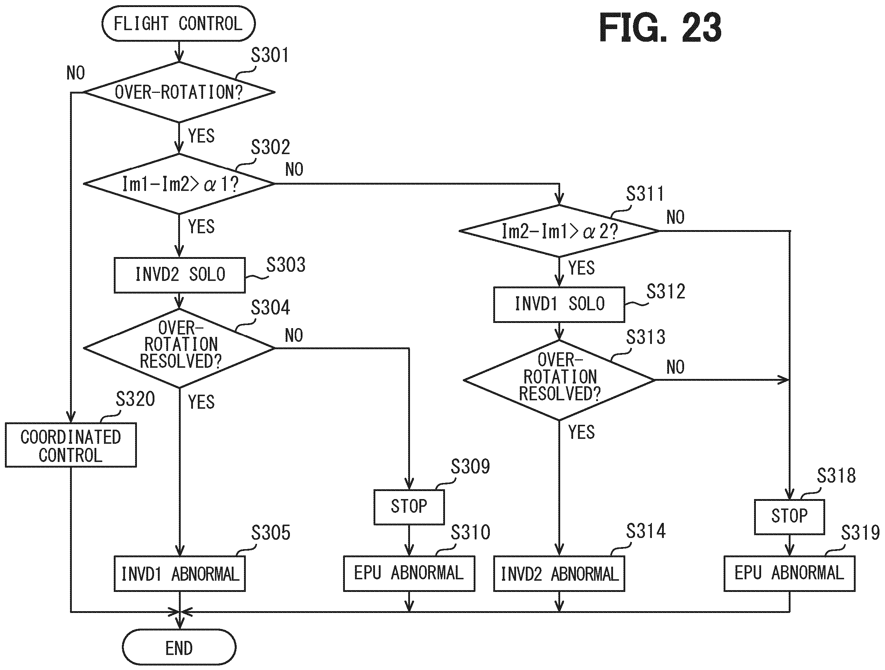

The flight control processing of the present embodiment will be described with reference to a flowchart of FIG. 23. The integration ECU 40 can execute the processes of steps S301 to S305, S309 to S314, and S318 to S320, similarly to the thirteenth embodiment. On the other hand, unlike the thirteenth embodiment, the integration ECU 40 does not execute the processes of steps S306 to S308 and S315 to S317. The integration ECU 40 has the big stop unit and the double stop unit, but does not have the small stop unit.

For example, in step S304, if the over-rotation of the propeller 20 is not resolved even after the drive of the first inverter device 80 is stopped, the integration ECU 40 performs the processes of steps S309 and S310. In other words, when the first motor current Im1 is abnormally greater than the second motor current Im2, the integration ECU 40 does not check whether the over-rotation of the propeller 20 will be resolved by stopping the drive of the second inverter device 90. The integration ECU 40 stops the drive of both of the inverter devices 80 and 90 in step S309, assuming that there is a low possibility that the over-rotation of the propeller 20 will be resolved even if the second motor current Im2, which is the smaller one of the motor currents Im1 and Im2, is interrupted.

Further, in step S313, if the over-rotation of the propeller 20 is not resolved even after the drive of the second inverter device 90 is stopped, the integration ECU 40 performs the processes of steps S318 and S319. That is, when the second motor current Im2 is abnormally greater than the first motor current Im1, the integration ECU 40 does not check whether the over-rotation of the propeller 20 will be resolved by stopping the drive of the first inverter device 80. The integration ECU 40 determines that there is a low possibility that the over-rotation of the propeller 20 will be resolved even if the first motor current Im1, which is the smaller one of the motor currents Im1 and Im2, is cut off, and therefore stops the operation of both inverter devices 80 and 90 in step S309.

<Other Embodiments>

The disclosure in the present specification is not limited to the exemplary embodiments. The disclosure includes the exemplary embodiments and modifications made by those skilled in the art based on the exemplary embodiments. For example, the disclosure is not limited to a combination of components and elements described in the embodiments, and various modifications may be implemented. The disclosure may be implemented in various combinations. The disclosure may include an additional portion that can be added to the embodiments. The disclosure includes components and elements omitted from the embodiments. The disclosure includes replacement or combination of components and elements between one embodiment and other embodiments. The disclosed technical scope is not limited to the description of the embodiments. The disclosed technical scope is indicated by the description of the claims, and should be construed to include all modifications within the meaning and scope equivalent to the description of the claims.

In each of the above-described embodiments, the instruction outputs exchanged between the first inverter control unit 81 and the second inverter control unit 91 may be parameters different from the instruction torques Tr1*, Tr2*. For example, the first inverter control unit 81 and the second inverter control unit 91 may exchange, as the instruction outputs, the instruction speeds Sr1*, Sr2* and the instruction currents Im1*, Im2*, and the like. For example, in a configuration in which the inverter control units 81, 91 exchange the instruction currents Im1*, Im2*, the first current instruction unit 83 corresponds to a first instruction unit, and the second current instruction unit 93 corresponds to a second instruction unit.

In each of the above-described embodiments, the motor information exchanged between the first inverter control unit 81 and the second inverter control unit 91 may be a parameter different from the motor currents Im1, Im2. For example, the first inverter control unit 81 and the second inverter control unit 91 may exchange, as the motor information, detection values of the motor speeds Sr1, Sr2, the motor temperature, and the like. Further, the first inverter control unit 81 and the second inverter control unit 91 may exchange, as the motor information, estimated values of the motor temperature, the motor voltage, and the like.

In each of the above-described embodiments, the first inverter control unit 81 and the second inverter control unit 91 may exchange multiple types of parameters among the state-related data. For example, the first inverter control unit 81 and the second inverter control unit 91 may exchange both of the instruction outputs and the motor information. Further, the first inverter control unit 81 and the second inverter control unit 91 may exchange multiple types of parameters for at least one of the instruction output and the motor information.

In each of the above-described embodiments, the parameters used as the instruction output may include torque, electric current, duty, output power, and the like. For example, in a configuration in which an instruction duty is used as an instruction value for a duty, the first inverter control unit 81 and the second inverter control unit 91 exchange the instruction duty. Further, the integration ECU 40 may output an instruction duty to the inverter control units 81 and 91. Further, in a configuration in which an instruction power is used as an instruction value for the output power [W] of the motors 61, 71, the inverter control units 81, 91 exchange the instruction power. Further, the integration ECU 40 may output the instruction power to the inverter control units 81 and 91. Further, the integration ECU 40 may output the instruction currents Im1* and Im2* to the inverter control units 81 and 91.

In each of the above-described embodiments, parameters used as the motor information may include torque, electric current, voltage, input power, output power, motor temperature, motor speed, and the like. For example, the detection values detected as the motor information include a torque detection value, a current detection value, a voltage detection value, an input power detection value, an output power detection value, a temperature detection value, and a speed detection value and the like. Further, parameters of the estimated values detected as the motor information include a torque, an electric current, and the like, similar to the parameters of the detection values.

In each of the above-described embodiments, a failure state or a deterioration state may be used as the motor information. For example, in the eleventh embodiment, the distribution of the motor currents Im1, Im2 may be set in accordance with the failure state. For example, regarding the distribution setting of the motor currents Im1, Im2, the motor current is distributed by a smaller amount to the one having a failure among the motors 61, 71 than to the motor having no failure. That is, the electric current through the motors 61, 71 which has a failure is made smaller than the electric current through the motor which has no failure. Further, the distribution of the motor currents Im1, Im2 for the motors 61, 71 which is in a more deteriorated state is set lower than the distribution for the motor which is in a less deteriorated state. That is, the electric current of the motors 61, 71 which is more deteriorated is made smaller than the electric current of the motor which is not more deteriorated.

In each of the above-described embodiments, the integration ECU 40 may use any parameter as a parameter for performing motor control. For example, in the above-described thirteenth embodiment, the integration ECU 40 may calculate the motor current difference using the instruction values for the first motor 171A and the first inverter device 80 and the instruction values for the second motor 171B and the second inverter device 90. For example, the integration ECU 40 calculates a first instruction current and a second instruction current as the instruction values for the first inverter device 80 and the second inverter device 90. The integration ECU 40 then calculates the difference between the first instruction current and the second instruction current as a motor current difference, and uses such a motor current difference to continue or stop the energization of the big stop unit and the small stop unit.

In each of the above-described embodiments, the EPU 50 does not necessarily have to include the clutch 105, 115. For example, in the first embodiment, if the EPU 50 is configured not to have the clutches 105 and 115, a speed difference is unlikely to occur between the first motor 61 and the second motor 71. In such a configuration, similarly to the thirteenth embodiment, the current difference Ic may be more likely to increase due to the absence of a speed difference between the first motor 61 and the second motor 71. In contrast, similarly to the thirteenth embodiment, when an abnormality occurs in the current difference Ic, it is preferable that the supply of at least one of the first motor current Im1 and the second motor current Im2 is limited.

In each of the above-described embodiments, the integration ECU 40 may limit the supply of the motor currents Im1 and Im2 in any manner. For example, in the thirteenth embodiment, the integration ECU 40 may stop the supply of only the smaller one of the motor currents Im1, Im2 before stopping the supply of only the greater one of the motor currents Im1, Im2. Further, if the over-rotation of the propeller 20 is not resolved even when the supply of only the smaller one of the motor currents Im1, Im2 is stopped, the integration ECU 40 may stop the rotation of the propeller 20 by stopping the supply of both motor currents without stopping the supply of only the greater current.

In each of the above-described embodiments, the integration ECU 40 may be capable of at least one of stopping the supply of the greater one of the motor currents Im1, Im2 and stopping the supply of the smaller one of the motor currents Im1, Im2. In other words, the integration ECU 40 only needs to have at least one of the big stop unit and the small stop unit. For example, among the big stop unit and the small stop unit, the integration ECU 40 may have only the big stop unit as in the fourteenth embodiment, or may have only the small stop unit.

In each of the above-described embodiments, the vertical take-off and landing flight vehicle in which the integration ECU 40 is mounted may be an electrically-driven vertical take-off and landing flight vehicle in which at least one propeller 20 is driven by at least one EPU 50. For example, a configuration in which one propeller 20 is driven by multiple EPUs 50, or a configuration in which one EPU 50 drives multiple propellers 20, may be used.

In each of the above-described embodiments, the flight vehicle on which the EPU 50 is mounted does not have to be a vertical take-off and landing flight vehicle as long as it is electrically powered. For example, the flight vehicle may be an electric flight vehicle capable of taking off and landing while gliding. Further, the flight vehicle may be a rotary-wing flight vehicle or a fixed-wing flight vehicle. The flight vehicle may be an unmanned flight vehicle carrying no occupant.

In each of the above-described embodiments, the moving body on which the EPU 50 is mounted does not have to be a flight vehicle as long as it can move by the rotation of a rotor. For example, the moving body may be a vehicle, a ship, a construction machine, or an agricultural machine. For example, when the moving body is a vehicle or construction machine, the rotor is a wheel for moving, and the output shaft portion is an axle. When the moving body is a ship, the rotor is a screw propeller for propulsion or the like, and the output shaft portion is a propeller shaft or the like.

In each of the above-described embodiments, the integration ECU 40 is provided by a control system including at least one computer. The control system includes at least one processor that is hardware. When the processor is referred to as a hardware processor, the hardware processor can be implemented by (i), (ii), or (iii) to be described below.

(i) The hardware processor may be a hardware logic circuit. In such case, a computer is implemented by a digital circuit including many programmed logic units (e.g., gate circuits). The digital circuit may include a memory in which at least one of a program and data is stored. The computer may be implemented by an analog circuit. The computer may be provided with a combination of a digital circuit and an analog circuit.

(ii) The hardware processor may be at least one processor core that executes a program stored in at least one memory. In such case, the computer is implemented by at least one memory and at least one processor core. The processor core is referred to as a CPU, for example. The memory is also referred to as a storage medium. The memory is a non-transitory and tangible storage medium non-temporarily storing "at least one of a program and data" readable by the processor.

(iii) The hardware processor may be a combination of the above-described (i) and (ii). (i) and (ii) are disposed on different chips, or on a common chip.

That is, at least one of the means and functions provided by the integration ECU 40 can be provided by hardware alone, software alone, or a combination thereof.

Disclosure of Technical Idea

The specification discloses multiple technical ideas described in multiple items listed below. Some items may be written in a multiple dependent form, in which subsequent items alternatively refer to preceding items. Further, some items may be described in a multiple dependent form referring to another multiple dependent form. These items described in a multiple dependent form define multiple technical ideas.

Technical Idea 1

A drive device (50) is to be provided to a moving body (10) that is configured to move with rotation of a rotor (20). The drive device is configured to be driven to rotate the rotor. The drive device comprises: a first motor (61, 171A) and a second motor (71, 171B) configured to be driven by energization; an output shaft portion (51) connecting the rotor to the first motor and the second motor, and configured to rotate the rotor according to an output of the first motor and an output of the second motor; and a motor controller (81, 91, 190) configured to control each of the first motor and the second motor, such that the output of the first motor and the output of the second motor become same as each other.

Technical Idea 2

The drive device according to technical idea 1, further comprises: a first instruction unit (82) configured to calculate a first instruction output (Tr1*) as an instruction value for an output of the first motor; and a second instruction unit (92) configured to calculate a second instruction output (Tr2*) as an instruction value for an output of the second motor. The motor controller is configured to control the first motor and the second motor using the first instruction output and the second instruction output, respectively.

Technical Idea 3

The drive device according to technical idea 2 further comprises: an instruction averaging unit (83a, 93a, 141, 151) configured to calculate, as an averaged instruction (Tr1C, Tr2C, C1a, C2a), an average of the first instruction output and the second instruction output. The motor controller is configured to control each of the first motor and the second motor using the instruction averaging unit.

Technical Idea 4

The drive device according to technical idea 2 or 3, further comprises: a common instruction unit (40) configured to calculate a common instruction (Sr1*, Sr2*, Tr*) as a common instruction value for the output of the first motor and the output of the second motor. The first instruction unit is configured to calculate the first instruction output using the common instruction, and the second instruction unit is configured to calculate the second instruction output using the common instruction.

Technical Idea 5

The drive device according to technical idea 4, further comprises: a first path (33A) communicably connecting the first instruction unit and the common instruction unit; a second path (33B) communicably connecting the second instruction unit and the common instruction unit; and a direct path (55) communicably connecting the first instruction unit and the second instruction unit, without passing through the common instruction unit.

Technical Idea 6

The drive device according to any one of technical ideas 1 to 5, further comprises: a first information acquisition unit (82, 84) configured to acquire first motor information (Im1, Tr1) indicating a state of the first motor; and a second information acquisition unit (93, 94) configured to acquire second motor information (Im2, Tr2) indicating a state of the second motor. The motor controller is configured to control the first motor and the second motor using the first motor information and the second motor information, respectively.

Technical Idea 7

The drive device is according to technical idea 6. The motor controller is configured to control each of the first motor and the second motor, such that the first motor information and the second motor information become same as each other.

Technical Idea 8

The drive device according to any one of technical ideas 1 to 7, further comprises: a first execution unit (S202) configured to cause the motor controller to execute control of the first motor and the second motor, such that the output of the first motor and the output of the second motor become same as each other; a second execution unit (S203) configured to cause the motor controller to execute control of the first motor and the second motor, such that the output of the first motor and the output of the second motor cause an output difference therebetween; and an execution determination unit (S201) configured to determine which of the first execution unit or the second execution unit is to execute control of the first motor and the second motor.

Technical Idea 9

The drive device is according to technical idea 8. The second execution unit is configured to cause the motor controller to execute control of the first motor and the second motor to adjust the output difference according to a state of the first motor and a state of the second motor.

Technical Idea 10

The drive device is according to any one of technical ideas 1 to 9. The moving body is a flight vehicle (10) configured to fly by rotation of the rotor.

Technical Idea 11

The drive device according to any one of technical ideas 1 to 10, further comprises: a common rotor (173) included in both the first motor and the second motor and configured to rotate when at least one of a first coil (172A) of the first motor **and** a second coil (172B) of the second motor is energized. The motor controller is configured to control each of the first motor and the second motor, such that a first coil current (Im1) flowing through the first coil and a second coil current (Im2) flowing through the second coil become same as each other.

Technical Idea 12

The drive device is according to any one of technical ideas 1 to 11. The motor controller includes at least one of: a big stop unit (S303, S312) configured to, when rotation of the rotor is abnormal, and a motor current difference (Ic, Ic1, Ic2), which is between a first motor current (Im1) flowing through the first motor and a second motor current (Im2) flowing through the second motor, is abnormal, continue energization of a smaller one of the first motor current and the second motor current, and stop energization of a greater one of the first motor current and the second motor current; and a small stop unit (S306, S315) configured to, when rotation of the rotor is abnormal, and the motor current difference is abnormal, continue energization of the greater one of the first motor current and the second motor current, and stop energization of the smaller one of the first motor current and the second motor current.

Technical Idea 13

The drive device is according to technical idea 12. The big stop unit is configured to, when rotation of the rotor is abnormal, continue energization of the smaller one of the first motor current and the second motor current, and stop the energization of the greater one of the first motor current and the second motor current, before the small stop unit continues the energization and stops the energization.

Technical idea 14

The drive device is according to technical idea 12 or 13. Even when the big stop unit continues the energization and stops the energization, the small stop unit is configured to continue the energization of the greater one of the first motor current and the second motor current and stop the energization of the smaller one of the first motor current and the second motor current, when abnormality of rotation of the rotor is not resolved.

Technical idea 15

The drive device is according to any one of technical ideas 12 to 14. The motor controller includes a double stop unit (S309, S318) configured to stop energization of both the first motor current and the second motor current, when abnormality of rotation of the rotor is not resolved, even after the big stop unit continues the energization and stops the energization, and the small stop unit continues the energization and stops the energization.

Technical idea 16

A drive control device (40, 81, 91) is configured to control a drive device (50). The drive device is to be provided to a moving body (10) that is configured to move with rotation of a rotor (20). The drive device is configured to be driven to rotate the rotor. The drive device (50) includes a first motor (61, 171A) and a second motor (71, 171B), which are configured to be driven by energization, and an output shaft portion (51) that connects the rotor to the first motor and the second motor and is configured to rotate the rotor according to an output of the first motor and an output of the second motor. The drive control device comprises: a first controller (81) configured to control the first motor, such that the output of the first motor and the output of the second motor become same as each other; and a second controller (91) configured to control the second motor, such that the output of the second motor and the output of the first motor become same as each other.

Technical idea 17

A drive control program is for controlling a drive device (50). The drive device is to be provided to a moving body (10) that is configured to move with rotation of a rotor (20). The drive device is configured to be driven to rotate the rotor. The drive device (50) includes a first motor (61, 171A) and a second motor (71, 171B), which are configured to be driven by energization, and an output shaft portion (51) that connects the rotor to the first motor and the second motor and is configured to rotate the rotor according to an output of the first motor and an output of the second motor. The drive control program is configured to cause at least one processor (40a, 81a, 91a) to function as: a first controller (81) configured to control the first motor, such that the output of the first motor and the output of the second motor become same as each other; and a second controller (91) configured to control the second motor, such that the output of the first motor and the output of the second motor become same as each other.

Technical Idea 18

A drive control method is for controlling a drive device (50). The drive device is to be provided to a moving body (10) that is configured to move with rotation of a rotor (20). The drive device is configured to be driven to rotate the rotor. The drive device (50) includes a first motor (61, 171A) and a second motor (71, 171B), which are configured to be driven by energization, and an output shaft portion (51) that connects the rotor to the first motor and the second motor and is configured to rotate the rotor according to an output of the first motor and an output of the second motor. The drive control method comprises steps of processing to be executed by at least one processor (40a, 81a, 91a) to serve as: a first controller (81) configured to control the first motor, such that the output of the first motor and the output of the second motor become same as each other; and a second controller (91) configured to control the second motor, such that the output of the first motor and the output of the second motor become same as each other.

**Claims**

1. A drive device (50) to be provided to a moving body (10) that is configured to move with rotation of a rotor (20), the drive device configured to be driven to rotate the rotor, the drive device comprising:

   a first motor (61, 171A) and a second motor (71, 171B) configured to be driven by energization;
   an output shaft portion (51) connecting the rotor to the first motor and the second motor, and configured to rotate the rotor according to an output of the first motor and an output of the second motor; and
   a motor controller (81, 91, 190) configured to control each of the first motor and the second motor, such that the output of the first motor and the output of the second motor become same as each other.

2. The drive device according to claim 1, further comprising:

   a first instruction unit (82) configured to calculate a first instruction output (Tr1*) as an instruction value for an output of the first motor; and
   a second instruction unit (92) configured to calculate a second instruction output (Tr2*) as an instruction value for an output of the second motor, wherein
   the motor controller is configured to control the first motor and the second motor using the first instruction output and the second instruction output, respectively.

3. The drive device according to claim 2, further comprising:

   an instruction averaging unit (83a, 93a, 141, 151) configured to calculate, as an averaged instruction (Tr1C, Tr2C, C1a, C2a), an average of the first instruction output and the second instruction output, wherein
   the motor controller is configured to control each of the first motor and the second motor using the instruction averaging unit.

4. The drive device according to claim 2 or 3, further comprising:

   a common instruction unit (40) configured to calculate a common instruction (Sr1*, Sr2*, Tr*) as a common instruction value for the output of the first motor and the output of the second motor, wherein
   the first instruction unit is configured to calculate the first instruction output using the common instruction, and
   the second instruction unit is configured to calculate the second instruction output using the common instruction.

5. The drive device according to claim 4, further comprising:

   a first path (33A) communicably connecting the first instruction unit and the common instruction unit;
   a second path (33B) communicably connecting the second instruction unit and the common instruction unit; and
   a direct path (55) communicably connecting the first instruction unit and the second instruction unit, without passing through the common instruction unit.

6. The drive device according to any one of claims 1 to 3, further comprising:

   a first information acquisition unit (82, 84) configured to acquire first motor information (Im1, Tr1) indicating a state of the first motor; and
   a second information acquisition unit (93, 94) configured to acquire second motor information (Im2, Tr2) indicating a state of the second motor, wherein
   the motor controller is configured to control the first motor and the second motor using the first motor information and the second motor information, respectively.

7. The drive device according to claim 6, wherein
   the motor controller is configured to control each of the first motor and the second motor, such that the first motor information and the second motor information become same as each other.

8. The drive device according to any one of claims 1 to 3, further comprising:

   a first execution unit (S202) configured to cause the motor controller to execute control of the first motor and the second motor, such that the output of the first motor and the output of the second motor become same as each other;
   a second execution unit (S203) configured to cause the motor controller to execute control of the first motor and the second motor, such that the output of the first motor and the output of the second motor cause an output difference therebetween; and
   an execution determination unit (S201) configured to determine which of the first execution unit or the second execution unit is to execute control of the first motor and the second motor.

9. The drive device according to claim 8, wherein
   the second execution unit is configured to cause the motor controller to execute control of the first motor and the second motor to adjust the output difference according to a state of the first motor and a state of the second motor.

10. The drive device according to any one of claims 1 to 3, wherein
    the moving body is a flight vehicle (10) configured to fly by rotation of the rotor.

11. The drive device according to any one of claims 1 to 3, further comprising:

    a common rotor (173) included in both the first motor and the second motor and configured to rotate when at least one of a first coil (172A) of the first motor and a second coil (172B) of the second motor is energized, wherein
    the motor controller is configured to control each of the first motor and the second motor, such that a first coil current (Im1) flowing through the first coil and a second coil current (Im2) flowing through the second coil become same as each other.

12. The drive device according to any one of claims 1 to 3, wherein
    the motor controller includes at least one of:

    a big stop unit (S303, S312) configured to, when rotation of the rotor is abnormal, and a motor current difference (Ic, Ic1, Ic2), which is between a first motor current (Im1) flowing through the first motor and a second motor current (Im2) flowing through the second motor, is abnormal,

       continue energization of a smaller one of the first motor current and the second motor current, and
       stop energization of a greater one of the first motor current and the second motor current; and

    a small stop unit (S306, S315) configured to, when rotation of the rotor is abnormal, and the motor current difference is abnormal,

continue energization of the greater one of the first motor current and the second motor current, and stop energization of the smaller one of the first motor current and the second motor current.

13. The drive device according to claim 12, wherein,
the big stop unit is configured to, when rotation of the rotor is abnormal, continue energization of the smaller one of the first motor current and the second motor current, and stop the energization of the greater one of the first motor current and the second motor current, before the small stop unit continues the energization and stops the energization.

14. The drive device according to claim 12, wherein
even when the big stop unit continues the energization and stops the energization, the small stop unit is configured to continue the energization of the greater one of the first motor current and the second motor current and stop the energization of the smaller one of the first motor current and the second motor current, when abnormality of rotation of the rotor is not resolved.

15. The drive device according to claim 12, wherein
the motor controller includes a double stop unit (S309, S318) configured to stop energization of both the first motor current and the second motor current, when abnormality of rotation of the rotor is not resolved, even after the big stop unit continues the energization and stops the energization, and the small stop unit continues the energization and stops the energization.

16. A drive control device (40, 81, 91) configured to control a drive device (50), the drive device to be provided to a moving body (10) that is configured to move with rotation of a rotor (20), the drive device configured to be driven to rotate the rotor, the drive device (50) including a first motor (61, 171A) and a second motor (71, 171B), which are configured to be driven by energization, and an output shaft portion (51) that connects the rotor to the first motor and the second motor and is configured to rotate the rotor according to an output of the first motor and an output of the second motor, the drive control device comprising:

a first controller (81) configured to control the first motor, such that the output of the first motor and the output of the second motor become same as each other; and
a second controller (91) configured to control the second motor, such that the output of the second motor and the output of the first motor become same as each other.

# FIG. 1

# FIG. 2

10

20, 20A          20, 20B

30

PP1          PP2

51          51

60, 61          60, 61

62          Coil1 MOT1          MOT1 Coil1          62

70, 71          70, 71

72          Coil2 MOT2          MOT2 Coil2          72

50, 50A          50, 50B

80, 85          INV1          INV2          INV1          INV2          90, 95

90, 95          80, 85

32, 32A          32, 32A

32, 32B          32, 32B

BAT1          BAT2

31, 31A          31, 31B

# FIG. 3

FIG. 4

# FIG. 5

FIG. 6

# FIG. 7

EP 4 546 636 A1

# FIG. 8

EP 4 546 636 A1

**FIG. 9**

EP 4 546 636 A1

# FIG. 10

EP 4 546 636 A1

FIG. 11

# FIG. 12

10, 30

# FIG. 13

EP 4 546 636 A1

FIG. 14

# FIG. 15

50

81, 100

141          145

DS1

C1

C1a=(C1+C2)/2     C1a     SS1

C2

DS2

C1

C2     C2a=(C1+C2)/2     C2a     SS2

C2

151          155

91, 110

# FIG. 16

50

81, 100

142          145

DS1

C1 → | C1b=C1 × S2/S1 | → C1b → | SS1 | → S1

C2 → | C2b=C2 × S1/S2 | → C2b → | SS2 | → S2

DS2

152          155

91, 110

# FIG. 17

**FIG. 18**

EP 4 546 636 A1

FIG. 19

EP 4 546 636 A1

# FIG. 20

# FIG. 21

FIG. 22

FIG. 23

EP 4 546 636 A1

**INTERNATIONAL SEARCH REPORT**

| International application No. |
| --- |
| **PCT/JP2023/019113** |

**A. CLASSIFICATION OF SUBJECT MATTER**

*H02P 5/46*(2006.01)i; *H02P 29/028*(2016.01)i; *B64C 29/00*(2006.01)i
FI: H02P5/46 G; H02P29/028; B64C29/00 A

According to International Patent Classification (IPC) or to both national classification and IPC

**B. FIELDS SEARCHED**

Minimum documentation searched (classification system followed by classification symbols)

H02P5/46; H02P29/028; B64C29/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 08-084492 A (MITSUBISHI HEAVY IND LTD) 26 March 1996 (1996-03-26) paragraphs [0001]-[0027], fig. 1-5 | 16 |
| Y | | 1-2, 4, 6-7, 10-12 |
| A | | 3, 5, 8-9, 13-15 |
| Y | JP 2022-056173 A (DENSO CORP) 08 April 2022 (2022-04-08) paragraphs [0001]-[0184], fig. 1-16 | 1-2, 4, 6-7, 10-12 |
| A | | 3, 5, 8-9, 13-16 |
| Y | JP 2020-162350 A (DAIKIN IND LTD) 01 October 2020 (2020-10-01) paragraphs [0001]-[0139], fig. 1-12 | 4 |
| Y | JP 2010-213385 A (KANZAKI KOKYUKOKI MFG CO LTD) 24 September 2010 (2010-09-24) paragraphs [0001]-[0121], fig. 1-20 | 11 |
| Y | JP 2001-238479 A (TAIDA ELECTRONIC IND CO LTD) 31 August 2001 (2001-08-31) paragraphs [0001]-[0032], fig. 1-4 | 11 |

✓ Further documents are listed in the continuation of Box C.    ✓ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **10 July 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 546 636 A1**

**INTERNATIONAL SEARCH REPORT**

International application No.

**PCT/JP2023/019113**

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/145993 A1 (MITSUBISHI ELECTRIC CORP) 01 August 2019 (2019-08-01) paragraphs [0001]-[0136], fig. 1-14 | 12 |

Form PCT/ISA/210 (second sheet) (January 2015)

64

## INTERNATIONAL SEARCH REPORT
### Information on patent family members

International application No.

**PCT/JP2023/019113**

| Patent document cited in search report | | | Publication date (day/month/year) | Patent family member(s) | | | Publication date (day/month/year) |
|---|---|---|---|---|---|---|---|
| JP | 08-084492 | A | 26 March 1996 | (Family: none) | | | |
| JP | 2022-056173 | A | 08 April 2022 | (Family: none) | | | |
| JP | 2020-162350 | A | 01 October 2020 | US<br>paragraphs [0001]-[0132], fig. 1-12<br>EP<br>CN | 2022/0014124<br><br>3930176<br>113632369 | A1<br><br>A1<br>A | |
| JP | 2010-213385 | A | 24 September 2010 | US<br>paragraphs [0001]-[0269], fig. 1-39<br>EP | 2010/0206649<br><br>2218604 | A1<br><br>A1 | |
| JP | 2001-238479 | A | 31 August 2001 | US<br>paragraphs [0001]-[0029], fig. 1-4<br>DE | 2001/0015629<br><br>10052726 | A1<br><br>A1 | |
| WO | 2019/145993 | A1 | 01 August 2019 | (Family: none) | | | |

Form PCT/ISA/210 (patent family annex) (January 2015)

REFERENCES CITED IN THE DESCRIPTION

**Patent documents cited in the description**

- JP 2022102987 A
- JP 2023081860 A
- JP 6233671 B